# EUROPÄISCHE PATENTSCHRIFT

(11) **EP 2 809 964 B1**
(45) Veröffentlichungstag und Bekanntmachung des Hinweises auf die Patenterteilung: **04.11.2015**
(21) Anmeldenummer: 13700140.0
(22) Anmeldetag: 08.01.2013
(51) Int. Cl.: F16D 13/75

(54) **KUPPLUNGSANORDNUNG UND VERFAHREN ZUM BEREITSTELLEN EINER KUPPLUNGSANORDNUNG**
CLUTCH ARRANGEMENT AND METHOD FOR PROVIDING A CLUTCH ARRANGEMENT
ENSEMBLE EMBRAYAGE ET PROCÉDÉ DE FABRICATION DUDIT ENSEMBLE EMBRAYAGE

(30) Priorität: 02.02.2012 DE 102012201508
(43) Veröffentlichungstag der Anmeldung: 10.12.2014
(73) Patentinhaber: ZF Friedrichshafen AG, 88046 Friedrichshafen (DE)
(72) Erfinder: SCHRÖDER, Arthur, 97456 Dittelbrunn (DE)
(86) Internationale Anmeldenummer: PCT/EP2013/050202
(87) Internationale Veröffentlichungsnummer: WO 2013/113530

(56) Entgegenhaltungen:
- WO-A1-01/88400
- DE-A1- 4 322 506
- DE-A1-102006 058 311
- US-A- 6 024 199
- US-B1- 6 264 019

## Beschreibung

Ausführungsbeispiele beziehen sich auf eine Kupplungsanordnung, wie sie beispielsweise bei einem Antriebsstrang eines Fahrzeugs, beispielsweise eines Kraftfahrzeugs, zum Einsatz kommen kann, sowie auf ein Verfahren zum Bereitstellen einer solchen Kupplungsanordnung.

Kupplungen werden in einer Vielzahl unterschiedlicher Ausprägungen im Fahrzeugbereich, insbesondere im Kraftfahrzeugbereich eingesetzt. Häufig werden sie hier im Rahmen eines Antriebsstrangs eines Fahrzeugs zur Drehmomentübertragung herangezogen, wobei sie beispielsweise zwischen einem Antriebsaggregat, also beispielsweise einem Motor, und einem nachgeschalteten Getriebe zum Einsatz kommen. Hierdurch kann eine Trennung des Antriebsstrangs ermöglicht werden, sodass beispielsweise auch im Falle eines Stillstands des Fahrzeugs der Motor weiterlaufen kann. Die Kupplung trennt in diesem Fall also die sich drehende Motorausgangswelle von einer stillstehenden Getriebeeingangswelle.

Kupplungen können auch bei anderen Konstellationen im Antriebsstrang eines Fahrzeugs eingesetzt werden. So können sie beispielsweise im Falle von Hybridantrieben gegebenenfalls auch zwischen zwei unterschiedlichen Antriebsaggregaten, oder auch zur wechselseitigen Trennung und Kopplung verschiedener Antriebsaggregate im Zusammenhang mit einer Getriebeeingangswelle herangezogen werden. Kupplungen können hierbei im Zusammenhang mit unterschiedlichen Antriebsaggregattechnologien, also beispielsweise Verbrennungsmotoren und Elektromotoren, sowie im Zusammenhang mit verschiedenen Getriebetechniken verwendet werden. Sie können so beispielsweise im Zusammenhang mit synchronisierten, aber auch unsynchronisierten Getrieben zum Einsatz kommen. Auch kann es sich bei den betreffenden Getrieben um ein manuell geschaltetes Getriebe oder auch um ein Automatikgetriebe handeln, bei dem gegebenenfalls über elektrische, elektronische oder andere Steuerimpulse auch manuelle Gangwechsel einleitbar sind.

Kupplungen basieren hierbei häufig auf der Schaffung eines reibschlüssigen Kontaktes zwischen entsprechenden Bauteilen, die mit einem Antriebsbauteil und einem Abtriebsbauteil der betreffenden Kupplung gekoppelt sind. Gerade im Falle stark unterschiedlicher Drehzahlen, wie sie beispielsweise beim Anfahren auftreten können, wird hierbei im Bereich der betreffenden Reibflächen Energie in Wärme umgesetzt, die zu einer unerwünschten Aufheizung der betreffenden Reibflächen bzw. der entsprechenden Bauteile führen kann. Aus diesem Grund werden beispielsweise Kupplungen eingesetzt, bei denen im Inneren eines Gehäuses Öl zirkuliert, welches die an den Reibflächen generierte Wärme von diesen abführt.

So bezieht sich die DE 10 2009 016 414 A1 auf eine Kupplungsanordnung, bei der in einem Gehäuse der Kupplungsanordnung eine entsprechende Ölströmung aufgebaut wird. Auch die DE 101 25 628 A1 bezieht sich auf eine Kupplungsanordnung, bei der wenigstens ein Reiborgan zur Erzeugung einer reibschlüssigen Verbindung derart ausgebildet ist, um von dem Öl umströmt zu werden.

Die DE 10 2006 058 311 A1 bezieht sich auf eine Kupplungsdeckelanordnung, um eine axiale Dimension derselben zu reduzieren und die einen Verschleißkompensationsmechanismus und einen Niedrigausrücklastmechanismus umfasst. Die DE 43 22 506 A1 bezieht sich auf eine Kupplungsabdeckungsausbildung mit einer Kupplungsabdeckung, einer Andruckplatte, einem Stutzring, einer Membranfeder und einem Mechanismus zur Beibehaltung der Membranfedereinstellung, wobei dieser Mechanismus einen Einstellmechanismus enthält, einem Paar Keilmechanismen, deren schrägverlaufende Flächen sich in Umfangsrichtung erstrecken und miteinander in Kontakt bleiben. Die US 6,024,199 und die US 6,264,019 B1 beziehen sich beide auf eine Kupplungsabdeckungsanordnung. Die WO 01/88400 A1 bezieht sich auf eine Reibkupplung mit einer gesteuerten Spielkompensation für ein motorisiertes Fahrzeug.

Darüber hinaus werden auch Trockenkupplungen verwendet, bei denen in einem Inneren des Gehäuses einer solchen Kupplung gerade kein Öl zirkuliert, diese also trocken laufen.

Unabhängig von der genauen Implementierung einer solchen Kupplung steht unter Berücksichtigung des späteren Einsatzortes und der späteren Einsatzbedingungen häufig nur ein geringer Bauraum zur Verfügung. Dieser kann sich zusammen mit anderen Randbedingungen, beispielsweise einer Positionierung von Anschweißschrauben oder von Anbindungsblechen zur Befestigung der Kupplung mit einer entsprechenden Antriebskomponente, aufgrund der konstruktiven Randbedingungen des Fahrzeugs oder der betreffenden Maschine ergeben, bei der eine entsprechende Kupplung zum Einsatz kommen soll. So werden häufig die Anschweißschrauben im Zusammenhang mit einer Kupplungsanordnung bei einem Antriebsstrang eines Fahrzeugs motorseitig mit einer sogenannten Flexplatte verschraubt.

Aus den Randbedingungen, unter denen die Kupplung später eingesetzt werden soll, ergeben sich so nicht nur Anforderungen hinsichtlich des Bauraums, sondern auch hinsichtlich peripherer Strukturen, beispielsweise hinsichtlich der Platzierung der zuvor genannten Anschweißschrauben. Auch diese kann gegebenenfalls im Zusammenhang mit weiteren technischen Randbedingungen, die einerseits von der Kupplung, jedoch andererseits auch von dem späteren Einsatzort abhängen können, zu einem zusätzlichen Platzbedarf führen, der - beispielsweise bei einem maximalen zur Verfügung stehenden Bauraum - in Konkurrenz zu Platz von Komponenten der Kupplungsanordnung treten kann.

Es besteht daher ein Bedarf daran, einen zur Verfügung stehenden Bauraum für eine Kupplungsanordnung effizienter zu nutzen.

Diesem Bedarf trägt eine Kupplungsanordnung gemäß Patentanspruch 1 und ein Verfahren zum Bereitstellen einer Kupplungsanordnung gemäß Patentanspruch 7 Rechnung.

Eine Kupplungsanordnung, beispielsweise für einen Antriebsstrang eines Fahrzeugs, gemäß einem Ausführungsbeispiel umfasst eine erste Reibfläche, eine entlang einer Drehachse bezüglich der ersten Reibfläche linear relativ beweglich angeordnete zweite Reibfläche, die mit einem Abtriebsbauteil der Kupplungsanordnung im Wesentlichen drehfest gekoppelt ist, wobei die erste und die zweite Reibfläche ausgebildet und angeordnet sind, um miteinander in einen Reibeingriff bringbar zu sein, um ein Drehmoment von der ersten Reibfläche auf die zweite Reibfläche übertragbar zu machen. Die Kupplungsanordnung umfasst ferner ein Anpresselement, das ausgebildet ist, um auf eine Betätigung hin den Reibeingriff zu schaffen oder zu trennen, und eine in einem Inneren eines Gehäuses der Kupplungsanordnung angeordnete Spieleinstellungsstruktur, die derart ausgebildet und angeordnet ist, um ein Spiel entlang der Drehachse zwischen den Reibflächen in einem vorbestimmten Zustand festzulegen. Bei dem vorbestimmten Zustand kann es sich beispielsweise um einen Neuzustand, Wartungszustand, verschleißlosen bzw. verschleißarmen Zustand oder einen anderen definierten Zustand der Kupplungsanordnung handeln.

Einer Kupplungsanordnung gemäß einem solchen Ausführungsbeispiel liegt so die Erkenntnis zugrunde, dass der zur Verfügung stehende Bauraum dadurch effizienter genutzt werden kann, indem die Spieleinstellungsstruktur in das Innere des Gehäuses der Kupplungsanordnung verlegt wird. Hierdurch kann diese hinsichtlich einer Ausdehnung entlang der Drehachse kleiner ausgeführt werden, sodass hierdurch ein Mehr an axialem Bauraum, also an Bauraum entlang der Drehachse, für andere Komponenten der Kupplungsanordnung bei vorgegebenem Bauraum zur Verfügung steht.

Bei einer solchen Kupplungsanordnung kann die Spieleinstellungsstruktur eine erste Anlagefläche und eine gegenüber der ersten Anlagefläche bewegliche zweite Anlagefläche aufweisen, die jeweils vollständig oder abschnittsweise entlang einer geschlossenen Linie oder vollständig oder abschnittsweise entlang einer senkrecht zu der Drehachse verlaufenden Geraden ein keilförmiges Profil aufweisen, sodass durch ein Verdrehen oder ein Verschieben der ersten Anlagefläche relativ zu der zweiten Anlagefläche eine Dicke der Spieleinstellungsstruktur entlang der Drehachse veränderbar ist. Hierdurch kann es möglich sein, eine Spieleinstellung dadurch durchzuführen, dass die Komponenten, die die beiden Anlageflächen bilden, gegeneinander bewegt, also insbesondere verdreht oder verschoben werden. Die Spieleinstellungsstruktur kann so das Keilprinzip verwenden.

Bei einer solchen Kupplungsanordnung kann die geschlossene Linie beispielsweise kreisförmig sein und ergänzend oder alternativ stets senkrecht zu der Drehachse verlaufen. Im Falle einer kreisförmigen geschlossenen Linie verläuft diese somit stets tangential, während im Falle einer abweichenden geschlossenen Linie diese auch tangentiale und/oder radiale Komponenten aufweisen kann.

Bei einer solchen Kupplungsanordnung gemäß einem Ausführungsbeispiel kann die erste Anlagefläche der Spieleinstellungsstruktur an einem ersten Bauteil gebildet sein. Ergänzend oder alternativ kann die zweite Anlagefläche der Spieleinstellungsstruktur an einem zweiten Bauteil gebildet sein. So kann es möglich sein, bei einem solchen Ausführungsbeispiel die Spieleinstellungsstruktur unmittelbar an einem oder mehreren Bauteilen der Kupplungsanordnung zu implementieren und so gegebenenfalls ein Bauteil einzusparen.

Bei einer Kupplungsanordnung gemäß einem Ausführungsbeispiel kann die Spieleinstellungsstruktur eine Distanzscheibe umfassen, die zwischen einem ersten Bauteil der Kupplungsanordnung und einem zweiten Bauteil der Kupplungsanordnung angeordnet ist. Je nach konkreter Implementierung der Spieleinstellungsstruktur kann gegebenenfalls durch den Einsatz einer solchen Distanzscheibe eine Fertigung der betreffenden Bauteile, also des ersten Bauteils und/oder des zweiten Bauteils, vereinfacht werden, da gegebenenfalls aufwendige Formen, beispielsweise die zuvor genannten Anlageflächen, vollständig oder teilweise eingespart werden können. Bei einem solchen Ausführungsbeispiel kann die Distanzscheibe beispielsweise unmittelbar zwischen dem ersten Bauteil und dem zweiten Bauteil angeordnet sein, also an diese unmittelbar angrenzen bzw. mit diesen in Kontakt stehen.

Bei einer solchen Kupplungsanordnung gemäß einem Ausführungsbeispiel kann die Distanzscheibe eine erste Hauptoberfläche und eine der ersten Hauptoberfläche gegenüberliegende zweite Hauptoberfläche aufweisen, die parallel zueinander ausgerichtet sind. Hierdurch kann es möglich sein, gegebenenfalls geometrisch einfache Distanzscheiben, also beispielsweise ringförmige Bauteile unterschiedlicher Dicke, zur Einstellung des Spiels zu verwenden. Die Hauptoberflächen können hierbei beispielsweise senkrecht zu der Drehachse orientiert sein.

Bei einer Kupplungsanordnung gemäß einem Ausführungsbeispiel, bei der die Spieleinstellungsstruktur eine Distanzscheibe umfasst, und bei der die Spieleinstellungsstruktur eine erste Anlagefläche und eine gegenüber der ersten Anlagefläche bewegliche zweite Anlagefläche aufweist, die jeweils vollständig oder abschnittsweise entlang einer geschlossenen Linie oder vollständig oder abschnittsweise entlang einer senkrecht zu der Drehachse verlaufenden Geraden ein keilförmiges Profil aufweisen, sodass durch ein Verdrehen oder ein Verschieben der ersten Anlagefläche relativ zu der zweiten Anlagefläche eine Dicke der Spieleinstellungsstruktur entlang der Drehachse veränderbar ist, kann die Distanzscheibe die erste Anlagefläche und/oder die zweite Anlagefläche umfassen. Es kann also möglich sein, bei einem Ausführungsbeispiel einer Kupplungsanordnung das keilförmige Profil der Anlageflächen vollständig oder teilweise im Rahmen der Distanzscheibe zu implementieren. Dies kann gegebenenfalls eine Herstellung des betreffenden ersten und/oder zweiten Bauteils, zwischen denen die Distanzscheibe angeordnet ist, hinsichtlich seiner Struktur und damit seiner Herstellung vereinfachen. Gleichzeitig kann jedoch die Flexibilität einer Spieleinstellung durch eine Relativbewegung, nämlich durch ein Verschieben oder ein Verdrehen der Anlageflächen zueinander, ermöglicht werden.

Bei einer solchen Kupplungsanordnung gemäß einem Ausführungsbeispiel kann die Distanzscheibe einstückig oder auch mehrstückig ausgebildet sein, wobei die Distanzscheibe im Falle einer mehrstückigen Ausbildung ein erstes Distanzscheibenbauteil und ein zweites Distanzscheibenbauteil aufweist, wobei das erste Distanzscheibenbauteil die erste Anlagefläche und das zweite Distanzscheibenbauteil die zweite Anlagefläche umfasst. Hierdurch kann es möglich sein, eine besonders einfache Herstellung einer solchen Kupplungsanordnung zu ermöglichen, da gegebenenfalls teilweise oder vollständig das Ausbilden der zuvor beschriebenen Anlageflächen an dem ersten und/oder dem zweiten Bauteil eingespart werden kann, da diese auf die Distanzscheibe oder im Falle einer mehrstückigen Ausbildung auf ihre Distanzscheibenbauteile verlagert werden können. Diese sind typischerweise deutlich kleiner und daher leichter handhabbar als die betreffenden ersten und/oder zweiten Bauteile.

Bei einer Kupplungsanordnung gemäß einem Ausführungsbeispiel, bei der die Spieleinstellungsstruktur eine Distanzscheibe umfasst, kann die Distanzscheibe oder wenigstens ein Distanzscheibenbauteil des ersten und des zweiten Distanzscheibenbauteils mit dem ersten Bauteil und/oder dem zweiten Bauteil formschlüssig verbunden sein, um beispielsweise gegen ein Verdrehen oder ein Verschieben gesichert zu sein. Hierdurch kann es gegebenenfalls möglich sein, eine einfachere und gegebenenfalls zuverlässigere Spieleinstellung dadurch zu reduzieren, dass aufgrund der formschlüssigen Verbindung mit dem ersten und/oder dem zweiten Bauteil eine die Möglichkeiten der Bewegung der Distanzscheibe bzw. ihrer Bauteile durch die formschlüssige Verbindung reduziert wird, also unbeabsichtigte Relativbewegungen derselben zu dem ersten bzw. zweiten Bauteil erschwert oder unterbunden werden können. Hierdurch kann sich eine leichtere Montage bzw. Spieleinstellung ergeben.

Bei einer Kupplungsanordnung gemäß einem Ausführungsbeispiel kann das erste Bauteil die erste Reibfläche umfassen, wobei es sich beispielsweise bei dem ersten Bauteil um eine Gehäuseschale des Gehäuses der Kupplungsanordnung handeln kann. Gerade eine solche Implementierung kann eine besonders platzsparende Spieleinstellung ermöglichen, sodass der zur Verfügung stehende Bauraum effizienter für andere Komponenten mitgenutzt werden kann. Ergänzend oder alternativ kann auch eine Herstellung eines solchen ersten Bauteils, also beispielsweise einer Gehäuseschale dadurch vereinfacht werden, indem die erste Reibfläche zeitnah mit den notwendigen Strukturen zur Aufnahme bzw. zum Bilden der Spieleinstellungsstruktur hergestellt werden kann. So kann beispielsweise eine der Hauptoberfläche zugewandte Kontaktfläche des ersten Bauteils bzw. eine entsprechende Anlagefläche gegebenenfalls ohne einen Werkzeugwechsel bzw. ohne ein Umspannen des betreffenden Bauteils implementiert werden. Anders ausgedrückt ermöglicht ein solches Ausführungsbeispiel gegebenenfalls ein direktes Einstellen des Spiels zwischen den Reibflächen Kupplungsanordnung an dem Bauteil, welches die erste Reibfläche umfasst. Hierdurch kann gegebenenfalls eine Toleranzkette verkürzt werden, was gegebenenfalls zu einer genaueren Einstellung des Spiels ermöglichen kann.

Bei einer Kupplungsanordnung gemäß einem Ausführungsbeispiel kann das erste Bauteil auch das Anpresselement sein. Es besteht so auch die Möglichkeit, das Spiel unmittelbar an dem Anpresselement einzustellen, indem beispielsweise seine Beweglichkeit entlang der Drehachse eingeschränkt bzw. definiert wird.

Bei einer Kupplungsanordnung gemäß einem Ausführungsbeispiel kann es sich bei dem zweiten Bauteil um eine Nabe oder ein anderes mit dem Gehäuse drehfest verbundenen Bauteil handeln.

Bei einer Kupplungsanordnung gemäß einem Ausführungsbeispiel kann das Gehäuse ausgebildet sein, um ein flüssiges Medium aufzunehmen oder mit dem flüssigen Medium befüllt zu werden. Die erste und die zweite Reibfläche können in einem solchen Fall ausgebildet sein, um in einem Betrieb mit dem flüssigen Medium in Kontakt zu stehen. Es kann sich bei der Kupplungsanordnung gemäß einem Ausführungsbeispiel so beispielsweise um eine Nasskupplung handeln, bei der das flüssige Medium beispielsweise zum Abtransport von Reibungswärme herangezogen werden kann, die an den Reibflächen bei einem Schlupf derselben zueinander entsteht.

Bei dem flüssigen Medium kann es sich grundsätzlich um jede Flüssigkeit handeln, die geeignet ist, eine in einem Schlupfzustand an den Reibflächen entstehende Wärmemenge abzuführen. So kann es sich beispielsweise bei dem flüssigen Medium um ein Öl handeln, welches über eine externe Fluidversorgung der Kupplungsanordnung bereitgestellt wird.

Bei einer solchen Kupplungsanordnung gemäß einem Ausführungsbeispiel kann das Gehäuse gegen ein unbeabsichtigtes Austreten des flüssigen Mediums durch das Gehäuse gesichert sein, also beispielsweise abgedichtet sein. Zu diesem Zweck kann das Gehäuse beispielsweise mit einem anderen Bauteil, beispielsweise dem zweiten Bauteil, also beispielsweise der Nabe der Kupplungsanordnung, verschweißt sein. Gerade bei einer solchen Kupplungsanordnung kann es ratsam sein, die Spieleinstellungsstruktur in das Innere bzw. den Innenraum des Gehäuses zu verlagern, um so den zur Verfügung stehenden Bauraum für die Kupplungsanordnung effizienter nutzen zu können. So kann im Unterschied zu einer Kupplung, bei der das Spiel durch eine externe Struktur einstellbar ist, das Gehäuse gegebenenfalls einfacher und damit gegebenenfalls platzsparender bzw. einfacher herstellbar sein, da keine Rücksicht auf die Sicherung gegen ein Austreten des flüssigen Mediums, also beispielsweise die Verschweißung, Rücksicht genommen werden muss.

Ein Verfahren zum Bereitstellen einer Kupplungsanordnung, beispielsweise für einen Antriebsstrang eines Fahrzeugs, umfasst ein Bereitstellen von wenigstens einem Teil von Komponenten der Kupplungsanordnung, wie sie zuvor beschrieben wurde. Es umfasst ferner ein Bestimmen einer Soll-Dicke der Spieleinstellungsstruktur oder des Spiels zwischen den Reibflächen, ein Verändern der bereitgestellten Spieleinstellungsstruktur derart, dass das Spiel zwischen den Reibflächen durch die Veränderung der Spieleinstellungsstruktur eine erste vorbestimmte Bedingung erfüllt, wenn das bestimmte Spiel die erste vorbestimmte Bedingung nicht erfüllt hat oder ein Bereitstellen der Spieleinstellungsstruktur derart, dass eine Ist-Dicke der bereitgestellten Spieleinstellungsstruktur und die bestimmte Soll-Dicke der Spieleinstellungsstruktur eine zweite vorbestimmte Bedingung erfüllen. Das Verfahren umfasst ferner ein Montieren der bereitgestellten Komponenten.

Die möglichen Komponenten, von denen wenigstens ein Teil im Rahmen eines Ausführungsbeispiels eines Verfahrens bereitgestellt wird, umfassen das Gehäuse 110, eine zweite Gehäuseschale 130, eine erste Reibfläche, eine zweite Reibfläche, ein Anpresselement und eine Spieleinstellungsstruktur, wobei die zweite Reibfläche mit einem Abtriebsbauteil der Kupplungsanordnung im Wesentlichen drehfest gekoppelt werden kann. Die erste und die zweite Reibfläche sind hierbei ferner ausgebildet, um miteinander in einen Reibeingriff bringbar zu sein, um ein Drehmoment von der ersten Reibfläche auf die zweite Reibfläche übertragbar zu machen. Die erste und die zweite Reibfläche sind hierbei derart ausgebildet, dass diese entlang der Drehachse der Kupplungsanordnung zueinander linear beweglich angeordnet werden können. Das Anpresselement ist hierbei ausgebildet, um auf eine Betätigung hin den Reibeingriff zu schaffen oder zu trennen. Die Spieleinstellungsstruktur ist hierbei derart ausgebildet, um ein Spiel entlang der Drehachse zwischen den Reibflächen in einem vorbestimmten Zustand festzulegen, wobei die Spieleinstellungsstruktur derart ausgebildet ist, dass diese in einem Inneren des Gehäuses der Kupplungsanordnung angeordnet werden kann. Bei dem Montieren der bereitgestellten Komponenten wird diese entsprechend in dem Inneren des Gehäuses montiert bzw. angeordnet.

Einem Ausführungsbeispiel eines solchen Verfahrens liegt so die Erkenntnis zugrunde, dass durch das beschriebene Verfahren eine Kupplungsanordnung bereitgestellt werden kann, bei der das Spiel zwischen den Reibflächen entlang der Drehachse einerseits einstellbar ist, bei der jedoch der zur Verfügung stehende Bauraum ebenso effizient genutzt werden kann. Dieses wird durch das Verändern oder das Bereitstellen der Spieleinstellungsstruktur in der genannten Art ermöglicht.

Das bestimmte Spiel kann die erste vorbestimmte Bedingung beispielsweise dann erfüllen, wenn das bestimmte Spiel in einem Wertebereich liegt, der durch einen kleinsten Wert und einen größten Wert gegeben ist, der ein tolerierbares Spiel, welches zur ordnungsgemäßen Funktion der Kupplungsanordnung notwendig oder ratsam ist, erfüllt ist. Die zweite vorbestimmte Bedingung kann beispielsweise dann erfüllt sein, wenn eine Differenz zwischen der Ist-Dicke der bereitgestellten Spieleinstellungsstruktur und der bestimmten Soll-Dicke der Spieleinstellungsstruktur betragsmäßig kleiner als ein oberer Grenzwert ist. Auch dieser obere Grenzwert kann so definiert sein, dass dieser ein ordnungsgemäßes Funktionieren der Kupplungsanordnung ermöglicht bzw. gewährleistet.

Bei einem Verfahren gemäß einem Ausführungsbeispiel kann das Verändern der Spieleinstellungsstruktur ein Verändern der zuvor bereitgestellten Spieleinstellungsstruktur durch ein Verdrehen oder ein Verschieben eines ersten Distanzscheibenbauteils zu einem zweiten Distanzscheibenbauteil umfassen, wobei die Spieleinstellungsstruktur die Distanzscheibe umfasst, die ihrerseits zwischen einem ersten Bauteil und einem zweiten Bauteil angeordnet ist und das erste und das zweite Distanzscheibenbauteil umfasst. Das Verändern der Spieleinstellungsstruktur kann auch durch ein Verdrehen oder ein Verschieben einer zuvor bereitgestellten Distanzscheibe relativ zu einem ersten und/oder zweiten Bauteil erfolgen, wobei die Spieleinstellungsstruktur die Distanzscheibe umfasst, die zwischen einem ersten Bauteil und einem zweiten Bauteil angeordnet ist. Das Verändern der Spieleinstellungsstruktur kann ebenso ein Verändern der zuvor bereitgestellten Spieleinstellungsstruktur durch ein Verdrehen oder ein Verschieben eines Bauteils zu einem zweiten Bauteil umfassen, die die Spieleinstellungsstruktur wenigstens teilweise bilden. Ebenso kann das Verändern der Spieleinstellungsstruktur auch ein Tauschen einer zuvor bereitgestellten Distanzscheibe mit einer Ist-Dicke gegen eine andere Distanzscheibe mit einer anderen Ist-Dicke umfassen.

An dieser Stelle sollte darauf hingewiesen werden, dass die Verfahrensschritte eines Ausführungsbeispiels eines Verfahrens zum Bereitstellen einer Kupplungsanordnung sowohl in der angegebenen Reihenfolge, wie auch in einer von dieser abweichenden Reihenfolge durchgeführt bzw. ausgeführt werden können, sofern sich nicht aus dem Zusammenhang oder aus dem expliziten Wortlaut derselben etwas anderes ergibt.

So kann bei einem Ausführungsbeispiel eines Verfahrens das Montieren der bereitgestellten Komponenten dem Bestimmen des Spiels vorangehen. In diesem Fall kann das Bestimmen des Spiels an einer wenigstens teilweise montierten Kupplungsanordnung erfolgen, die die erste Reibfläche, die zweite Reibfläche und das Anpresselement umfasst. Alternativ oder ergänzend kann bei einem Ausführungsbeispiel eines Verfahrens zum Bereitstellen einer Kupplungsanordnung das Bestimmen der Soll-Dicke der Spieleinstellungsstruktur dem Bereitstellen der Spieleinstellungsstruktur vorangehen. In einem solchen Fall kann das Montieren der bereitgestellten Komponenten dem Bereitstellen der Spieleinstellungsstruktur nachfolgen, sodass auch diese mit montiert wird. Es bestehen daher grundsätzlich verschiedene Möglichkeiten, eine Kupplungsanordnung gemäß einem Ausführungsbeispiel im Rahmen eines entsprechenden Verfahrens gemäß einem Ausführungsbeispiel bereitzustellen, die gegebenenfalls auch kombinierbar sind.

Eine Kupplungsanordnung, beispielsweise für einen Antriebsstrang eines Fahrzeugs, gemäß einem Ausführungsbeispiel umfasst eine erste Reibfläche, die an einer Innenfläche des Gehäuses angeordnet ist, eine zweite Reibfläche, die an einem scheibenförmigen Bauteil angeordnet ist, wobei die erste und die zweite Reibfläche ausgebildet und angeordnet sind, um miteinander in einen Reibeingriff bringbar zu sein, um ein Drehmoment von dem Gehäuse auf das scheibenförmige Bauteil übertragbar zu machen. Das scheibenförmige Bauteil und das Gehäuse sind hierbei zueinander um eine Drehachse drehbar und parallel zu der Drehachse zueinander relativ linear beweglich angeordnet. Eine solche Kupplungsanordnung umfasst ferner einen Träger, der mit dem scheibenförmigen Bauteil drehfest über eine an einem radialen Ende des scheibenförmigen Bauteils angeordnete Verzahnung verbunden ist, wobei das Gehäuse eine Ausnehmung auf Höhe der Verzahnung aufweist, sodass der Träger von der Innenfläche des Gehäuses beabstandet ist. Die Kupplungsanordnung umfasst ferner eine Befestigungsstruktur, beispielsweise eine Anschweißschraube oder ein Anbindungsblech, wobei die Befestigungsstruktur an einem ebenen Abschnitt an einer der Ausnehmung abgewandten Seite des Gehäuses gelegenen Außenfläche des Gehäuses auf Höhe der Ausnehmung angeordnet ist.

Einer solchen Kupplungsanordnung gemäß einem Ausführungsbeispiel liegt so die Erkenntnis zugrunde, dass eine effizientere Nutzung des zur Verfügung stehenden Bauraums dadurch ermöglicht werden kann, dass die Befestigungsstruktur an dem ebenen Abschnitt auch dann befestigt werden kann, wenn dieser auf Höhe einer Ausnehmung liegt, die zum Betrieb des Trägers notwendig ist. Die Verzahnung kann hierbei an einem inneren oder auch an einem äußeren radialen Ende des scheibenförmigen Bauteils angeordnet sein, mit deren Hilfe das scheibenförmige Bauteil und der Träger miteinander verbunden sind. Je nach konkreter Implementierung kann der Träger nicht nur von der Innenfläche durch die Ausnehmung einfach beabstandet sein, er kann gegebenenfalls auch wenigstens teilweise in die Ausnehmung hinein ragen.

Bei einer Kupplungsanordnung gemäß einem solchen Ausführungsbeispiel kann die Befestigungsstruktur an dem ebenen Abschnitt befestigt, beispielsweise mit dem Gehäuse verschweißt sein, wobei das Gehäuse aus einem blechartigen Werkstück mit einer im Wesentlichen gleichen Materialstärke gefertigt ist und wobei das Gehäuse an dem ebenen Abschnitt eine geringere Materialstärke aufweist. So es kann beispielsweise bei einer Kupplungsanordnung gemäß einem Ausführungsbeispiel gegebenenfalls möglich sein, eine Herstellung der Kupplungsanordnung, insbesondere des Gehäuses, zu vereinfachen, da auch dieses weiterhin im Rahmen eines einfachen Herstellungsverfahrens, beispielsweise durch ein Umformen oder Tiefziehen des blechartigen Werkstücks herstellbar ist. Die effizientere Nutzung des zur Verfügung stehenden Bauraums wird hierbei folglich durch die geringere Materialstärke realisiert, die im Bereich des ebenen Abschnitts implementiert wird. Hierbei ist es unerheblich, ob die ebenen Abschnitte oder die Ausnehmung im Bereich der ebenen Abschnitte durch ein Umformen des blechartigen Werkstücks oder durch ein gegebenenfalls anschließend durchgeführtes spanabhebendes Herstellungsverfahren hergestellt werden.

Ein Verfahren zum Bereitstellen einer solchen Kupplungsanordnung, beispielsweise für einen Antriebsstrang eines Fahrzeugs, kann so ein Bereitstellen eines Gehäuses aus einem blechartigen Werkstück umfassen, wobei das Gehäuse an einer Innenfläche eine Ausnehmung aufweist und zumindest so weit vorbereitet ist, dass an einer Innenfläche des Gehäuses eine erste Reibfläche erzeugt werden kann. Es kann ferner ein Bereitstellen eines scheibenförmigen Bauteils mit einer zweiten Reibfläche und ein Bereitstellen eines Trägers umfassen, der mit dem scheibenförmigen Bauteil drehfest über eine an einem radialen Ende des scheibenförmigen Bauteils angeordnete Verzahnung verbindbar ist, sodass das scheibenförmige Bauteil und das Gehäuse zueinander drehbar und parallel zu der Drehachse relativ linear beweglich angeordnet werden können. Es kann ferner ein Bereitstellen eines ebenen Abschnitts an einer Außenfläche des Gehäuses umfassen, sodass die Ausnehmung an einer dem ebenen Abschnitt gegenüberliegenden Seite des Gehäuses nach dem Bereitstellen des ebenen Abschnitts vorliegt. Ebenso kann es ein Erzeugen der ersten Reibfläche an der Innenfläche des Gehäuses, ein Anbringen einer Befestigungsstruktur an dem ebenen Abschnitt des Gehäuses und ein Montieren des scheibenförmigen Bauteils und des Trägers in dem Gehäuse umfassen, sodass die Ausnehmung auf Höhe der Verzahnung angeordnet ist und der Träger von der Innenfläche des Gehäuses beabstandet ist.

Einem solchen Verfahren zum Bereitstellen einer Kupplungsanordnung gemäß einem Ausführungsbeispiel liegt die Erkenntnis zugrunde, dass eine Kupplungsanordnung, die eine effizientere Ausnutzung des zur Verfügung stehenden Bauraums ermöglicht, durch ein besonders effizientes Verfahren angewandt werden kann. So kann durch das separate Erzeugen der ersten Reibfläche dieses arbeitstechnisch gegebenenfalls mit einem der anderen Verfahrensschritte, beispielsweise im Zusammenspiel mit dem Bereitstellen des ebenen Abschnitts durchgeführt werden.

Bei einem Verfahren gemäß einem Ausführungsbeispiel kann das Bereitstellen des ebenen Abschnitts ein Eindrücken des Gehäuses und ein Abdrehen von in die Ausnehmung bei dem Eindrücken eingetretenes Material von der Innenfläche des Gehäuses umfassen, sodass die Ausnehmung nach dem Bereitstellen des ebenen Abschnitts vorliegt. Da auch das Erzeugen der ersten Reibfläche gegebenenfalls durch ein Abdrehen der Innenfläche des Gehäuses erzeugt werden kann, kann so gegebenenfalls ein Umspannen des Werkzeugs eingespart werden, um gleichzeitig das bei dem Eindrücken eingetretene Material von der Innenfläche zu entfernen und gleichzeitig die erste Reibfläche zu erzeugen. Hierdurch kann es also möglich sein, das Verfahren zum Bereitstellen der Kupplungsanordnung effizienter auszugestalten.

Selbstverständlich kann auch bei diesem Ausführungsbeispiel gegebenenfalls eine Veränderung der Reihenfolge der Schritte der betreffenden Verfahren implementiert werden, um beispielsweise besondere Bedingungen oder andere Randbedingungen zu berücksichtigen. Die oben angegebenen Reihenfolgen stellen daher im Allgemeinen keine zwingende Reihenfolge dar, sofern nicht etwas anderes explizit angegeben ist oder sich aus dem Zusammenhang ergibt.

Eine Kupplungsanordnung gemäß einem Ausführungsbeispiel kann beispielsweise eine Einscheibenkupplung, eine Zweischeibenkupplung oder - allgemein gesprochen - eine Mehrscheibenkupplung darstellen. Sie kann beispielsweise eine Anfahrkupplung im Zusammenhang mit einem unsynchronisierten Getriebe (z. B. Automatikgetriebe) oder eine Trennkupplung im Zusammenhang mit einem synchronisierten Getriebe darstellen.

Unter einer einstückig ausgebildeten Komponente wird eine solche verstanden, die genau aus einem zusammenhängenden Materialstück gefertigt ist. Der Begriff "einstückig" kann daher synonym mit den Begriffen "integral" oder "einteilig" verwendet werden. Benachbart sind hierbei zwei Objekte, zwischen denen kein weiteres Objekt desselben Typs angeordnet ist. Unmittelbar benachbart sind entsprechende Objekte, wenn sie aneinandergrenzen, also beispielsweise miteinander in Kontakt stehen. Eine kraftschlüssige oder reibschlüssige Verbindung kommt durch Haftreibung, eine stoffschlüssige Verbindung durch molekulare oder atomare Wechselwirkungen und Kräfte und eine formschlüssige Verbindung durch eine geometrische Verbindung der betreffenden Verbindungspartner zustande. Die Haftreibung setzt somit insbesondere eine Normalkraftkomponente zwischen den beiden Verbindungspartnern voraus.

Nachfolgend werden unter Bezugnahme auf die beigefügten Figuren Ausführungsbeispiele näher beschrieben und erläutert.
Fig. 1 zeigt eine Querschnittsdarstellung durch eine Kupplungsanordnung gemäß einem Ausführungsbeispiel;
Fig. 2 zeigt eine Aufsicht auf eine Distanzscheibe bzw. ein Distanzscheibenbauteil, wie es bei einem Ausführungsbeispiel einer Kupplungsanordnung zum Einsatz kommen kann;
Fig. 3 zeigt eine Querschnittsdarstellung durch eine Distanzscheibe bzw. ein Distanzscheibenbauteil, wie es beispielsweise bei einem Ausführungsbeispiel einer Kupplungsanordnung zum Einsatz kommen kann;
Fig. 4 zeigt ein Flussdiagramm eines Ausführungsbeispiels eines Verfahrens zum Bereitstellen einer Kupplungsanordnung;
Fig. 5 zeigt ein Flussdiagramm eines Ausführungsbeispiels eines Verfahrens zum Bereitstellen einer Kupplungsanordnung;
Fig. 6 zeigt eine schematische Querschnittsdarstellung durch eine Spieleinstellungsstruktur, die an einem ersten und einem zweiten Bauteil einer Kupplungsanordnung gemäß einem Ausführungsbeispiel gebildet ist;
Fig. 7 zeigt eine perspektivische Darstellung der Kupplungsanordnung gemäß einem Ausführungsbeispiel aus Fig. 1;
Fig. 8 zeigt ein Flussdiagramm eines Verfahrens zum Bereitstellen einer Kupplungsanordnung gemäß einem Ausführungsbeispiel;
Fig. 9 zeigt eine Querschnittsdarstellung durch eine Kupplungsanordnung gemäß einem weiteren Ausführungsbeispiel;
Fig. 10 zeigt eine Querschnittsdarstellung durch eine Kupplungsanordnung gemäß einem weiteren Ausführungsbeispiel;
Fig. 11 zeigt eine Querschnittsdarstellung durch eine Kupplungsanordnung gemäß einem weiteren Ausführungsbeispiel; und
Fig. 12 zeigt eine Querschnittsdarstellung durch eine Kupplungsanordnung gemäß einem Ausführungsbeispiel, bei der keine Ausnehmung auf Höhe des ebenen Abschnitts implementiert ist.

Bei der nachfolgenden Beschreibung der beigefügten Figuren, die Ausführungsformen der vorliegenden Erfindung zeigen, bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

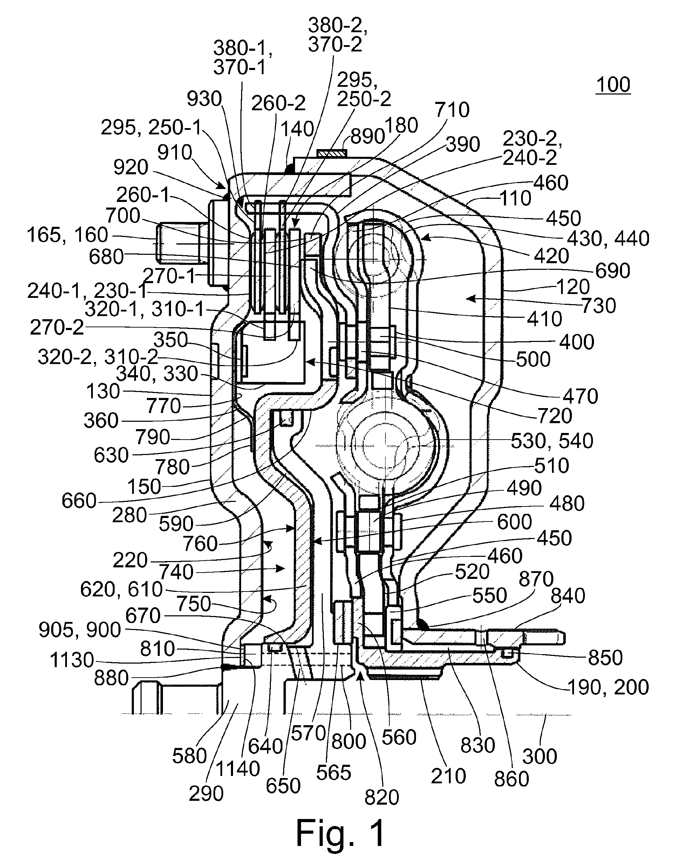

Fig. 1 zeigt eine Querschnittsdarstellung einer Kupplungsanordnung 100 gemäß einem Ausführungsbeispiel. Die Kupplungsanordnung 100 kann hierbei beispielsweise im Rahmen eines Antriebsstrangs eines Fahrzeugs zum Einsatz kommen, um beispielsweise ein von einem Antriebsaggregat bereitgestelltes Drehmoment an ein Getriebe oder ein anderes Bauteil trennbar weiterzugeben. Die Kupplungsanordnung 100 kann daher beispielsweise als Trennkupplung im Falle einer Kombination mit einem synchronisierten Getriebe oder auch als Anfahrkupplung im Zusammenspiel mit einem unsynchronisierten Getriebe, beispielsweise einem entsprechenden Automatikgetriebe, verwendet werden.

Die Kupplungsanordnung 100 umfasst so ein Gehäuse 110, welches im vorliegenden Fall als zweiteiliges Gehäuse mit einer ersten Gehäuseschale 120 und einer zweiten Gehäuseschale 130 ausgeführt ist, wobei die zweite Gehäuseschale 130 auch als motorseitiger Deckel der Kupplungsanordnung 100 bezeichnet wird. Die beiden Gehäuseschalen 120, 130 sind hierbei über eine Schweißverbindung 140 miteinander verbunden. Das Gehäuse 110 ist so mit einem flüssigen Medium befüllbar bzw. befüllt, bei dem es sich beispielsweise um ein Öl oder eine andere Flüssigkeit handelt, die geeignet ist, im Inneren des Gehäuses 110 entstehende Wärme aufzunehmen und abzutransportieren. Andere Ausführungsbeispiele einer Kupplungsanordnung 100 können jedoch auch als Trockenkupplung implementiert werden.

Die zweite Gehäuseschale 130 und damit das Gehäuse 110 dienen bei der in Fig. 1 gezeigten Kupplungsanordnung 100 als Antriebsbauteil 150. Zu diesem Zweck weist die zweite Gehäuseschale 130 eine Anschweißschraube 160 zum Befestigen an einer Flexplatte oder einem Schwungrad eines Antriebsaggregats, beispielsweise eines Motors, oder einer anderen Komponente des Antriebsstrangs auf. Alternativ zu der in Fig. 1 gezeigten Anschweißschraube 160 kann auch eine andere Befestigungsstruktur 165, beispielsweise ein Befestigungsblech implementiert werden. Die Anschweißschraube 160 stellt so nur ein Beispiel der Befestigungsstruktur 165 zum Befestigen der Kupplungsanordnung 100 dar.

Bei der in Fig. 1 gezeigten Kupplungsanordnung 100 handelt es sich genauer gesagt um eine Mehrscheiben- bzw. Mehrlamellenkupplung. Entsprechend weist die Kupplungsanordnung 100 in einem Innenraum des Gehäuses 110 ein Reibpaket 180 auf, das eine Mehrzahl von ersten Reibflächen 230 und zweiten Reibflächen 240 aufweist, wobei die ersten Reibflächen 230 über nachfolgend beschriebene Komponenten wenigstens im Wesentlichen drehfest mit dem Antriebsbauteil 150, die zweiten Reibflächen wenigstens im Wesentlichen drehfest mit einem Abtriebsbauteil 190 der Kupplungsanordnung 100 gekoppelt sind. Bei dem Abtriebsbauteil 190 handelt es sich genauer gesagt um eine untere Nabe 200, die über eine Innenverzahnung 210 formschlüssig mit einer in Fig. 1 nicht gezeigten Getriebeeingangswelle koppelbar ist. Die Getriebeeingangswelle weist eine der Innenverzahnung 210 entsprechende Außenverzahnung auf.

Bei dem in Fig. 1 gezeigten Ausführungsbeispiel einer Kupplungsanordnung 100 umfasst das Reibpaket 180 eine an einer Innenfläche 220 des Gehäuses 110 bzw. der zweiten Gehäuseschale 130 gebildete erste Reibfläche 230-1, die mit einer entsprechenden zweiten Reibfläche 240-1 einer Außenlamelle 250-1 in Reibeingriff steht bzw. in einen solchen bringbar ist. Bei dem hier gezeigten Ausführungsbeispiel stellt die zweite Gehäuseschale 130 bzw. das Gehäuse 110 so ein erstes Bauteil 280 und eine noch näher unten beschriebene vordere Nabe 580 ein zweites Bauteil 290 dar, zwischen denen eine Distanzscheibe 900, wie sie unten näher beschrieben wird, zur Spielanpassung der Reibbeläge 230, 240 eingebracht ist. Die Distanzscheibe 900 ist hier zwischen dem ersten und dem zweiten Bauteil 280, 290 unmittelbar angeordnet ist, steht also mit diesen in unmittelbarem Kontakt.

Die Außenlamelle 250 ist mit einem Reibbelag 260-1 beschichtet, an der die zweite Reibfläche 240-1 gebildet ist. Im Unterschied hierzu ist die erste Reibfläche 230-1 direkt an der Innenfläche 220 des Gehäuses 110 gebildet, ist also beispielsweise als Stahloberfläche ausformt, wenn das Gehäuse 110 ebenfalls aus Stahl gefertigt ist.

Die Außenlamelle 250-1 weist an einer der Innenfläche 220 abgewandten Seite einen weiteren Reibbelag 260-2 auf, der an einer Oberfläche eine weitere zweite Reibfläche 240-2 ausbildet. Die zweite Reibfläche 240-2 steht mit einer Innenlamelle 270-1 in Reibeingriff bzw. kann mit dieser über eine entsprechende erste Reibfläche 230-2 in Reibeingriff gebracht werden.

Das Reibpaket 180 weist ferner eine weitere Außenlamelle 250-2 und eine weitere Innenlamelle 270-2 auf, wobei die Außenlamelle 250-2 ebenfalls entsprechende Reibbeläge 260 aufweist, die jedoch der Übersichtlichkeit halber in Fig. 1 ebenso wenig mit Bezugszeichen versehen sind, wie die sich entsprechend ergebenden ersten und zweiten Reibflächen 230, 240. Die Außenlamelle 250-2 ist hierbei zwischen den beiden Innenlamellen 270-1 und 270-2 angeordnet. Das Reibpaket 180 wird an einer der Innenfläche 220 des Gehäuses 110 abgewandten Seite somit durch die Innenlamelle 270-2 begrenzt.

Die Innenlamellen 270 sind hierbei als im Wesentlichen scheibenförmige Stahlbauteile implementiert und sind daher wenigstens abschnittsweise scheibenförmige ausgestaltet, an denen im Bereich der scheibenförmigen Abschnitte die ersten Reibflächen 230 angeordnet sind. Die Außenlamellen 250 mit ihren Reibbelägen 260 sind hier als (vollständig) scheibenförmige Bauteile 295 implementiert, die an ihren Reibbelägen 260 die zweiten Reibflächen 240 aufweisen. Die scheibenförmigen Bauteile 295 - gegebenenfalls ohne ihre Reibbeläge 260 zu berücksichtigen - sind als Scheiben aus einem Material, bei dem es sich beispielsweise um Stahl, jedoch auch um andere Materialien handeln kann, gefertigt. Sie weisen - gegebenenfalls ohne ihre Reibbeläge 260 zu berücksichtigen - eine hohlzylindrische Form (Hohlzylinder) auf, deren Außen- und Innendurchmesser eine Höhe der hohlzylindrischen Form typischerweise übersteigt. Anders ausgedrückt verläuft eine Verbindungslinie zwischen der zweiten Reibfläche 240 und der Verzahnung 395 im Wesentlichen senkrecht zu der Drehachse 300. Selbstverständlich können bei anderen Ausführungsbeispielen auch die Reibbeläge 260 an den jeweils anderen Bauteilen vorgesehen sein.

Sowohl die Innenlamellen 270 wie auch die Außenlamellen 250 weisen bezogen auf eine Drehachse 300 jeweils eine zentrale Ausnehmung auf, wobei sowohl die Innenlamellen 270 wie auch die Außenlamellen 250 gerade um die Drehachse 300 herum drehbar angeordnet sind. Die Drehachse 300 stellt daher auch im mathematischen Sinn die Drehachse der Kupplungsanordnung 100 dar und wird auch als axiale Richtung bezeichnet.

Um eine Drehmomentübertragung von dem als Antriebsbauteil 150 dienenden Gehäuse 110, also dem ersten Bauteil 280, an die Innenlamellen 270 zu ermöglichen, weisen diese jeweils einen Abschnitt 310-1, 310-2 auf, an denen an einer Seitenfläche jeweils eine Mitnehmerfläche 320-1, 320-2 ausgebildet ist, über die die Innenlamellen 270 jeweils mit einer Förderfläche 330 eines Förderbauteils 340 derart in Eingriff stehen, sodass bei einer Drehung des Förderbauteils 340 auch die jeweiligen Innenlamellen 270 in eine Drehung versetzt werden. Das Förderbauteil 340 ist hierbei im Wesentlichen ringförmig ausgestaltet und erstreckt sich um die Drehachse 300 herum entlang eines Umfangs der Kupplungsanordnung 100. Das Förderbauteil 340 ist bei dem in Fig. 1 gezeigten Ausführungsbeispiel im Wesentlichen mäanderförmig ausgestaltet, sodass die Förderflächen 330 im Wesentlichen senkrecht zu einer Umfangsrichtung der Kupplungsanordnung 100, also im Wesentlichen senkrecht zu einer tangentialen Richtung verlaufen, wobei die tangentiale Richtung senkrecht auf der Drehachse 300 und einer in der entsprechenden Querschnittsebene von der Drehachse 300 weg weisenden radialen Richtung steht.

Das Förderbauteil 340 weist hierbei genauer gesagt eine Mehrzahl der Förderflächen 330 auf. Diese sind entlang des Umfangs des Förderbauteils 340 beispielsweise regelmäßig angeordnet. Entsprechend weisen auch die Abschnitte 310 der Innenlamellen 270 eine entsprechende Anzahl von Mitnehmerflächen 320 auf, mit denen die Mehrzahl der Förderflächen 330 in Eingriff stehen. Das Förderbauteil 340 und die Abschnitte 310 der Innenlamellen 270 bilden so Verzahnungen, die ineinandergreifen. Hierdurch kann eine Verteilung des zu übertragenden Drehmoments auf eine größere Anzahl von Förderflächen 330 und Mitnehmerflächen 320 erzielt werden, sodass es gegebenenfalls möglich sein kann, ein entsprechend höheres Drehmoment auf die Innenlamellen 270 und damit durch die Kupplungsanordnung 100 gemäß einem Ausführungsbeispiel zu übertragen.

Das Förderbauteil 340 ist über eine Nietverbindung 350 mit einem Dichtelement 360 und der zweiten Gehäuseschale 130 drehfest und formschlüssig verbunden. Über die Nietverbindung 350 und gegebenenfalls das Dichtelement 360 wird so eine Drehbewegung des Antriebsbauteils 150, also des Gehäuses 110, auf das Förderbauteil 340 und damit auf die Förderflächen 330 übertragen. Durch den Eingriff der Innenlamellen 270 mit dem Förderbauteil 340 über die Förderflächen 330 und die Mitnehmerflächen 320 wird so das Drehmoment auf die Innenlamellen 270 übertragen.

Auch die Außenlamellen 250, also die scheibenförmigen Bauteile 295, weisen Abschnitte 370-1 und 370-2 auf, die über entsprechende weitere Mitnehmerflächen 380 mit einem Träger 390, der auch als Außenlamellenträger bezeichnet wird, in Eingriff stehen und im Falle eines geschaffenen Reibschlusses das von den Innenlamellen 270 auf die Außenlamellen 250 übertragene Drehmoment aufnehmen. Die Außenlamellen 250, also die scheibenförmigen Bauteile 295, stehen so über eine Verzahnung 395 mit dem Träger 390 in Eingriff. Bei der Verzahnung 395 handelt es sich genauer gesagt um eine Geradverzahnung, die eine relative Verschiebung der Außenlamellen 250, also der scheibenförmigen Bauteile 295 und den an diesen angeordneten zweiten Reibflächen 240 zu den ersten Reibflächen 230 entlang der Drehachse 300 ermöglicht. Da es sich bei dem bzw. den scheibenförmigen Bauteilen 295 um die Außenlamellen 250 handelt, ist die Verzahnung 395 folglich an einem äußeren radialen Ende des scheibenförmigen Bauteils 295 angeordnet. Bei anderen Ausführungsbeispielen kann diese jedoch auch an einem inneren radialen Ende desselben angeordnet sein, wenn das scheibenförmige Bauteil 295 beispielsweise eine Innenlamelle 270 ist.

Der Träger 390 weist eine im Wesentlichen topfförmige Struktur mit einer zentralen Ausnehmung auf, der über eine Nietverbindung 400 mit einer ersten Nabenscheibe 410 eines zweistufigen Schwingungsdämpfers 420 gekoppelt ist. Die erste Nabenscheibe 410ist hierbei über ein Abstands- oder Distanzstück 500 mit dem Träger 390 gekoppelt. Das Distanzstück 500 ist hierbei als Teil der Nietverbindung 400 gebildet, kann jedoch auch von dieser separat ausgeführt sein.

Der Schwingungsdämpfer 420 weist eine Mehrzahl von ersten Federelementen 430 auf, die entlang eines Umfangs der ersten Nabenscheibe 410 angeordnet und jeweils mit einem Ende mit dieser in Anlage stehen. Die ersten Federelemente 430 sind hierbei als Schraubenfedern 440 implementiert. Mit dem jeweils anderen Ende stehen die Schraubenfedern 440 bzw. die ersten Federelemente 430 mit einem ersten Abdeckblech 450 in Anlage, welches aufgrund der in Fig. 1 gezeigten Anordnung auch als rechtes Abdeckblech bezeichnet wird. Das erste Abdeckblech 450 ist hierbei über ein Abstands- bzw. Distanzstück 490 mit einem zweiten Abdeckblech 460 verbunden, welches auch als linkes Abdeckblech bezeichnet wird. Zusammen bilden diese ein nicht abgeschlossenes Gehäuse für das Dämpferelement 430. Das zweite Abdeckblech 460 führt hierbei einstückig nach radial innen.

Die Nietverbindung 400 und das Distanzstück 500, mit der der Träger 390 mit der ersten Nabenscheibe 410 des Schwingungsdämpfers 420 verbunden ist, ist hierbei durch ringsegmentförmiges Langloch 470 geführt, welches eine maximale Bewegungsamplitude der beiden Abdeckbleche 450, 460 zu der ersten Nabenscheibe 410 und damit dem Träger 390 begrenzt.

Das zweite Abdeckblech 460 erstreckt sich in radialer Richtung deutlich weiter als das erste Abdeckblech 450 in Richtung auf die Drehachse 300 zu. So ist das erste Abdeckblech 450 über eine weitere Nietverbindung 480 und das Distanzstück 490 mit einem zweiten Abdeckblech 460 mechanisch drehfest verbunden. Das Distanzstück 490 erstreckt sich hierbei durch ein ebenfalls ringsegmentförmiges Langloch 510 in einer zweiten Nabenscheibe 520. Die zweite Nabenscheibe 520 und das erste Abdeckblech 450 sind hierbei über zweite Federelemente 530 miteinander gekoppelt, die auch hier wiederum als Schraubenfedern 540 implementiert sind. Das zweite Abdeckblech 460 führt so einstückig radial innen über den zweiten Federsatz mit den zweiten Federelementen 530 hinaus.

Selbstverständlich können bei anderen Ausführungsbeispielen einer Kupplungsanordnung 100 auch andere Federelemente als erste bzw. zweite Federelemente 430, 530 zum Einsatz kommen. So können beispielsweise Tonnenfedern, aber auch auf Elastomeren basierende Federelemente verwendet werden, sofern die technischen Randbedingungen, also insbesondere die in dem Gehäuse 110 herrschenden chemischen und/oder thermischen Randbedingungen, einen entsprechenden Einsatz ermöglichen.

Die zweite Nabenscheibe 520 ist weiter über eine drehfeste Verbindung mit der unteren Nabe 200, also dem Abtriebsbauteil 190, verbunden. Auch hierbei kann beispielsweise eine Nietverbindung zum Einsatz kommen. Es kann jedoch auch eine andere, beispielsweise formschlüssige, kraftschlüssige und/oder stoffschlüssige Verbindungstechnik verwendet werden. So können beispielsweise die zweite Nabenscheibe 520 und die untere Nabe 200 miteinander verschweißt werden. Es können jedoch auch beispielsweise Steckverbindungen ergänzend oder alternativ implementiert werden. So können anstelle auch der anderen zuvor beschriebenen Nietverbindungen diese ergänzend oder alternativ als Steckverbindung oder mithilfe anderer Verbindungstechniken realisiert werden.

Das Drehmoment wird so von den Außenlamellen 250 über den Träger 390 und die erste Nabenscheibe 410 über die Federelemente 430 auf die Abdeckbleche 450, 460 übertragen, von wo es über die zweiten Federelemente 530 über die zweite Nabenscheibe 520, die untere Nabe 200 zu der in Fig. 1 nicht gezeigten Getriebeeingangswelle weitergeleitet wird, wenn die ersten und zweiten Reibflächen 230, 240 miteinander in Eingriff stehen.

Bei dem in Fig. 1 gezeigten Ausführungsbeispiel ist die zweite Nabenscheibe 520 gegenüber der ersten Gehäuseschale 120 mittels eines Lagers 550, genauer gesagt im vorliegenden Fall mittels eines axialen Gleitlagers, drehbar bezüglich der Drehachse 300 gelagert. An einer dem Lager 550 abgewandten Seite der zweiten Nabenscheibe 520 stützt sich diese gegen einen Abschnitt 560 der unteren Nabe 200 ab, der seinerseits über ein weiteres Lager 565 bezogen auf eine Trennwand 570 drehbar um die Drehachse 300 gelagert ist. Auch bei dem weiteren Lager 565 handelt es sich um ein axiales Gleitlager bei dem in Fig. 1 gezeigten Ausführungsbeispiel. Die Trennwand 570 ist Teil einer vorderen Nabe 580, bei der es sich bei diesem Ausführungsbeispiel um das zweite Bauteil 290 handelt, und begrenzt zu wenigstens einer Seite einen Kolbendruckraum 590. Dieser wird entlang der axialen Richtung, also entlang der Drehrichtung 300 durch eine Kolbenfläche 600 eines Kolbens 610 begrenzt. Der Kolben 610 stellt, wie die weitere Beschreibung noch zeigen wird, ein Anpresselement 620 dar, welches ausgebildet und angeordnet ist, um auf eine Betätigung hin die ersten und zweiten Reibflächen 230, 240 miteinander in den Reibeingriff zu bringen. Bei anderen Ausführungsbeispielen kann das Anpresselement 620 ebenso ausgebildet sein, den Reibeingriff zu trennen. Wie ebenfalls die nachfolgende Beschreibung noch näher illustrieren wird, handelt es sich jedoch bei der in Fig. 1 gezeigten Kupplungsanordnung um eine Normal-Offen-Kupplung, bei der in einem drucklosen Zustand, also ohne eine Betätigung, ein Reibeingriff nicht bzw. nur im geringfügigen Maße vorliegt. Das Anpresselement 620 ist also bei dem hier gezeigten Ausführungsbeispiel ausgebildet, um auf die Betätigung hin die ersten und zweiten Reibflächen 230, 240 miteinander in den Reibeingriff zu bringen.

Der Kolbendruckraum 590 ist mithilfe zweier Dichtelemente 630 und 640 gegenüber dem Anpresselement 620 einerseits und der vorderen Nabe 580, also dem zweiten Bauteil 290, andererseits abgedichtet. Um in dem Kolbendruckraum ein entsprechendes, unter Druck stehendes Medium, bei dem es sich beispielsweise um das gleiche flüssige Medium handeln kann, mit dem auch der Rest des Gehäuses 110 befüllbar ist, weist die vordere Nabe 580 eine Zulaufbohrung 650 zu dem Kolbendruckraum 590 auf, die den Kolbendruckraum 590 fluidtechnisch mit einem der zweiten Gehäuseschale 130 zugewandten Bereich der zentralen Ausnehmung verbindet, in dem auch die Getriebeeingangswelle angeordnet ist.

Um eine Bewegung des Anpresselement2 620 entlang der Drehrichtung 300 zu ermöglichen, sind die beiden Dichtelemente 630, 640 jeweils in einer entsprechenden Nut in der Trennwand 570 und der vorderen Nabe 580 angeordnet und derart ausgerichtet, dass diese mit einer entsprechenden, sich entlang der Drehrichtung 300 erstreckenden Dichtfläche 660 und 670 des Anpresselement2 620 in Kontakt stehen.

Das Anpresselement 620 erstreckt sich entlang der radialen Richtung, also ausgehend von der Drehachse 300 senkrecht zu dieser bis in Höhe der Innen- und Außenlamellen 270, 250. Das Anpresselement 620 weist in diesem Bereich eine erste Anpressfläche 680 auf, die den ersten und zweiten Reibflächen 230, 240, also den Außenlamellen 250 und Innenlamellen 270, zugewandt ist. Die erste Anpressfläche 680 ist bei dem in Fig. 1 gezeigten Ausführungsbeispiel durch eine Einscherung des Anpresselements 620 gebildet, durch die sich eine Nase 690 bildet, die gegenüber dem Anpresselement 620 in diesem Bereich auf die ersten und zweiten Reibflächen 230, 240 hin ausgestellt ist. Die Nase 690 ist also über ein Materialstück, aus dem das Anpresselement 620 gefertigt ist, also beispielsweise aus einem Stahl oder einem anderen metallischen Werkstoff, mit diesem verbunden und weist daher eine gegenüber dem Anpresselement 620 geringere Federkonstante auf. Die in Fig. 1 gezeigte Kupplungsanordnung 100 weist hierbei eine Mehrzahl von Nasen 690 auf, die entlang des Umfangs der Kupplungsanordnung verteilt angeordnet sind. Die Anordnung kann hierbei sowohl regelmäßig, wie auch unregelmäßig erfolgen.

Die Nase 690 steht hierbei über die erste Anpressfläche 680 mit einer Rückseite der Innenlamelle 270-2 in Kontakt. Das Anpresselement 620 ist also mithilfe der Nase 690 ausgebildet, um über die erste Anpressfläche 680 des Anpresselements 620 eine Anpresskraft in Richtung der ersten und zweiten Reibflächen 230, 240 zu schaffen, durch die der Reibeingriff zwischen diesen geschaffen werden kann. Aufgrund der gegenüber dem Rest des Anpresselements 620 reduzierten Federkonstante kann gegebenenfalls durch das Vorsehen der ersten Anpressfläche 680 an der Nase 690 ein sanfteres Einkuppeln ermöglicht werden.

Das Anpresselement 620 weist darüber hinaus jedoch ferner eine zweite Anpressfläche 700 auf, die nicht an der Nase 690, sondern vielmehr an einem Abschnitt 710 des Anpresselements 620 gebildet ist. Hinsichtlich seiner Federeigenschaften, also beispielsweise seiner Federkonstanten, unterscheidet sich der Abschnitt 710 deutlich weniger von den weiteren Bereichen des Anpresselements 620, als dies beispielsweise im Fall der Nase 690 der Fall ist. So ist die Federkonstante des Abschnitts 710 typischerweise deutlich größer als die der Nase 690, also beispielsweise wenigstens ein 2-Faches, wenigstens ein 5-Faches oder wenigstens ein 10-Faches.

Wird nun das Anpresselement 620 entlang der Drehachse 300 auf die ersten und zweiten Reibflächen 230, 240 zu bewegt, bewegt sich also in Fig. 1 nach links, erfolgt zunächst ein vergleichsweise sanftes Einkuppeln über die erste Anpressfläche 680 der Nasen 690. Wird das Anpresselement 620 weiter bewegt, erhöht sich die Deformation der Nasen 690 und die Anpresskraft, die über die erste Anpressfläche 680 auf die Lamellen 250, 270 und damit auf die entsprechenden Reibflächen 230, 240 ausgeübt wird, wird größer. Wird das Anpresselement 620 nun so weit bewegt, dass dieses über die zweite Anpressfläche 700 des Abschnitts 710 die Anpresskraft bewirkt, wird gegebenenfalls eine deutlich höhere, nahezu sprunghaft ansteigende Anpresskraft auf die Reibflächen 230, 240 übertragen. Abgesehen von elastischen Deformationen des Anpresselements 620 und gegebenenfalls der Reibbeläge 260 befindet sich das Anpresselement 620 nunmehr an einem Endzustand, in dem die Kupplungsanordnung 100 vollständig eingekuppelt ist. Selbstverständlich ist es auch in diesem Bereich allerdings noch möglich, durch ein entsprechendes Erhöhen einer das Anpresselement 620 in Richtung der ersten und zweiten Reibflächen 230, 240 treibenden Kraft weiter zu erhöhen, allerdings ohne dass das Anpresselement 620 sich signifikant bewegt.

Bei dem zuvor beschriebenen Übergang von der ersten Anpressfläche 680 auf die zweite Anpressfläche 700 steht zwar auch die erste Anpressfläche 680 im Allgemeinen weiterhin in Kontakt mit der Innenlamelle 270-2, überträgt jedoch im Vergleich zu der zweiten Anpressfläche 700 deutlich geringere Kräfte, die sich aus dem Verhältnis der entsprechenden Federkonstanten der Nase 690 und der des Abschnitts 710 ergeben. Das Anpresselement 620 liegt in diesem Zustand im Wesentlichen entlang seines ganzen Umfangs an der Innenlamelle 270-2 an.

Um bei einem Einkuppeln der Kupplungsanordnung 100 eine Verschiebung eines effektiven Anpresspunktes zu unterbinden, können bei der in Fig. 1 gezeigten Ausgestaltung des Anpresselements 620 Flächenmittelpunkte bzw. effektive Berührpunkte der betreffenden beiden Anpressflächen 680, 700 unter Berücksichtigung des entsprechenden Gegenbauteils, also im vorliegenden Fall unter Berücksichtigung der Innenlamelle 270-2, im Wesentlichen zusammenfallen. Darüber hinaus kann bei der in Fig. 1 gezeigten Implementierung des Anpresselements 620 eine Anpressfläche erhöht werden. Hierdurch kann es gegebenenfalls möglich sein, eine höhere Anpresskraft aufgrund der höheren Fläche zu übertragen, ohne im Wesentlichen eine Veränderung des effektiven Anpresspunktes befürchten zu müssen.

Eine Verlagerung des effektiven Anpresspunktes könnte gegebenenfalls zu einer Veränderung der an den ersten und zweiten Reibflächen 230, 240 vorherrschenden Druckverhältnissen führen, die beispielsweise durch eine Elastizität der Reibbeläge 260 aber auch der betreffenden Innen- und Außenlamellen 270, 250 sowie anderer Bauteile hervorgerufen werden können. Hierdurch kann gegebenenfalls ein Punkt an den Reibflächen 230, 240 verschoben werden, an dem eine maximale Wärme aufgrund der entstehenden Reibung bei dem Einkuppeln übertragen werden kann. So kann es unter gewissen Umständen gegebenenfalls dazu kommen, dass eine Kühlung der ersten und zweiten Reibflächen 230, 240 durch das zuvor erwähnte flüssige Medium im Inneren des Gehäuses 110 weniger effizient möglich ist. Auch kann es zu einer ungleichmäßigen Abnutzung der Reibbeläge 260 kommen. Aufgrund der axialen Beweglichkeit der Innenlamellen 270 und der Außenlamellen 250 kann es ferner unter Umständen auch zu einer leichten Verkantung der Lamellen 250, 270 im Bereich ihrer jeweiligen Verzahnungen bzw. Eingriffe mit dem Förderbauteil 340 und dem Träger 390 kommen, wodurch der entsprechende Effekt gegebenenfalls weiter verstärkt werden kann.

Das Anpresselement 620 sowie die Außenlamellen 250, die Innenlamellen 270 und das Dichtelement 360 begrenzen hierbei wenigstens teilweise ein erstes Volumen 720 eines Innenvolumens der Kupplungsanordnung 100. Wie bereits zuvor im Zusammenhang mit dem Förderbauteil 340 kurz erläutert wurde, weist das Förderbauteil 340 die Mehrzahl von Förderflächen 330 auf, die nicht nur mit den Mitnehmerflächen 320 der Innenlamellen 270 in Eingriff steht, die Förderflächen 330 sind vielmehr ebenso ausgebildet, um bei einer Bewegung der Förderflächen gegenüber dem flüssigen Medium in dem Inneren des Gehäuses 110 einen Strom des flüssigen Mediums zu bewirken. Zu diesem Zweck ist das Förderbauteil 340 mit dem als Antriebsbauteil 150 dienende Gehäuse 120 drehfest verbunden. Die Förderflächen 330 sind bei dem in Fig. 1 gezeigten Ausführungsbeispiel nicht zuletzt in dem ersten Volumen 720 angeordnet, sodass bei einer Bewegung der Förderflächen 330 zu dem flüssigen Medium das in diesem ersten Volumen 720 befindliche flüssige Medium gefördert wird.

Um eine möglichst effiziente Förderung des flüssigen Mediums zu ermöglichen, kann es in diesem Zusammenhang ratsam sein, dass die Innenlamellen 270 derart über die Mitnehmerflächen 320 mit den Förderflächen 330 des Förderbauteils 340 in Eingriff stehen zu lassen, dass eine Berührfläche zwischen den betreffenden Mitnehmerflächen 320 und der Förderfläche 330 höchstens 50 % einer Fläche der Förderfläche ist. Sofern eine ausreichende Stabilität und Kraftübertragung bzw. Drehmomentübertragung über die Förderflächen 330 auf die Mitnehmerflächen 320 der Innenlamellen 270 gewährleistet ist, kann eine weitere Reduzierung gegenüber dem vorgenannten Verhältnis gegebenenfalls zu einer Verbesserung der Strömung führen. So kann es bei anderen Ausführungsbeispielen beispielsweise ratsam sein, das vorgenannte Verhältnis auf höchstens 30 %, höchstens 25 %, höchstens 20 %, höchstens 15 % oder höchstens 10 % zu beschränken. Eine untere Grenze für dieses Verhältnis ist in der Doppelfunktion aus Förderfläche einerseits und Eingriffsfläche andererseits zu suchen.

Die Förderflächen 330, wie sie in Fig. 1 gezeigt sind, sind hierbei zusammenhängend und eben. Sie sind entlang der Umfangs- oder Tangentialrichtung, also im Wesentlichen senkrecht zu der Drehachse 300 und von dieser wegweisenden radialen Richtung ausgerichtet. Im Hinblick auf die drehmomentübertragenden Eigenschaften der Förderflächen 330 kann diese Ausgestaltung vorteilhaft sein, da hierdurch axiale Kräfte entlang der Drehachse 300 über die Mitnehmerflächen 320 auf die Innenlamellen 270 reduziert, wenn nicht sogar vermieden werden können. Aber auch im Hinblick auf die Bewirkung des Stroms des fluiden Mediums, also beispielsweise eines Öls, kann diese Ausgestaltung der Förderflächen 330 von Vorteil sein. So kann hierdurch gegebenenfalls ein im Wesentlichen radial nach außen gerichteter Strom des flüssigen Mediums auf die ersten und zweiten Reibflächen 230, 240 hin bewirkt werden.

Die betreffenden Lamellen 270, 250 bzw. ihre gegebenenfalls implementierten Reibbeläge 260 können derart ausgebildet sein, dass diese von dem Strom des flüssigen Mediums durchströmbar sind. Zu diesem Zweck können die entsprechenden Lamellen 250, 270 bzw. die mit diesen verbundenen Komponenten Kanäle oder Fluidkanäle aufweisen, die einen Durchtritt des flüssigen Mediums entlang der radialen Richtung ermöglichen. Diese können beispielsweise in geraden Linien, jedoch auch in gebogenen Linien ausgeführt sein und im Bereich der Reibflächen 230, 240 verlaufen. Hierdurch kann eine gerade im Bereich der Reibflächen 230, 240 frei werdende Reibungsenergie bzw. Wärme räumlich nah an das flüssige Medium abgegeben und aufgrund des herrschenden Stroms abtransportiert werden.

Die Förderfläche 330 weist in der in Fig. 1 gezeigten Querschnittsebene eine Querschnittsfläche auf, die ihrerseits einen nicht unerheblichen Anteil an einer Querschnittsfläche des zweiten Volumens 720 in der betreffenden Querschnittsebene umfasst. Um eine möglichst hohe, den Umständen jedoch entsprechende Förderwirkung des Förderbauteils 340 zu ermöglichen, kann es ratsam sein, bei Ausführungsbeispielen einer Kupplungsanordnung 100 die Querschnittsfläche des ersten Volumens 720 im Vergleich zu der Querschnittsfläche der Förderfläche 330 derart zu wählen, dass diese höchstens ein 20-Faches, höchstens ein 15-Faches, höchstens ein 10-Faches oder höchstens ein 7,5-Faches der Querschnittsfläche der Förderfläche 330 entspricht. Es kann sogar möglich sein, bei Ausführungsbeispielen einer Kupplungsanordnung noch geringere Faktoren zu verwenden. So kann es durchaus möglich sein, auch höchstens ein 5-Faches, höchstens ein 3-Faches oder höchstens ein 2-Faches der Förderfläche 330 als Querschnittsfläche des ersten Volumens 720 vorzusehen. Selbstverständlich können bei anderen Ausführungsbeispielen jedoch auch größere Vielfache als die oben genannten auftreten.

Um einen entsprechenden Zufluss des flüssigen Mediums zu der Förderfläche 330 zu ermöglichen, weist das Anpresselement 620 in radialer Richtung auf Höhe der Förderflächen 330 oder näher zu der Drehachse 300 hin eine in Fig. 1 nicht gezeigte Durchlassöffnung 305 auf, die auch als Öffnungsbohrung oder Durchtrittsöffnung bezeichnet wird. Die Durchtrittsöffnung ist hierbei radial außerhalb des Dichtelements 360 angeordnet, mündet also in das erste Volumen 720 ein. Hierdurch kann flüssiges Medium durch die in Fig. 1 nicht gezeigte Durchtrittsöffnung in das erste Volumen 720 eintreten, wo dieses durch die sich relativ zu dem flüssigen Medium gegebenenfalls drehenden Förderflächen 330 radial nach außen durch die Reibflächen 230, 240 transportiert wird. Dort tritt der Strom des flüssigen Mediums in ein Teilvolumen 730 des Gehäuses 110 ein, in dem auch der Schwingungsdämpfer 420 angeordnet ist. In dem Teilvolumen 730 kann dann die an das flüssige Medium abgegebene Wärme an andere Bauteile, beispielsweise das Gehäuse 110, abgegeben werden. Ein Teil des flüssigen Mediums kann dann durch die in Fig. 1 nicht gezeigte Durchlassöffnung 305 wieder in das erste Volumen 720 eintreten, während ein weiterer Teil des flüssigen Mediums das Teilvolumen 730 durch das Lager 550 verlassen kann. Die Trennwand 570 trennt hierbei das Teilvolumen 730 von dem Kolbendruckraum 590.

Die Förderwirkung des Förderbauteils 340 basiert also nicht zuletzt darauf, dass bei einem Drehzahlunterschied zwischen dem Förderbauteil 340 und dem flüssigen Medium diesem ein Strom aufgezwungen wird. Das Förderbauteil kann sich so über die beschriebenen drehfesten Verbindungen eine Relativbewegung zwischen dem Antriebsbauteil 150 und dem Abtriebsbauteil 190 zunutze machen. Eine solche Relativbewegung liegt insbesondere im Bereich des Schlupfs vor, wenn also die ersten und zweiten Reibflächen 230, 240 miteinander in Kontakt stehen, jedoch unterschiedliche Drehgeschwindigkeiten aufweisen. Gerade in dieser Situation wird eine nicht unerhebliche Wärmemenge im Bereich der Reibflächen 230, 240 erzeugt, die über das flüssige Medium abtransportiert werden sollte. Liegt ein Drehzahlausgleich schließlich vor, ist also die Kupplungsanordnung 100 eingekuppelt, wird im Wesentlichen keine neue Wärme erzeugt, sodass auch ein Nachlassen der Förderwirkung aufgrund ähnlicher Geschwindigkeiten des Förderbauteils 340 einerseits und des flüssigen Mediums andererseits unproblematisch ist, wenn sich diese im Wesentlichen mit dem Gehäuse 110 mit dreht.

Das Dichtelement 360 trennt ein zweites Volumen 740 von dem ersten Volumen 720 ab. Das zweite Volumen 740 wird hierbei ferner durch einen Oberflächenabschnitt 750 der Innenfläche 220 der zweiten Gehäuseschale 130 und einer Kolbenrückseite 760 wenigstens teilweise begrenzt, wobei die Kolbenrückseite 760 an einer der Kolbenfläche 600 abgewandten Seite des Anpresselements 620 liegt.

Kommt es aufgrund einer Relativbewegung des Förderbauteils 340 mit seinen Förderflächen 330 zu dem flüssigen Medium zu einer Pumpwirkung, sinkt aufgrund hydrodynamischer Effekte ein (statischer) Druck in dem ersten Volumen 720. Dadurch, dass das Dichtelement 360 jedoch das erste Volumen 720 von dem zweiten Volumen 740 trennt, kann so in dem zweiten Volumen 740 unabhängig von einer gegebenenfalls eintretenden Förderwirkung des Förderbauteils 340 der dort herrschende Druck im Wesentlichen konstant gehalten werden, zumindest jedoch ein gegebenenfalls aufgrund anderer Effekte auftretenden Druckabfall begrenzt werden. Hierdurch wird auch bei einer Relativbewegung bzw. Pumpwirkung durch das Förderbauteil 340 eine Kraft, die auf die Kolbenrückseite 760 einwirkt, im Wesentlichen nicht durch die Förderwirkung und damit durch die Bewegung des Förderbauteils 340 beeinflusst.

Anders ausgedrückt kann durch den Einsatz des Dichtelements 360 ein in dem zweiten Volumen 740 herrschender Druck konstanter gehalten werden, sodass bei einer Ansteuerung des Anpresselements 620 durch Einleiten oder Abziehen eines Flüssigkeitsvolumens in den oder aus dem Kolbendruckraum 590 auftretende Druckänderungen in dem zweiten Volumen und damit Kraftänderungen auf die Kolbenrückseite 760 im Wesentlichen unterbunden, zumindest jedoch reduziert werden können. Dadurch, dass die entsprechende Kraft auf die Kolbenrückseite 760 konstanter gehalten wird, kann ein Einkuppelverhalten, ein Auskuppelverhalten oder eine Definition eines bestimmten Schlupfverhältnisses an den Reibflächen 230, 240 durch Ansteuern des Anpresselements 620 gegebenenfalls verbessert werden. Es kann also gegebenenfalls möglich sein, eine Kontrollierbarkeit bzw. Steuerbarkeit der Kupplungsanordnung 100 gemäß einem Ausführungsbeispiel durch den Einsatz des entsprechenden Dichtelements 360 zu verbessern.

Je nach konkreter Ausgestaltung des Dichtelements 360 kann es möglich sein, das zweite Volumen 740 kleiner oder auch größer auszugestalten, indem eine radiale Position des Dichtelements 360 verändert wird. Hierbei kann jedoch weniger die tatsächliche Größe des ersten Volumens 720 im Vordergrund stehen, als vielmehr eine Lage und/oder eine Größe eines Flächenabschnitts des Anpresselements 620, der das zweite Volumen 740 wenigstens teilweise begrenzt. So treten bei einer Drehung der Kupplungsanordnung 100 Zentrifugalkräfte auf das in dem zweiten Volumen 740 und dem Kolbendruckraum 590 befindliche flüssige Medium auf. Diese führen zu einer Ausbildung eines Drucks, der von beiden Seiten her auf das Anpresselement 620 einwirkt und Kräfte bewirkt, die einander entgegengerichtet sind. Die radiale Position des Dichtungselements 360 bzw. seines Übergangsbereichs 790 hat daher darauf einen Einfluss, ob es aufgrund der Fliehkraftwirkung zu einer zusätzlichen effektiven Kraft auf das Anpresselement 620 durch die Druckveränderungen kommt, wie groß diese ist und in welche Richtung sie wirkt.

Wird beispielsweise der Übergangsbereich 790 des Dichtelements 360 näher auf die Drehachse 300 hin versetzt, sodass eine Erstreckung des Flächenabschnitts des Anpresselements 620 entlang der radialen Richtung verkleinert wird und das zweite Volumen 740 kleiner wird, werden auch die von Seiten des zweiten Volumens 740 auf das Anpresselement 620 einwirkenden Kräfte kleiner. Ein im Kolbendruckraum 590 aufgrund der Zentrifugalkraft wirkender Druck führt so zu einer gegenüber der unveränderten Position des Dichtelements 360 größeren effektiven Kraft auf das Anpresselement 620. Die auftretenden Zentrifugalkräfte im Kolbendruckraum 590 werden daher unterkompensiert.

Entsprechend kann durch eine Variation des Ortes, an dem der Übergangsabschnitt 790 angeordnet ist, jedoch auch eine Überkompensation oder eine im Wesentlichen vollständige Kompensation des wirkenden Fliehkraftdrucks auf das Anpresselement 620 ermöglicht werden. Hierbei kann es gegebenenfalls ratsam sein, den unter den betreffenden Umständen aufgrund der Zentrifugalkräfte in dem zweiten Volumen 740 auftretenden Druck derart zu bemessen, dass dieser weder zu groß, noch zu klein ist, um eine Einrück- oder Ausrückbewegung des Anpresselements 620 zu hemmen oder gar zu verhindern.

Wie bereits zuvor erwähnt wurde, ist das Dichtelement 360 ferner ausgebildet, um nicht nur das erste Volumen 720 von dem zweiten Volumen 740 fluidtechnisch zu trennen, es ist ferner ausgebildet, um auf das Anpresselement 620 oder ein anderes Bauteil mit einem wenigstens teilweise scheibenförmigen Abschnitt eine solche Kraft auszuüben, dass das Anpresselement 620 in seine Ausgangsposition zurückkehrt, wenn dieses nicht betätigt wird. Anders ausgedrückt ist das Dichtelement 360 hier derart ausgebildet, dass dieses auf das Anpresselement 620 eine solche Kraft ausübt, dass dieser in die in Fig. 1 gezeigte Ausgangsposition gebracht wird, in der gerade der Reibeingriff zwischen den ersten und zweiten Reibflächen 230, 240 gelöst, zumindest jedoch so weit geschwächt ist, dass kein nennenswertes Drehmoment über die Kupplungsanordnung 100 übertragen wird. Die Betätigung des Anpresselements 620 erfolgt hierbei durch Einleiten eines entsprechenden Fluidvolumens durch die Zulaufbohrung 650 zu dem Kolbendruckraum 590.

Um diese Doppelfunktionalität des Dichtelements 360 zu ermöglichen, weist das Dichtelement 360 eine erste Dichtfläche 770 und eine zweite Dichtfläche 780 auf, die durch einen Übergangsabschnitt 790 miteinander verbunden sind. Die erste Dichtfläche 770 und die zweite Dichtfläche 780 sind hierbei beide im Wesentlichen senkrecht zu der Drehachse 300 ausgerichtet und entlang dieser beabstandet. Die beiden Dichtflächen 770, 780 sind hierbei auch entlang der radialen Richtung, also senkrecht zu der Drehachse 300 voneinander beabstandet, wobei bei dem in Fig. 1 gezeigten Dichtelement 360 die zweite Dichtfläche 780 radial innen liegend zu der ersten Dichtfläche 770 angeordnet ist. Hierdurch weist der Übergangsabschnitt 790 eine Kegelmanteloberflächenform auf. Selbstverständlich können bei anderen Ausführungsbeispielen die beiden Dichtflächen 770, 780 entlang der radialen Richtung auch vertauscht angeordnet sein.

Die beiden Dichtflächen 770, 780 liegen hierbei auf entsprechenden Ebenen bzw. ringförmigen Abschnitten des Gehäuses 110 bzw. der zweiten Gehäuseschale 130 und dem Anpresselement 620 an. Diese können je nach konkreter Ausgestaltung gegebenenfalls oberflächenbehandelt, also beispielsweise abgedreht, sein, um entsprechende Gegendichtflächen zu bilden.

Kommt es nun aufgrund einer Bewegung des Anpresselements 620 zu einer Deformation des Dichtelements 360, wird nicht zuletzt der Übergangsabschnitt 790 deformiert, wobei aufgrund der flächigen Ausgestaltung der beiden Dichtflächen 770, 780 auch im Falle einer Deformation derselben oder einer Änderung ihrer geometrischen Ausrichtung zu dem Anpresselement 620 und der zweiten Gehäuseschale 130 tendenziell zunächst eine flächenförmige Auflage vorherrscht. Je nach Grad der Verformung des Dichtelements 620 kann es jedoch auch zu einem Abheben oder Abrollen wenigstens eines Teils einer der beiden Dichtflächen 770, 780 kommen. Es kann in einem solchen Fall zumindest abschnittsweise, gegebenenfalls jedoch auch vollständig dazu kommen, dass die betreffenden Dichtflächen 770, 780 das entsprechende Bauteil, also das Anpresselement 620 bzw. die zweite Gehäuseschale, nur linienförmig berühren. Es liegt jedoch typischerweise stets wenigstens ein linienförmiger Berührbereich vor. Hierdurch kann auch im Falle einer Bewegung des Anpresselements 620 eine Dichtwirkung des Dichtelements 360 wenigstens teilweise aufrechterhalten werden. Zur besseren Fixierung des Dichtelements 360 an der zweiten Gehäuseschale 130 weist dieses darüber hinaus an einer dem Übergangsabschnitt 790 abgewandten Seite einen Abschnitt auf, der einer Form der zweiten Gehäuseschale 130 angepasst ist, um so in radialer Richtung und in axialer Richtung, also entlang der Drehachse 300, wenigstens teilweise eine formschlüssige Verbindung zu bilden. Diese formschlüssige Verbindung kann gegebenenfalls auch nur als Montagehilfe bzw. Zentrierhilfe für das Dichtelement 360 ausgelegt sein. Ergänzend oder alternativ kann der Abschnitt, der auch als Kragen oder Rand bezeichnet wird, auch zur mechanischen Stabilisierung des Dichtelements 360 vorgesehen werden. So kann durch diesen gegebenenfalls eine Verformung des Dichtelements 360 in Umfangsrichtung bei einem Verfahren des Anpresselements 620 entlang der Drehachse 300 gegebenenfalls reduziert oder vollständig unterbunden werden. So können beispielsweise Wellenbildungen entlang der Umfangsrichtung bei entsprechenden Belastungen auftreten. Auch kann gegebenenfalls die zuvor beschriebene Anpassung der Formen des Dichtelements 360 und der zweiten Gehäuseschale 130 entfallen.

Das Dichtelement 360 dient somit bei dem in Fig. 1 gezeigten Ausführungsbeispiel einer Kupplungsanordnung 100 nicht nur zur fluidtechnischen Trennung des ersten und des zweiten Volumens 720, 740, sondern erfüllt die zusätzliche Funktion der Rückführung des Anpresselements 620 in eine Ausgangslage vor einer Betätigung desselben, sodass es sich bei der Kupplungsanordnung 100 gerade um eine Normal-Offen-Kupplungsanordnung handelt. Gegebenenfalls kann das Dichtelement 620 auch durch ein weiteres entsprechendes Federelement, beispielsweise in Form einer ergänzenden Teller-, Membran-, Blatt- oder Spiralfeder unterstützt werden.

Bei anderen Ausführungsbeispielen kann das Dichtelement 360 selbstverständlich auch eine derartige Kraft auf das Anpresselement 620 oder ein anderes Bauteil ausüben, sodass die Kupplungsanordnung 100 eine Normal-Geschlossen-Kupplungsanordnung darstellt, bei der ohne eine Betätigung ein Reibeingriff zwischen den ersten und zweiten Reibflächen 230, 240 besteht. Anders ausgedrückt kann das Dichtelement 360, das auch als Dichtblech bezeichnet wird, nicht nur wie in Fig. 1 gezeigt auf Druck vorgespannt, sondern auch auf Zug vorgespannt sein. Hierdurch kann beispielsweise eine Normal-Geschlossen-Kupplungsanordnung realisiert werden.

Bei der in Fig. 1 gezeigten Kupplungsanordnung 100 handelt es sich um einen Drei-Leitungs-Typ, bei dem die Zulaufbohrung 650 eine der drei Leitungen bzw. Kanäle darstellt, mit deren Hilfe der Kolbendruckraum 590 mit dem flüssigen Medium, gegebenenfalls auch mit einem anderen flüssigen Medium, beschickt werden kann. Um eine Bewegung des Anpresselements 620 zu ermöglichen, ist das zweite Volumen 740 über einen in Fig. 1 gestrichelt eingezeichneten Zuleitungskanal 800, der in eine Zuführung 810 zu dem zweiten Volumen 740 führt, fluidtechnisch verbunden. Der Zuleitungskanal 800 mündet hierbei in einen Zuflussbereich 820, der entlang der in Fig. 1 nicht gezeigten Getriebeeingangswelle geführt ist. Der Zuleitungskanal 800 und die Zuführung 810 ermöglichen so einen Zu- und Abfluss des flüssigen Mediums im Falle eines Bewegens des Anpresselements 620. Sie dienen somit dem Ausgleich des entsprechenden Volumens.

Der Zuflussbereich 820 ist hierbei über einige in der Innenverzahnung 210 bzw. der entsprechenden Außenverzahnung der Getriebeeingangswelle fehlender Zähne mit einem Zufluss für das flüssige Medium, also für das Öl bzw. Getriebeöl, verbunden. Häufig werden im Bereich der Innenverzahnung 210 und der korrespondierenden Außenverzahnung der in Fig. 1 nicht gezeigten Getriebeeingangswelle ein Zahn oder zwei oder mehr benachbarte Zähne an mehreren Stellen entlang des Umfangs der entsprechenden Verzahnungen eingespart, sodass Öldurchtrittsleitungen an diesen Stellen gebildet werden, die den Zuflussbereich mit dem Getriebe fluidtechnisch koppeln. Genauer gesagt fehlen bei dem in Fig. 1 gezeigten Ausführungsbeispiel an drei Stellen jeweils zwei benachbarte Zähne in den betreffenden Verzahnungen, um die Öldurchtrittsleitungen zu bilden.

Über den Zuflussbereich 820 wird nicht nur das zweite Volumen 740 mit dem flüssigen Medium versorgt, auch das Teilvolumen 730 ist über den Zuflussbereich 820 und in dem Lager 565 integrierten Ölführungsleitungen fluidtechnisch verbunden. Anders ausgedrückt führt der Ölzulauf durch die Innenverzahnung 210 und die entsprechende Außenverzahnung der Getriebeeingangswelle, den Zuflussbereich 820 und die Ölführungskanäle des Lagers 565. Die Zulaufbohrung 650 zu dem Kolbendruckraum 590 ist hierbei von dem Zuflussbereich 820 durch eine in Fig. 1 ebenfalls nicht gezeigte Dichtung getrennt. Der Zuflussbereich 820 stellt so die zweite Leitung dar.

Das flüssige Medium kann das Teilvolumen 730 über entsprechende Ölführungen bzw. Ölführungskanäle in dem Lager 550 und einem Abflussbereich 830 verlassen. Der Abflussbereich 830 ist hierbei zwischen der unteren Nabe 200 und einer Pumpennabe 840 gebildet und weist einen im Wesentlichen ringförmigen Querschnitt auf. Die Pumpennabe 840 ist hierbei gegenüber der unteren Nabe 200 mithilfe eines Dichtelements 850 abgedichtet. Das in dem Abflussbereich 830 eingetretene flüssige Medium kann dann über eine Öffnung 860, die auch als Ölablauf bezeichnet wird, abgezogen werden. Bei der in Fig. 1 gezeigten Kupplungsanordnung 100 ist die Öffnung 860 hierbei mit dem Sumpf des Getriebes oder aber auch einem anderen Behälter für das Öl bzw. das flüssige Medium verbunden. Die Öffnung 860 stellt somit zusammen mit dem Abflussbereich 830 die dritte Leitung dar.

Das Fördervolumen, welches durch das Förderbauteil 340 mit seinen Förderflächen 330 im Inneren des Gehäuses 110 umwälzbar ist, übersteigt in vielen Fällen ein Volumen, welches dem Gehäuse 110 über den Zuflussbereich 820 und den Abflussbereich 830 zugeführt bzw. über diesen abgeführt wird, um ein Vielfaches. So wird mithilfe der Förderflächen 330 des Förderbauteils 340, aber auch durch andere, eine Förderung des flüssigen Mediums unterstützenden Strukturen im Inneren des Gehäuses 110 häufig ein Volumenstrom erzeugt. Dieser kann wenigstens ein 5-Faches, wenigstens ein 10-Faches, wenigstens ein 15-Faches oder wenigstens ein 20-Faches des durch den Zuflussbereich 820 der Kupplungsanordnung 100 zur Verfügung gestellten Volumens des flüssigen Mediums betragen, jedoch auch kleiner als die vorgenannten Werte sein. Die hierbei angegebenen Verhältnisse beziehen sich auf eine maximale Fördermenge durch das Förderbauteil 340. Die Förderflächen 330, die gerade eine Zwangsströmung in dem jeweiligen, mit Fluid befüllten und um die Drehachse rotierenden Gehäuse 110 erzeugen, nutzen gerade den Effekt unterschiedlicher Drehzahlen an der Antriebs- und Abtriebsseite der Kupplungsanordnung 100 aus, also die unterschiedlichen Drehzahlen an dem Antriebsbauteil 150 und dem Abtriebsbauteil 190. Die Förderflächen 330 wirken bezüglich der Umwälzung des flüssigen Mediums wie ein Pumpenrad bzw. wie ein Turbinenrad bei einer Hydrokupplung oder einem hydrodynamischen Drehmomentwandler.

Die Pumpennabe 840 ist mit der ersten Gehäuseschale 120 des Gehäuses 110 über eine Verschweißung 870 verbunden. Auch die zweite Gehäuseschale 130 ist mit der vorderen Nabe 580 über eine Verschweißung 880 verbunden, sodass sich im Zusammenhang mit der Schweißverbindung 140, die beispielsweise als Schweißnaht ausgeführt sein kann und die beiden Gehäuseschalen 120, 130 miteinander verbindet, ein abgeschlossenes Volumen mit dem Teilvolumen 730 sowie dem ersten und dem zweiten Volumen 720, 740 bildet.

Die entsprechenden Verschweißungen 870, 880 und 140 können hierbei sowohl als Schweißnähte wie auch als Schweißpunkte ausgeführt werden. Selbstverständlich können diese Verbindungstechniken auch gegebenenfalls durch andere, den Einsatzbedingungen angepasste und angemessene Verbindungstechniken ausgetauscht werden.

Fig. 1 zeigt darüber hinaus ein Wuchtgewicht 890, das im vorliegenden Fall mit der ersten Gehäuseschale 120 verschweißt ist. Dieses dient dem Ausgleich von Konstruktions-, Montage- oder anders bedingten Unwuchten und kann so entsprechende Unwuchten im Antriebsstrang des Fahrzeugs reduzieren. Die Position des Wuchtgewichts, wie es in Fig. 1 gezeigt ist, kann jedoch bei anderen Ausführungsbeispielen variieren.

Zwischen der Zuführung 810, die als Teil der vorderen Nabe 580 gebildet ist, und dem Gehäuse 110, genauer gesagt der zweiten Gehäuseschale 130, ist ferner eine Distanzscheibe 900 eingesetzt. Diese dient, wie im Nachfolgenden erläutert wird, zur Einstellung eines Spiels zwischen den Lamellen, also der Einstellung des Spiels zwischen den ersten und zweiten Reibflächen 230, 240, das auch Luft- oder Lüftspiel bezeichnet wird. So bestimmt das Spiel zwischen den Reibflächen 230, 240 einerseits die Fähigkeit der Kupplungsanordnung 100 den Momentenfluss zu unterbrechen sowie ein Ansprechverhalten beim Ein- oder Auskuppeln der Kupplungsanordnung 100.

Während im Interesse einer zuverlässigen Trennung der Reibflächen 230, 240 und damit im Interesse einer zuverlässigen Trennung des Drehmomentflusses tendenziell größerer Spiele S angezeigt sind, müssen diese jedoch von dem Anpresselement 620 im Falle des Einkuppelns bzw. des Auskuppelns überbrückt werden. Hierdurch kann es gerade bei einem kontrollierten Einrücken der Kupplungsanordnung 100 zu einem verzögerten Aufbau des Reibschlusses kommen, da zuvor das Spiel von dem Anpresselement 620 überbrückt werden muss. Eine Einstellung des Spiels der Lamellen kann daher gegebenenfalls ein Verhältnis zwischen einem Ansprechverhalten der Kupplung einerseits und einem Verschleiß der ersten und zweiten Reibflächen 230, 240 bzw. einer Trennfähigkeit der Kupplungsanordnung 100 verbessern.

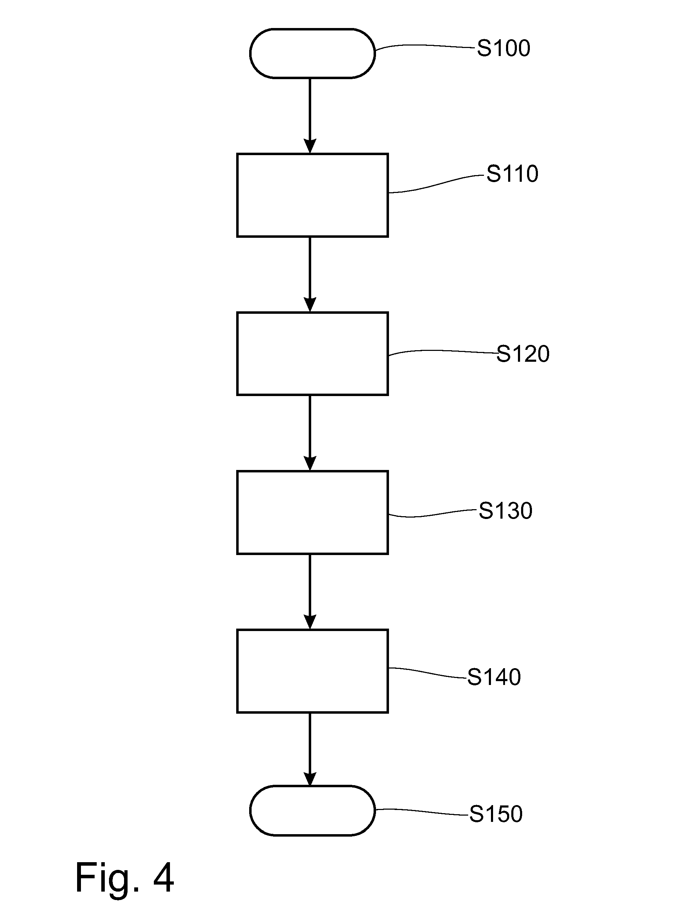

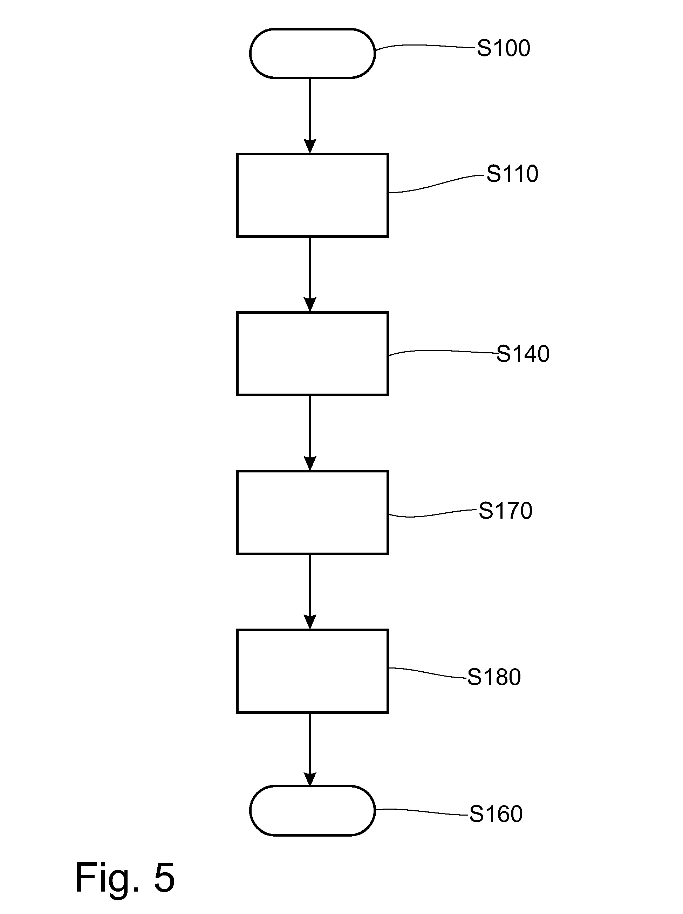

Zu diesem Zweck weist die Kupplungsanordnung 100 gemäß einem Ausführungsbeispiel die zuvor beschriebene Distanzscheibe 900 auf. Die Distanzscheibe 900 kann hierbei - innerhalb entsprechender akzeptabler Toleranzbereiche - den jeweiligen Bauteildimensionen der Innenlamellen 270, der Außenlamellen 250, der Reibbeläge 260 und der weiteren gegebenenfalls vorhandenen Bauteile angepasst werden, die einen Einfluss auf das Lamellenspiel S haben. Hierbei kann das Lamellenspiel sowohl auf Basis zuvor vermessener Bauteildimensionen, als auch im Rahmen einer (Teil-) Montage der Kupplungsanordnung 100 und einer entsprechenden Bestimmung oder Messung des Lamellenspiels entlang der Drehachse 300 erfolgen, wie nachfolgend im Zusammenhang mit den Fig. 4 und 5 noch näher beschrieben wird.

Ist das Lamellenspiel S auf eine der beschriebenen Arten und Weisen bestimmt, kann dann eine entsprechende Distanzscheibe 900 beispielsweise aus einem Satz vorgefertigter Distanzscheiben eingesetzt werden. Diese kann selbstverständlich auch individuell eingeschliffen werden. Nach dem Einsetzen der entsprechenden Distanzscheibe 900 kann dann das Gehäuse 110 der Kupplungsanordnung 100 nach Fertigstellung der Montage beispielsweise mit den in Fig. 1 gezeigten Verschweißungen 870, 880, 140 verschlossen werden.

Die Distanzscheibe 900 stellt hierbei eine Ausführungsform einer Spieleinstellungsstruktur 905 dar, die derart ausgebildet und angeordnet ist, sodass diese das Spiel entlang der Drehachse 300 zwischen den Reibflächen 230, 240 in einem vorbestimmten Zustand festlegt. Bei dem vorbestimmten Zustand kann es sich beispielsweise um einen neuwertigen Zustand, aber auch um einen Wartungszustand, einen verschleißfreien oder verschleißarmen Zustand oder einen anderen definierten Zustand handeln.

Die Distanzscheibe 900 steht hierbei unmittelbar mit dem ersten Bauteil 280, also der zweiten Gehäuseschale 130 bzw. dem Gehäuse 110, und dem zweiten Bauteil, also der vorderen Nabe 580, über ihre Zuführung 810 für das flüssige Medium in dem zweiten Volumen 740 in Kontakt. Die Distanzscheibe 900 weist hierbei eine erste Hauptoberfläche 1130 und eine der ersten Hauptoberfläche 1130 gegenüberliegende zweite Hauptoberfläche 1140 auf, die parallel zueinander ausgerichtet sind. Bei der in Fig. 1 gezeigten Distanzscheibe 900 sind diese darüber hinaus senkrecht zu der Drehachse 300 ausgerichtet. Die beiden Hauptoberflächen 1130, 1140 liegen hierbei an jeweiligen Gegenflächen des ersten Bauteils 280 und des zweiten Bauteils 290 an.

Die Distanzscheibe 900 ist hierbei einstückig ausgebildet, stellt also eine im Wesentlichen ringförmige Struktur bzw. scheibenförmige Struktur dar, die entlang der Drehachse 300 eine Ist-Dicke aufweist, sodass sich zwischen den Reibflächen 230, 240 ein Spiel einstellt, welches eine erste vorbestimmte Bedingung zumindest während eines Bereitstellens oder Herstellens der entsprechenden Kupplungsanordnung 100 erfüllt. Die erste Bedingung kann beispielsweise so aussehen, dass das Spiel der Reibflächen 230, 240 in einem vorgegebenen Intervall liegt, welches durch einen oberen und einen unteren Grenzwert beschränkt ist.

Ebenso kann die Ist-Dicke der Distanzscheibe 900 derart gewählt sein, dass diese und eine Soll-Dicke der Distanzscheibe 900 eine zweite vorbestimmte Bedingung erfüllen. Diese kann beispielsweise darin bestehen, dass eine Differenz zwischen der Ist-Dicke und der Soll-Dicke betragsmäßig kleiner als eine obere Grenze ist. Die genannten Grenzwerte können hierbei derart gewählt werden, dass die Kupplungsanordnung 100 ordnungsgemäß funktioniert, also beispielsweise eine saubere Trennung des Drehmomentflusses, andererseits jedoch auch ein zuverlässiges und rasches Einkuppeln ermöglicht. Darüber hinaus können die entsprechenden Grenzwerte beispielsweise auch dahin gehend gewählt sein, dass die Kupplungsanordnung 100 mit einer vordefinierten Wahrscheinlichkeit eine bestimmte Laufleistung oder Betriebsdauer übersteht. Anders ausgedrückt können die betreffenden Grenzwerte in Abhängigkeit von der anvisierten Lebensdauer der Kupplungsanordnung 100 bestimmt werden.

Bei der in Fig. 1 gezeigten Distanzscheibe 900 handelt es sich um die Spieleinstellungsstruktur 905. Bei anderen Ausführungsbeispielen kann die Spieleinstellungsstruktur 905 eine Distanzscheibe 900 umfassen, gegebenenfalls jedoch auch ohne eine solche implementiert werden. Unabhängig hiervon gilt das zuvor Gesagte auch im Hinblick auf die Spieleinstellungsstruktur 905 bei weiteren Ausführungsbeispielen einer Kupplungsanordnung 100.

Die Spieleinstellungsstruktur 905 ist hierbei in einem Inneren des Gehäuses 110, also in seinem Innenraum angeordnet. Hierdurch kann es möglich sein, den zur Verfügung stehenden Bauraum dadurch effektiver zu nutzen, dass gerade keine entsprechende Spieleinstellungsstruktur im Außenbereich der Kupplungsanordnung 100, außerhalb des Gehäuses 110, implementiert ist. So wird bei konventionellen Kupplungen das Spiel bzw. Luft- oder Lüftspiel an den Lamellenbelägen häufig über Sprengringe oder Lamellen unterschiedlicher Dicke eingestellt. Gerade die Verwendung von Sprengringen, die außerhalb des entsprechenden Gehäuses eingesetzt werden, führen jedoch in axialer Richtung, also entlang der Drehachse 300, zu einem erheblichen Mehrbedarf an Bauraum. Dieser steht dann für andere Komponenten der Kupplungsanordnung 100 nicht mehr oder höchstens eingeschränkt zur Verfügung. Eine Implementierung unterschiedlich dicker Lamellen kann dazu führen, dass die Herstellung einer entsprechenden Kupplungsanordnung aufwendiger wird, da einerseits die entsprechenden Lamellen in den entsprechenden Dicken zum Einstellen des Lüftspiels vorliegen müssen, sodass gegebenenfalls aufgrund von auftretenden Toleranzen zu einigen gefertigten Lamellen keine entsprechenden Gegenlamellen zur Verfügung stehen, um das anvisierte Lüftspiel zu erzielen.

Anders ausgedrückt kann so ein Ausführungsbeispiel einer Kupplungsanordnung mehr Bauraum für andere Komponenten der Kupplungsanordnung 100, beispielsweise für einen oberen Federsatz, also die ersten Federelemente 430 des Torsions- bzw. Schwingungsdämpfers 420 ermöglichen, wenn das Belaglüftspiel an anderer Stelle, nämlich im Inneren des Gehäuses 110 mithilfe der Spieleinstellungsstruktur 905 eingestellt wird.

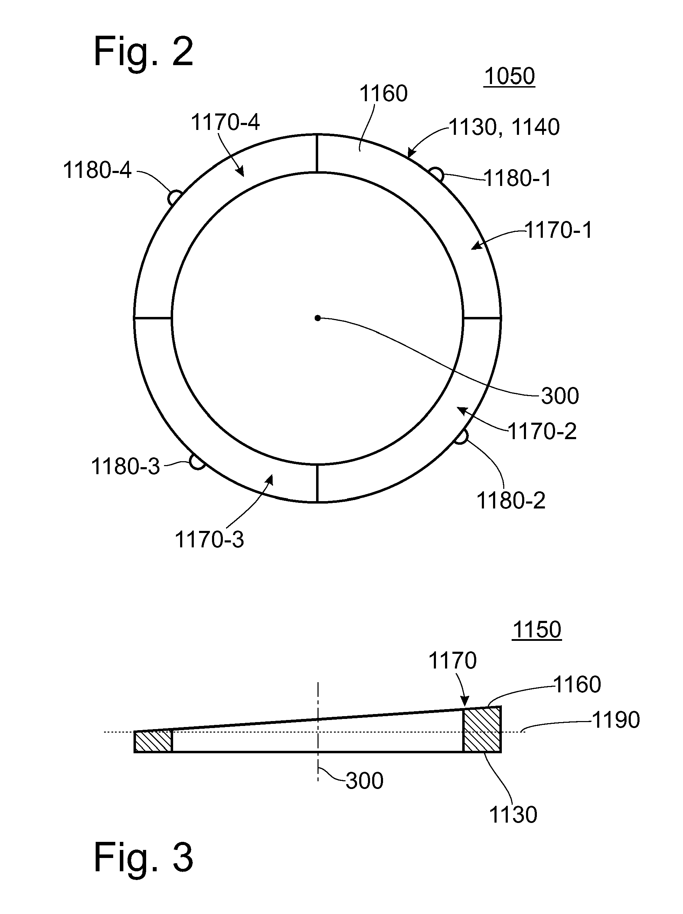

Die Distanzscheibe 900 kann darüber hinaus auch als zwei- oder mehrteilige Lösung implementiert werden, wie nachfolgenden im Zusammenhang mit den Fig. 2 und 3 noch näher erläutert wird. Bei der zwei- oder mehrteiligen Lösung kann diese ein erstes Distanzscheibenbauteil und ein zweites Distanzscheibenbauteil umfassen, welche entlang ihres Umfangs oder entlang einer senkrecht zu der Drehachse 300 verlaufenden Geraden (im mathematischen Sinn) vollständig oder abschnittsweise ein keilförmiges Profil aufweisen. Auch im Falle einer einteiligen Lösung einer Distanzscheibe 900 kann diese ein entsprechendes Profil aufweisen, wenn das erste und/oder das zweite Bauteil 280, 290 ebenfalls ein entsprechendes Profil aufweist. Hierdurch kann durch ein Verdrehen oder ein Verschieben der beiden Distanzscheibenbauteile zueinander eine Dicke der Distanzscheibe entlang der Drehachse 300, also entlang der axialen Richtung aufgrund der Keilwirkung verändert werden. Die Verwendung von jeweils zwei entsprechenden keilförmigen Profilen mit gleichen Steigungen ermöglicht die Implementierung paralleler Hauptoberflächen 1130, 1140 einer solchen Distanzscheibe 900.

Durch das Einsetzen einer solchen zwei- oder mehrteiligen Distanzscheibe 900, also einer Distanzscheibe 900 mit einer Mehrzahl von Distanzscheibenbauteilen kann so durch ein Verdrehen oder Verschieben der zweiten Gehäuseschale 130 gegenüber der vorderen Nabe 580 im Falle der in Fig. 1 gezeigten Einbauposition das Lamellenspiel S zwischen den Reibflächen 230, 240 eingestellt werden.

Der zweite Gehäusedeckel 130 weist bei dem in Fig. 1 gezeigten Ausführungsbeispiel einer Kupplungsanordnung 100 einen ebenen Abschnitt 910 an einer Außenfläche 915 des Gehäuses 110 auf, an die die Anschweißschraube 160 zur Befestigung der Kupplungsanordnung 100 an einem Motor oder einem anderen Antriebsaggregat befestigt ist. Die Anschweißschraube 160 ist zu diesem Zweck über eine Verschweißung 920 mit dem ebenen Abschnitt 910 des Gehäuses 110 verbunden. Die Anschweißschraube 160 stellt hierbei eine mögliche Ausgestaltung der Befestigungsstruktur 165 dar. Aber auch andere Befestigungsstrukturen 165 können implementiert werden, wie beispielsweise Befestigungsbleche, Zapfen, andere Gewinde oder Steckverbindungen.

Das Gehäuse 110 bzw. die zweite Gehäuseschale 130 weist jedoch an der dem Innenvolumen zugewandten Innenfläche 220 in diesem Bereich, auf Höhe des ebenen Abschnitts 910, eine Ausnehmung 930 auf, sodass die zweite Gehäuseschale 130 in diesem Bereich eine geringere Materialstärke als in anderen Bereichen aufweist. Genauer gesagt ist die zweite Gehäuseschale 130 aus einem blechartigen Werkstück umgeformt und weist daher - abgesehen von dem oben beschriebenen Bereich - eine im Wesentlichen konstante Materialstärke auf. Die zweite Gehäuseschale 130 kann so beispielsweise durch ein Tiefziehen hergestellt werden.

Durch das oben beschriebene Zusammenfallen des ebenen Abschnitts 910 und der Ausnehmung 930 ist es möglich, den Träger 390 für die Außenlamellen 250 derart zu gestalten, dass dieser bis in die Ausnehmung 930 hineinragt, zumindest jedoch zu der Innenfläche 220 des Gehäuses 110 beabstandet ist. Dies ermöglicht es, auch die Außenlamelle 250-1 als ebene Scheibe, also als scheibenförmiges Bauteil 295 auszuführen, ohne eine Berührung des Abschnitts 370-1 oder der weiteren Mitnehmerfläche 380-1 auch unter schwierigen Betriebsbedingungen mit dem Gehäuse 110 befürchten zu müssen. Hierdurch kann eine zu der Außenlamelle 250-2 identische Außenlamelle 250-1 eingesetzt werden, ohne dass besondere Vorkehrungen im Bereich des Abschnitts 370 oder anderer gestalterischer Merkmale derselben berücksichtigt werden müssen.

Eine solche Ausnehmung 930, die einem ebenen Abschnitt 910 an dem Gehäuse 110 gegenüberliegt, kann beispielsweise durch das Schaffen eines sogenannten S-Schlags im Bereich der zweiten Gehäuseschale 130 erfolgen. Der S-Schlag kann hierbei während des Umformens, beispielsweise während des Tiefziehens, erzeugt werden und entlang des ganzen Umfangs vorgesehen werden, wohingegen die ebenen Abschnitte 910 sich entlang der Umfangsrichtung auf enge Raumbereiche beschränken können, in denen eine Verbindung mit der Anschweißschraube 160 erfolgen soll. Ist der S-Schlag in die zweite Gehäuseschale 130 eingebracht worden, kann dann durch ein Eindrücken derselben im Bereich der zu erzeugenden ebenen Abschnitte 910 dieser bereitgestellt werden. Das hierbei in das Innere des Gehäuses 110 eindringende Material, also das der Innenfläche 220 der zweiten Gehäuseschale 130 eindringende Material kann dann beispielsweise durch ein Abdrehen oder ein anderes spanendes Verfahren entfernt werden, um die Ausnehmung 930 zu schaffen.

Die im Zusammenhang mit Fig. 1 beschriebene Maßnahme der Schaffung des ebenen Abschnitts 910 zur Aufnahme der Anschweißschraube 160 oder eines anderen Zapfens zur Befestigung der Kupplungsanordnung an einem Antriebsaggregat oder einer anderen Einheit kann beispielsweise bei einer Kupplungsanordnung 100 sinnvoll oder notwendig sein, bei der eine besondere Lage des Antriebsstrangs bzw. seiner Komponenten notwendig ist. So handelt es sich bei der in Fig. 1 gezeigten Kupplungsanordnung 100 beispielsweise um eine solche, die für einen Quereinbau, also für eine Montage quer zur Fahrzeuglängsachse bestimmt ist. Eine solche Kupplungsanordnung 100 kann so beispielsweise im Rahmen eines Automatikgetriebes für einen Quereinbau an der Vorderachse herangezogen werden. Ausführungsbeispiele einer solchen Kupplungsanordnung sind jedoch bei Weitem nicht auf solche Kupplungsanordnungen beschränkt. Sie können vielmehr auch für längs eingebaute Motoren und Getriebeeinheiten herangezogen werden.

Die Anbindung eines nassen Anfahrelements, also beispielsweise der in Fig. 1 gezeigten Kupplungsanordnung 100, kann gegebenenfalls eine besondere geometrische Gestaltung des zur Verfügung stehenden Bauraums mit sich bringen. Diese kann sich beispielsweise in einem besonderen Deckelradius, also einem Radius der zweiten Gehäuseschale 130, der Anordnung der einen oder mehreren Belaglamellen, der Tellerfedern und anderer Bauteile niederschlagen, die häufig axial nebeneinander eingebaut werden und entsprechend entlang der axialen Richtung, also entlang der Drehachse 300, einen nicht unerheblichen Bauraum benötigen. Anders ausgedrückt behindern sich gegebenenfalls die vorgenannten Komponenten quasi gegenseitig. Es besteht daher der bereits oben genannte Bedarf daran, axialen Bauraum einzusparen, und so eine effektivere Nutzung des zur Verfügung stehenden Bauraums zu ermöglichen.

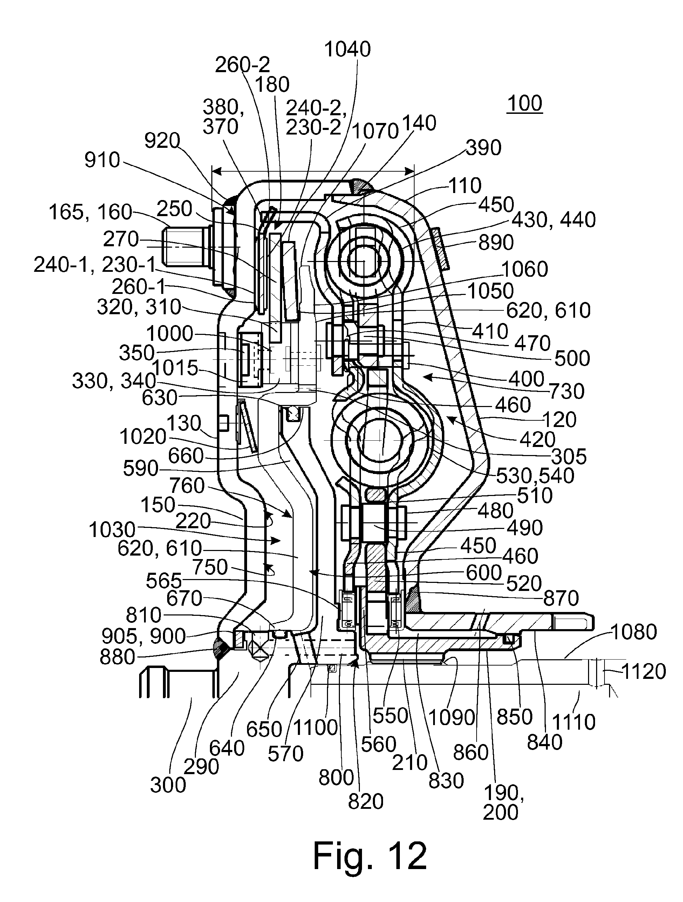

Hierdurch kann es gegebenenfalls verhindert werden, dass Kompromisse bezüglich der Geometrie der betreffenden Bauteile auf Kosten ihrer Funktion bzw. ihres Herstellungspreises implementiert und gefunden werden müssen, wenn axial kein ausreichender Bauraum vorhanden ist. So kann es beispielsweise notwendig sein, wie auch noch im Zusammenhang mit Fig. 12 gezeigt wird, eine Außenverzahnung einer Belaglamelle zu kröpfen, um mit dem Außenlamellenträger 390 gesteckt werden zu können. Eine solche Kröpfung wirkt sich jedoch gegebenenfalls stark auf die Herstellungskosten der einzelnen Belaglamelle aus.

Ohne den Einsatz einer Kupplungsanordnung 100 gemäß einem Ausführungsbeispiel kann zwar die Kröpfung gegebenenfalls durch den Einsatz des zuvor beschriebenen S-Schlags ausgebildet werden, sodass die Belaglamellen nicht gekröpft werden müssen, dies kann jedoch auf Kosten des für andere Komponenten zur Verfügung stehenden Bauraums gehen. So kann dadurch gegebenenfalls auch weniger Bauraum für die Befestigungsstrukturen 165, also beispielsweise die Anbindungsteile, wie Anschweißschrauben, Anbindungsbleche und andere entsprechende Strukturen verbleiben.

Besonders herausfordernd wird die Situation, wenn die Anbindung zu dem Motor oder dem anderen Antriebsaggregat derart erfolgen muss, dass die Belaglamelle und der Tellerfedersatz auf gleichgroßen Radien liegen sollen. In einem solchen Fall kann der Federsatz bei einer konventionellen Lösung nicht optimal auf den gewünschten Durchmesser ausgelegt werden oder die Lamellenverzahnung muss, wie in Fig. 12 dargestellt ist, gegebenenfalls gekröpft werden. Durch diese konventionellen Lösungen kann jedoch gegebenenfalls der Bauraum nicht ausreichen, um die weiteren Bauteile der Kupplungsanordnung 100 auf ihre Funktion hin zu optimieren. Anders ausgedrückt kann bei einer solchen konventionellen Lösung gegebenenfalls der zur Verfügung stehende Bauraum nicht so effizient genutzt werden, wie dies im Zusammenhang mit einer Kupplungsanordnung 100 gemäß einem Ausführungsbeispiel möglich sein kann.

Ein Ausführungsbeispiel einer Kupplungsanordnung 100 kann es so ermöglichen, die Stahllamellen inklusive ihrer Verzahnung billiger herzustellen, da diese eben, also scheibenförmig, ausgeführt werden können und ein entsprechender Federsatz des Torsionsdämpfers bzw. des Schwingungsdämpfers 420 nicht auf Kosten einer ebenen Lamelle signifikant verkleinert werden muss.

Bei der in Fig. 1 gezeigten Kupplungsanordnung 100 ist so der ebene Abschnitt 910 durch eine lokale Eindrückung in der Deckelschale, also der zweiten Gehäuseschale 130, hervorgerufen worden, wobei das durch das Eindrücken in das Innere des Gehäuses 110 eingedrungene Material durch ein spanabhebendes Verfahren, also beispielsweise durch ein Abdrehen, entfernt wurde. Dies erlaubt es, eine ebene Lamellengestaltung, also die Außenlamelle 250 als scheibenförmiges Bauteil 295 zu implementieren, ohne zusätzlichen axialen Bauraum hierfür zu beanspruchen. Anders ausgedrückt kann gegenüber einer Lösung, wie sie später im Zusammenhang mit Fig. 12 noch kurz erläutert wird, gegebenenfalls bei gleichbleibendem axialen Bauraum implementiert werden.

Lediglich der Vollständigkeit halber soll an dieser Stelle noch erwähnt werden, dass das Anpresselement 620 nicht über eine formschlüssige Verbindung mit dem Gehäuse 110 gekoppelt ist. Werden also die durch die Nase 690 und andere Komponenten hervorgerufene kraftschlüssige Verbindung bzw. reibschlüssige Verbindung überwunden, ist das Anpresselement 620 gegenüber dem Gehäuse 110 "frei" drehbar. Eine solche Situation kann beispielsweise bei einem abrupten Drehzahlwechsel ohne ein erneutes Einkuppeln der Kupplungsanordnung 100 erfolgen. Beispiele hierfür stellen ein Abbremsen des Fahrzeugs ausgehend von einer hohen Motordrehzahl zum Stillstand (Stillstand des Abtriebsbauteils 190) dar, um nur ein Beispiel zu nennen. Die freie Drehbarkeit des Anpresselements 620 kann in einer solchen Situation gegebenenfalls zu einer Geräuschentwicklung aus dem Bereich der Kupplungsanordnung 100 führen, was beispielsweise vom Fahrer als störend empfunden werden kann.

Fig. 2 zeigt ein Distanzscheibenbauteil 1150, wie es beispielsweise als erstes oder zweites Distanzscheibenbauteil im Rahmen einer Distanzscheibe 900 zum Einsatz kommen kann. So kann beispielsweise eine Distanzscheibe 900 eine erste Distanzscheibe und eine zweite Distanzscheibe umfassen, die beispielsweise entsprechend dem Distanzscheibenbauteil 1150 aus Fig. 2 ausgeformt sind. Eine solche Distanzscheibe 900 mit wenigstens einem Distanzscheibenbauteil 1150 kann so die Spieleinstellungsstruktur 905 bilden. Alternativ kann auch die vollständige Distanzscheibe 900 derart ausgeführt werden, wie sie beispielsweise in Fig. 2 dargestellt ist. In einem solchen Fall kann das erste und/oder das zweite Bauteil 280, 290 eine entsprechend ähnliche Ausgestaltung, wie sie nunmehr beschrieben wird, aufweisen.

Das Distanzscheibenbauteil 1150 weist eine Anlagefläche 1160 auf, die jeweils vollständig oder abschnittsweise entlang einer geschlossenen Linie ein keilförmiges Profil 1170 aufweist. Genauer gesagt weist das Distanzscheibenbauteil 1150 aus Fig. 2 vier entsprechende keilförmige Profile 1170-1, ..., 1170-4 auf, die entlang des Umfangs des Distanzscheibenbauteils 1150, also entlang einer kreisförmigen, geschlossenen Linie angeordnet sind. Die geschlossene, kreisförmige Linie steht hierbei senkrecht zu der Drehachse 300. Die vier keilförmigen Profile 1170 sind hierbei identisch ausgeformt und derart angeordnet, dass das Distanzscheibenbauteil 1150 eine vierzählige Rotationssymmetrie aufweist. Bei anderen Ausführungsbeispielen können natürlich die Zahl und die Ausgestaltung der Profile 1170 von der hier beschriebenen Variante abweichen.

Werden nun zwei entsprechende Distanzscheibenbauteile 1150 als erstes und zweites Distanzscheibenbauteil derart angeordnet, dass die entsprechenden keilförmigen Profile 1170 aufeinander liegen, kann durch ein Verdrehen der beiden Distanzscheibenbauteile 1150 zueinander eine Dicke der resultierenden Distanzscheibe 905 (nicht gezeigt in Fig. 2) verändert werden. Die keilförmigen Profile 1170 der beiden Distanzscheibenprofile sind in diesem Fall also einander zuweisend angeordnet. Weisen die betreffenden Distanzscheibenbauteile 1150 an der in Fig. 2 nicht gezeigten Hauptoberfläche 1130 bzw. 1140 eine senkrechte Ausrichtung derselben zu der Drehachse 300 auf, kann hierdurch durch ein entsprechendes Verdrehen der beiden Distanzscheibenbauteile 1150 zueinander eine Dicke zwischen den beiden Hauptoberflächen verändert werden, ohne dass hierdurch zwischen diesen ein Winkel entsteht, diese also weiterhin parallel zueinander verlaufen.

Das in Fig. 2 gezeigte Distanzscheibenbauteil 1150 weist darüber hinaus ebenso vier Vorsprünge 1180-1, ..., 1180-4 in Form von Nasen auf, mit deren Hilfe und entsprechenden Aussparungen in dem ersten oder zweiten Bauteil 280, 290 eine Verdrehung des entsprechenden Distanzscheibenbauteils 1150 durch Schaffen einer formschlüssigen Verbindung unterbunden werden kann. Hierdurch kann also das Distanzscheibenbauteil 1150 gegen ein Verdrehen gegenüber dem ersten bzw. zweiten Bauteil 280, 290 gesichert werden, um so eine Einstellbarkeit des Lüftspiels bzw. Spiels zwischen den Reibflächen 230, 240 zu verbessern.

Selbstverständlich kann bei einem Distanzscheibenbauteil 1150 auch die Zahl und Ausgestaltung der keilförmigen Profile 1170 bzw. der entsprechenden Anlageflächen 1160 abgeändert werden. So kann ein Distanzscheibenbauteil 1150 durchaus auch eine größere oder eine geringere Anzahl von keilförmigen Profilen 1170 aufweisen. So kann es auch möglich sein, dass die Anlagefläche 1160 genau ein keilförmiges Profil, jedoch auch eine entsprechende Mehrzahl von keilförmigen Profilen 1170 aufweist. Im Falle eines einzelnen keilförmigen Profils 1170 kann sich dieses entlang der geschlossenen Linie vollständig oder nur abschnittsweise erstrecken. Gleiches gilt ebenso im Falle einer Implementierung einer Mehrzahl keilförmiger Abschnitte 1170.

Wie bereits zuvor kurz erwähnt wurde, kann auch eine Distanzscheibe 900 eine entsprechende Ausgestaltung wie ein Distanzscheibenbauteil 1150 aufweisen. In einem solchen Fall kann es ratsam sein, das betreffende Gegenbauteil, also das erste oder zweite Bauteil 280, 290 mit einer entsprechend ausgeformten Anlagefläche 1160 zu implementieren, sodass die Anlagefläche 1160 des betreffenden ersten oder zweiten Bauteils 280, 290 sowie die Anlagefläche 1160 der Distanzscheibe 900 in diesem Fall die Spieleinstellungsstruktur 905 bildet. Gegebenenfalls kann die Implementierung einer Distanzscheibe 900 auch vollständig entfallen, wenn die entsprechenden Anlageflächen 1160 sowohl an dem ersten Bauteil 280, wie auch an dem zweiten Bauteil 290 implementiert sind und diese dann die Spieleinstellungsstruktur 905 bilden.

Fig. 3 zeigt eine Querschnittsdarstellung eines weiteren Distanzscheibenbauteils 1150, bei dem entlang einer Geraden 1190, bei der es sich um eine Gerade 1190 im mathematischen Sinne handelt und die senkrecht zu der Drehachse 300 verläuft, die betreffende Anlagefläche 1160 gegenüber der Hauptoberfläche 1130 bzw. 1140 vollständig ein keilförmiges Profil 1170 aufweist. Wird nun wiederum eine Distanzscheibe 900 auf Basis zweier entsprechender Distanzscheibenbauteile 1150 implementiert, bei der die beiden keilförmigen Profile 1170 einander zugewandt sind, sodass die beiden Hauptoberflächen 1130, 1140 einander abgewandt sind, kann eine Dicke der Distanzscheibe 900 durch ein Verschieben der Distanzscheibenbauteile 1150 zueinander verändert werden.

Auch hier kann eine Distanzscheibe 900 auf Basis einer Struktur eines Distanzscheibenbauteils 1150 implementiert werden, wenn das entsprechende Gegenbauteil, also das erste oder zweite Bauteil 280, 290 eine entsprechend ausgeformte Anlagefläche 1160 aufweist, an der sich die Anlagefläche 1160 des Distanzscheibenbauteils 1150 abstützt. In einem solchen Fall bildet die entsprechende Anlagefläche 1160 des ersten oder zweiten Bauteils 280, 290 sowie die Distanzscheibe 900 die Spieleinstellungsstruktur 905. Eine Implementierung einer Distanzscheibe 900 kann gegebenenfalls auch dann entfallen, wenn beide Bauteile, also das erste und das zweite Bauteil 280, 290 entsprechende Anlageflächen 1160 aufweisen, wie diese beispielsweise in Fig. 3 gezeigt sind.

Das Distanzscheibenbauteil 1150 aus Fig. 3 zeigt keine entsprechenden Vorsprünge 1180, die gegen ein Verdrehen des Distanzscheibenbauteils dieses sichern. Entsprechende Vorsprünge 1180 können jedoch ebenso bei diesem Bauteil implementiert werden, um auch hier über das Schaffen einer formschlüssigen Verbindung ein Verschieben bzw. Verdrehen des Distanzscheibenbauteils 1150 gegenüber dem betreffenden Gegenbauteil, also gegenüber dem ersten oder zweiten Bauteil 280, 290, zu unterbinden. Ergänzend oder alternativ kann bei allen Distanzscheibenbauteilen 1150 bzw. bei allen Distanzscheiben 900 auch eine weitere beispielsweise ringförmige Nut mit einem Außendurchmesser des betreffenden Distanzscheibenbauteils 1150 bzw. der entsprechenden Distanzscheibe 900 implementiert werden, um eine entsprechende formschlüssige Verbindung zu schaffen, um ein Verschieben des betreffenden Bauteils zu unterbinden.

Selbstverständlich kann das keilförmige Profil 1170 auch bei einer Anlagefläche 1160, wie sie in Fig. 3 gezeigt ist, die sich also entlang einer entsprechenden Geraden 1190 erstreckt, auch nur abschnittsweise implementiert sein.

Fig. 4 zeigt ein Flussdiagramm eines Ausführungsbeispiels eines Verfahrens zum Bereitstellen einer Kupplungsanordnung 100 gemäß einem Ausführungsbeispiel. Nach einem Start des Verfahrens in Schritt S100 wird zunächst im Rahmen eines Schritts S110 des Bereitstellens wenigstens einen Teil der Komponenten der Kupplungsanordnung 100 bereitgestellt. Die Komponenten der Kupplungsanordnung 100, die während des Schritts S110 bereitgestellt werden können, umfassen so das Gehäuse 110, die zweite Gehäuseschale 130, die erste Reibfläche 230, die zweite Reibfläche 240, das Anpresselement 620 und die Spieleinstellungsstruktur 905. In diesem Zusammenhang ist jedoch zu beachten, dass in diesem Schritt bei Weitem nicht alle Komponenten der Kupplungsanordnung 100 bereitgestellt werden müssen. So kann beispielsweise bei dem in Fig. 4 gezeigten Ausführungsbeispiel während des Bereitstellens wenigstens des Teils von Komponenten S110 zunächst nur die erste Reibfläche 230, die zweite Reibfläche 240, das Anpresselement 620 und gegebenenfalls das Gehäuse 110 bzw. die zweite Gehäuseschale 130 bereitgestellt werden.

In einem anschließenden Schritt S120 des Bestimmens einer Soll-Dicke der Spieleinstellungsstruktur 905 kann dann durch ein Bereitstellen der entsprechenden Dicken entlang der Drehachse 300 der zuvor genannten Komponenten die Soll-Dicke der Spieleinstellungsstruktur 905 ermittelt bzw. berechnet werden. Ist so beispielsweise ein Soll-Spiel zwischen den Reibbelägen 230, 240 konstruktionsbedingt bekannt, so kann die Soll-Dicke der Spieleinstellungsstruktur 905 als Differenz zwischen einem Abstand zwischen dem ersten und dem zweiten Bauteil 280, 290 und der Summe der entsprechenden Dicken der anderen Komponenten bestimmt werden.

In einem Schritt S130 des Bereitstellens einer Spieleinstellungsstruktur 905 kann diese dann derart bereitgestellt werden, dass diese eine Ist-Dicke aufweist, sodass die in dem Schritt S120 bestimmte Soll-Dicke sowie die Ist-Dicke der bereitgestellten Spieleinstellungsstruktur eine zweite vorbestimmte Bedingung erfüllt. Dies kann so aussehen, dass eine Differenz zwischen der Ist-Dicke und der bestimmten Soll-Dicke betragsmäßig kleiner als ein oberer Grenzwert ist. Hierbei kann die entsprechende Spieleinstellungsstruktur beispielsweise auf Anforderung mit einer entsprechenden Ist-Dicke gefertigt werden oder aus einem Lager oder einem anderen Reservoir entnommen werden. Selbstverständlich können bei anderen Ausführungsbeispielen auch andere entsprechende zweite vorbestimmte Bedingungen herangezogen werden.

Anschließend werden in einem Schritt S140 die bereitgestellten Komponenten montiert, bevor in Schritt S150 das Verfahren endet.

Praktischerweise können also entsprechende Höhen bzw. Dicken entlang der Drehachse 300 der notwendigen Komponenten bereits vor dem Zusammenbau bzw. dem Montieren der Kupplungsanordnung 100 in Schritt S140 gemessen oder auf andere Art und Weise bestimmt werden, sodass eine entsprechende Distanzscheibe 900 bereitgestellt (Schritt S130) und danach verbaut werden kann.

Fig. 5 illustriert ein weiteres Ausführungsbeispiel des Verfahrens zum Bereitstellen einer Kupplungsanordnung 100 anhand eines Flussdiagramms. Auch hier wird wiederum nach einem Start des Verfahrens in Schritt S100 zunächst in einem Schritt S110 wenigstens ein Teil der Komponenten der Kupplungsanordnung 100 bereitgestellt. Hierbei wird jedoch auch die Spieleinstellungsstruktur 905, also beispielsweise eine Distanzscheibe 900, die optional einteilig oder auf Basis mehrerer Distanzscheibenbauteile 1150 implementiert sein kann, bereitgestellt.

In dem Schritt S140, der dem Schritt S110 in diesem Ausführungsbeispiel folgt, wird auf Basis der in Schritt S110 bereitgestellten Komponenten die Kupplungsanordnung wenigstens so weit montiert, dass eine Bestimmung des Spiels möglich ist. Zu diesem Zweck kann es ratsam sein, beispielsweise das Gehäuse 110 noch nicht zu verschließen, sondern beispielsweise nur die zweite Gehäuseschale 130 zu montieren.

In dem sich anschließenden Schritt S170 wird nun das Spiel zwischen den Reibflächen 230, 240 bestimmt. Dies kann beispielsweise durch das Messen einer Beweglichkeit einer Komponente der Kupplungsanordnung 100, also beispielsweise durch eine Messung der Beweglichkeit des Anpresselements 620 oder auch eines Bauteils, welches die erste oder die zweite Reibfläche umfasst, durchgeführt werden. Eine entsprechende Messung des Spiels kann beispielsweise mit einer Mikrometeruhr erfolgen.

Ist nunmehr das Spiel zwischen den Reibflächen 230, 240 bestimmt worden, unterscheiden sich die beiden in Fig. 5 dargestellten Ausführungsbeispiele des Verfahrens zum Bereitstellen der Kupplungsanordnung 100 hinsichtlich des nächsten Schritts, bevor das Verfahren in dem sich daran anschließenden Schritt S160 endet.

Handelt es sich bei der Spieleinstellungsstruktur 905 um eine solche, die durch ein Verschieben oder ein Verdrehen hinsichtlich ihrer Dicke veränderbar ist, kann in einem Schritt S180 des Veränderns der bereitgestellten Spieleinstellungsstruktur diese durch ein Verdrehen oder ein Verschieben der entsprechenden bereitgestellten Spieleinstellungsstruktur derart angepasst werden, dass das bestimmte Spiel einer ersten vorbestimmten Bedingung genügt, sollte dies zuvor nicht der Fall gewesen sein. Die erste vorbestimmte Bedingung kann beispielsweise dann erfüllt sein, wenn das in dem Schritt S170 bestimmte Spiel in einem Wertebereich liegt, der durch einen oberen und einen unteren Grenzwert gegeben ist. Der obere und der untere Grenzwert definieren hierbei akzeptable Spielbereiche.

Handelt es sich hingegen bei der Spieleinstellungsstruktur 905 um eine solche, bei der eine einteilige Distanzscheibe 900 mit einer konstanten Ist-Dicke eingesetzt wurde, wird im Rahmen des Schritts S180 die zuvor bereitgestellte Distanzscheibe 900 gegen eine andere Distanzscheibe 900 mit einer anderen bzw. abweichenden Ist-Dicke derart ausgetauscht, dass durch die bereitgestellte bzw. getauschte Distanzscheibe die erste vorbestimmte Bedingung erfüllt ist. Dies kann gegebenenfalls ein teilweises Demontieren der Kupplungsanordnung 100 zum Austausch bzw. Tausch der Distanzscheiben 900 erforderlich machen. Sofern die Kupplungsanordnung 100 nicht bereits zuvor vollständig montiert wurde, kann gegebenenfalls im Rahmen eines optionalen Schritts, der in Fig. 4 nicht dargestellt ist, vor dem Ende des Verfahrens in Schritt S160 die Kupplungsanordnung 100 vollständig montiert werden.

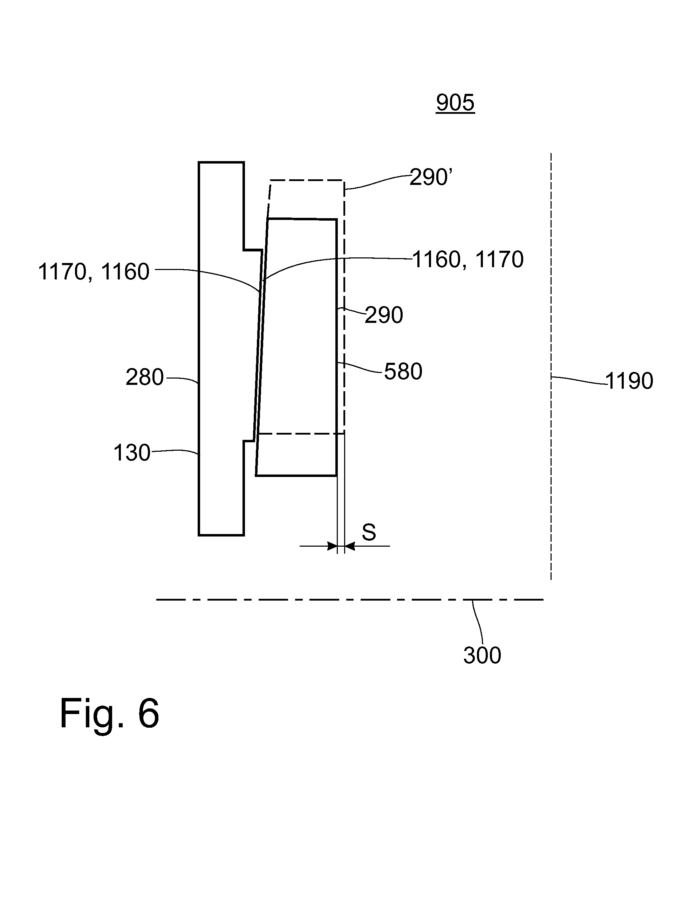

Fig. 6 illustriert eine vereinfachte, prinzipielle Darstellung der Wirkungsweise zweier Keile. Zu diesem Zweck zeigt Fig. 6 eine Querschnittsdarstellung durch Abschnitte des ersten Bauteils 280 und des zweiten Bauteils 290, wobei das zweite Bauteil 290 in zwei voneinander abweichenden Lagen dargestellt ist, bei denen das zweite Bauteil 290 senkrecht zu der Drehachse 300 verschoben wurde und die in Fig. 6 durch die Bezugszeichen 290 und 290' gekennzeichnet sind.

Hierbei handelt es sich bei dem ersten Bauteil 280 wiederum um die auch als Deckel bezeichnete zweite Gehäuseschale 130 und bei dem zweiten Bauteil 290 um die Nabe 580. Sowohl das erste Bauteil 280 wie auch das zweite Bauteil 290 weisen entsprechend jeweils Anlageflächen 1160 auf. Die Anlageflächen 1160 sind auch bei diesem Ausführungsbeispiel, wie bereits im Zusammenhang mit Fig. 3 beschrieben wurde, derart ausgestaltet, dass die beiden Anlageflächen 1160 vollständig entlang der senkrecht zu der Drehachse 300 verlaufenden Geraden 1190 ein keilförmiges Profil 1170 aufweisen. Hierdurch kann bei einer Verschiebung des zweiten Bauteils 290 relativ zu dem ersten Bauteil 280 entlang der Geraden 1190 eine Dicke der Spieleinstellungsstruktur 905 verändert werden. Wird so beispielsweise das zweite Bauteil 290 in die mit dem Bezugszeichen 290' gekennzeichneten Lage verschoben, gleiten die beiden Anlageflächen 1160 bzw. die entsprechenden keilförmigen Profile 1170 der beiden Bauteile 280, 290 aneinander entlang, sodass es zu einer Änderung der Dicke der Spieleinstellungsstruktur 905 um die Dicke S kommt. Hierdurch kann durch eine entsprechende Verschiebung der beiden Bauteile 280, 290 relativ zueinander also das Spiel der Reibflächen 230, 240 beispielsweise um die Distanz S verändert bzw. eingestellt werden.

Selbstverständlich kann auch bei einer Verschiebung entlang einer von der Geraden 1190 abweichenden Richtung häufig eine entsprechende Änderung der Dicke der Spieleinstellungsstruktur 905 realisiert werden, sofern nicht die Richtung der Verschiebung im Wesentlichen senkrecht auf der Geraden 1190 steht.

Selbstverständlich können auch bei anderen Ausführungsbeispielen nur abschnittsweise implementierte keilförmige Abschnitte 1170 an den Anlageflächen 1160 vorgesehen werden. Ebenso kann bei einer Spieleinstellungsstruktur 905, wie sie in Fig. 6 gezeigt ist und bei der keine Distanzscheibe 900 zum Einsatz kommt, ebenso ein vollständig oder abschnittsweise entlang einer geschlossenen Linie verlaufendes keilförmiges Profil 1170 implementiert werden. Wie bereits zuvor erläutert, kann die geschlossene Linie in einem solchen Fall beispielsweise kreisförmig und/oder senkrecht zu der Drehachse 300 verlaufen.

Fig. 6 zeigt so ein Ausführungsbeispiel, bei dem anstelle einer Distanzscheibe 900 die Spieleinstellungsstruktur 905 mindestens zwei keilförmige Flächen aufweist, die an dem ersten und zweiten Bauteil 280, 290, also an der als Deckel dienenden zweiten Gehäuseschale 130 und der Nabe 580, gebildet sind. Hierdurch können diese relativ zueinander verdreht oder auch verschoben werden, wodurch deren relativer Abstand bzw. Dicke S verändert und somit gegebenenfalls das Lüftspiel an den Belägen bzw. den Reibflächen 230, 240 genauer eingestellt werden kann. Mit Hilfe von Ausführungsbeispielen eines solchen Verfahrens zum Bereitstellen einer Kupplungsanordnung 100 kann so eine Lüftspieleinstellung an den Kupplungsbelägen realisiert werden.

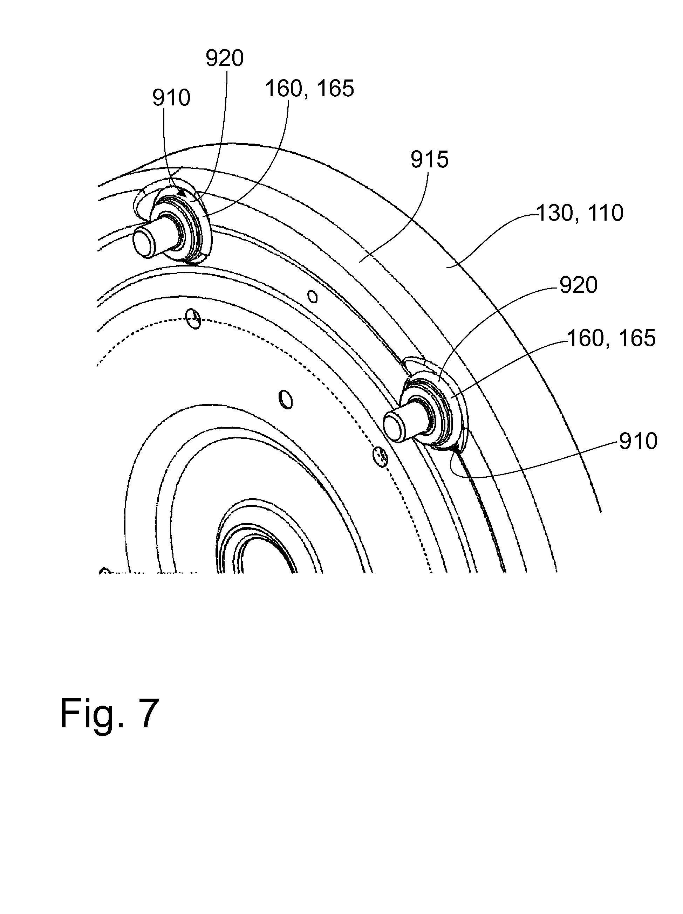

Fig. 7 zeigt eine perspektivische bzw. dreidimensionale Darstellung der zweiten Gehäuseschale 130, die auch als Deckel bezeichnet wird. An der Außenfläche 915 der zweiten Gehäuseschale 130 und damit des Gehäuses 110 sind im Bereich des S-Schlags die zuvor beschriebenen ebenen Abschnitte 910 ausgeformt worden, an die die Befestigungsstrukturen 165, genauer gesagt die Anschweißschrauben 160, über die Verschweißung 920 mit der zweiten Gehäuseschale 130 und damit dem Gehäuse 110 befestigt wurden. Die ebenen Abschnitte 910 bilden also in die Gehäuseschale bzw. Schale 130 eingedrückte Nischen für die Anschweißschrauben 160. Selbstverständlich können bei anderen Ausführungsbeispielen auch andere Befestigungsstrukturen 165 als die in Fig. 7 gezeigten Anschweißschrauben 160 verwendet werden. So können beispielsweise andere Gewinde, jedoch auch Zapfen oder Befestigungsbleche herangezogen werden, um nur einige Beispiele zu nennen. Darüber hinaus zeigt Fig. 7 zwei Befestigungsstrukturen 165. So kann grundsätzlich eine beliebige Anzahl von Befestigungsstrukturen 165 implementiert werden, also sowohl eine einzelne Befestigungsstruktur 165 wie auch eine Mehrzahl derselben.

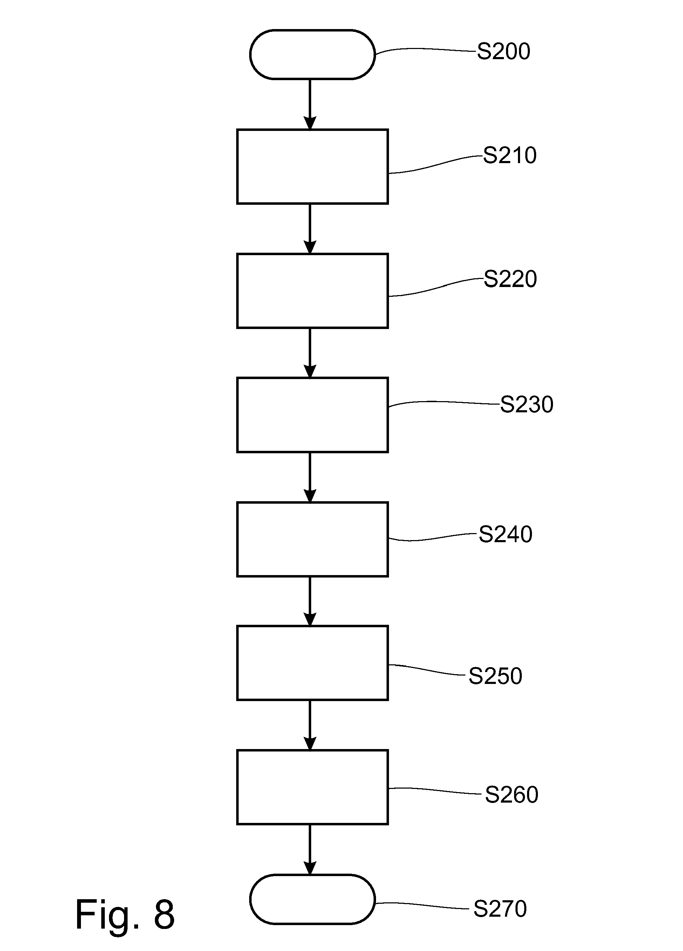

Fig. 8 zeigt ein Flussdiagramm eines Ausführungsbeispiels eines Verfahrens zum Bereitstellen einer Kupplungsanordnung 100, wie sie beispielsweise für einen Antriebsstrang eines Fahrzeugs dienen kann. Nach einem Start des Verfahrens in Schritt S200 wird zunächst in einem Schritt S210 das Gehäuse 110 aus einem blechartigen Werkstück bereitgestellt, wobei das Gehäuse 110 an der Innenfläche 220 die Ausnehmung 910 aufweist und zumindest so weit vorbereitet ist, dass an der Innenfläche 220 des Gehäuses 110 eine erste Reibfläche erzeugt werden kann. In einem anschließenden Schritt S220 wird wenigstens ein scheibenförmiges Bauteil 295 mit einer zweiten Reibfläche 240 bereitgestellt. Anschließend wird der Träger 390 in einem Schritt S230 bereitgestellt, der mit dem scheibenförmigen Bauteil 295 drehfest über die an dem radialen Ende des scheibenförmigen Bauteils 250 angeordnete Verzahnung 395 verbindbar ist, sodass das scheibenförmige Bauteil 295 und das Gehäuse 110 zueinander drehbar und parallel zu der Drehachse 300 relativ linear beweglich angeordnet werden können.

In einem anschließenden Schritt S240 wird der ebene Abschnitt 910 an der Außenfläche 915 des Gehäuses 110 derart bereitgestellt, dass die Ausnehmung 930 an einer dem ebenen Abschnitt 910 gegenüberliegenden Seite des Gehäuses 110, also an der Innenfläche 220 des Gehäuses 110, nach dem Bereitstellen des ebenen Abschnitts 910 vorliegt. Hierzu kann beispielsweise das Gehäuse 110 in dem entsprechenden Bereich eingedrückt werden, worauf sich ein Abdrehen von in die Ausnehmung 930 bei dem Eindrücken eingetretenes Material von der Innenfläche 220 des Gehäuses 110 anschließt, sodass die Ausnehmung 930 nach dem Bereitstellen des ebenen Abschnitts (S240) vorliegt. Der Schritt des Bereitstellens (S240) des ebenen Abschnitts (910) umfasst ferner ein Erzeugen der ersten Reibfläche (230) an der Innenfläche (220) des Gehäuses (110). Dieses kann ebenfalls beispielsweise durch ein Abdrehen der entsprechenden Innenfläche 220 des Gehäuses 110, also beispielsweise der zweiten Gehäuseschale 130, erfolgen.

Anschließend wird in einem Schritt S250 die Befestigungsstruktur 165 an dem ebenen Abschnitt 910 des Gehäuses 110 angebracht. Daran schließt sich ein Montieren des scheibenförmigen Bauteils 295 und des Trägers 390 in dem Gehäuse 110 im Rahmen eines Schritts S260 an, sodass die Ausnehmung 930 auf Höhe der Verzahnung 395 angeordnet ist und der Träger 390 von der Innenfläche 220 des Gehäuses 110 beabstandet ist oder sogar in diese hineinragt. Anschließend wird das Verfahren in einem Schritt S270 beendet.

Die zweite Gehäuseschale 130, also die Deckelschale, wird folglich lokal im Bereich der späteren Position der Anschweißschrauben 160 bzw. der Befestigungsstruktur 165 und damit im Bereich des S-Schlags nach innen auf ein bestimmtes Maß eingedrückt bzw. umgeformt. In den entsprechenden Deckelnischen, also den ebenen Abschnitten 910, können dann die Befestigungsstrukturen 165 untergebracht werden. Das Schalenmaterial, welches in das Innere des Gehäuses 110 eingedrückt wurde, kann später in gleicher Aufspanung mit der ersten Reibfläche nahezu kostenneutral spanabhebend abgedreht werden. Hierdurch kann Bauraum für eine ebene Belaglamelle geschaffen werden, sodass beispielsweise größere Federelemente 430, also ein größerer Federsatz für den Schwingungsdämpfer 420 eingesetzt werden kann bzw. dieser nicht aus Bauraumgründen gegebenenfalls verkleinert werden muss.

Wie Fig. 7 bereits gezeigt hat, kann so gegebenenfalls bereits an der äußeren Form des Deckels des Gehäuses 110 im Bereich der Befestigungsstrukturen 165, also beispielsweise der Anschweißschrauben 160, eine Implementierung eines Ausführungsbeispiels einer Kupplungsanordnung 100 erkennbar sein.

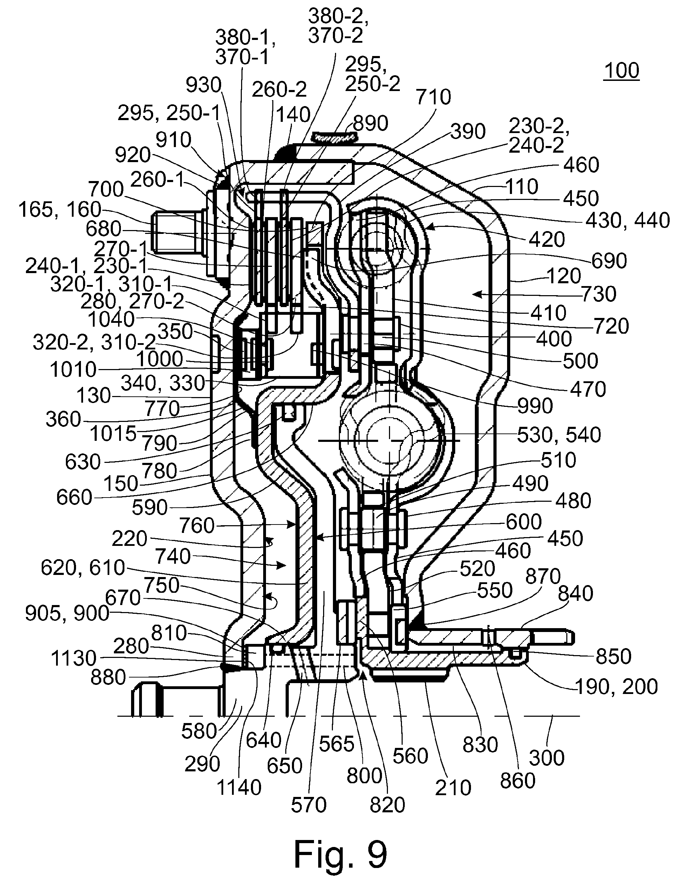

Fig. 9 zeigt ein entsprechendes Gesamtsystem einer Kupplungsanordnung 100 gemäß einem Ausführungsbeispiel, bei der das Förderbauteil 340 jedoch kolbenseitig befestigt ist.

So weist die Kupplungsanordnung 100 gemäß einem Ausführungsbeispiel, wie sie in Fig. 9 gezeigt ist, zwar auch weiterhin ein Dichtelement 360 auf, ist jedoch über seine Nietverbindung 350, welche das Dichtelement 360 mit der zweiten Gehäuseschale 130 (Deckel) verbindet, nicht mehr unmittelbar mit dem Förderbauteil 340 verbunden. Das Förderbauteil 340, welches beispielsweise in den Fig. 5 und 6 näher gezeigt ist, ist vielmehr über eine Nietverbindung 990 mit dem Anpresselement 620 formschlüssig und damit drehfest verbunden. Das Förderbauteil 340 kann so beispielsweise über weitere Nietverbindungen 1000 mit einer Mehrzahl von Blattfederelementen 1010 formschlüssig verbunden, wobei die Blattfederelemente 1010 als Teil des Dichtelements 360 ausgeführt sind. Die Blattfederelemente 1010 sind hierbei durch eine Ausstellung des Materials des Dichtelements 360 ausgeformt und daher einstückig mit diesem gefertigt. Bei anderen Ausführungsbeispielen können jedoch die Blattfederelemente 1010 auch als separate Komponenten oder aber auch im Falle einer einstückigen Ausfertigung mit dem Dichtelement 360 mithilfe anderer Herstellungsverfahren gefertigt werden.

Selbstverständlich können bei anderen Ausführungsbeispielen auch andere Formen einer Drehmomentübertragung implementiert werden. So können beispielsweise Blattfederelemente 1010 zum Einsatz kommen, bei denen beispielsweise keine Löcher zur Aufnahme von Nietverbindungen oder anderen Verbindungselementen implementiert sind. Auch kann es beispielsweise möglich sein, die Blattfederelemente 1010 zunächst an einem Außen- oder Innendurchmesser des Dichtelements 360 zu formen und diese im Rahmen eines Biegens um beispielsweise mehr als 120° nach innen umzuformen. Ebenso kann es gegebenenfalls möglich sein, über eine reibschlüssige Verbindung die entsprechende Drehmomentübertragung zu realisieren.

Da das Dichtelement 360 über die Nietverbindung 350 drehfest mit dem Deckel, also der zweiten Gehäuseschale 130, verbunden ist, ergibt sich so eine im Wesentlichen drehfeste Verbindung zwischen dem als Antriebsbauteil 150 dienenden Gehäuse 110 und dem Anpresselement 620. Das Dichtelement 360 stellt daher hier auch ein Verbindungsbauteil 1015 dar. Hierdurch ist das Anpresselement 620 im Vergleich zu der in Fig. 1 gezeigten Kupplungsanordnung 100 nun nicht mehr "frei" drehbar, sondern im Wesentlichen formschlüssig mit dem Gehäuse 110 verbunden. Auch bei einer abrupten Drehzahländerung ohne ein erneutes Einkuppeln der Kupplungsanordnung 100 kann daher eine entsprechende Geräuschentwicklung durch ein frei rotierendes Anpresselement 620 bei dieser Implementierung nicht auftreten.

Die Verbindung zwischen dem Anpresselement 620 und dem Gehäuse 110 kann hierbei nur im Wesentlichen drehfest sein, da beispielsweise aufgrund von Deformationen, thermischen Effekten oder aber aufgrund der durch die Blattfederelemente 1010 gegebenen geometrischen Verhältnisse bei einer axialen Verschiebung des Anpresselements 620 eine Verdrehung zwischen dem Anpresselement 620 und dem Gehäuse 110 auftreten kann. Unabhängig davon folgt bei dem hier gezeigten Ausführungsbeispiel das Anpresselement 620 jedoch der Drehbewegung des Gehäuses 110.

Bei der in Fig. 9 gezeigten Variante ist also das Förderbauteil 340 auf der Kolbenseite angebracht, wobei eine Verbindung zu der als Deckel dienenden zweiten Gehäuseschale 130 mittels der Blattfederelemente 1010 erfolgt, um das Drehmoment des Motors auf die Innenlamellen 270 über die Förderfläche 330 zu übertragen. Die Blattfedern oder Blattfederelemente 1010 schaffen so die Verbindung des Förderbauteils 340 zu der motorseitigen zweiten Gehäuseschale 130. Die Blattfederelemente 1010 stehen hierbei in das erste Volumen 720 hinein, sodass diese bei einer Drehung des Gehäuses 110 und damit einer Drehung des Förderbauteils 340 relativ zu dem flüssigen Medium im Inneren des Gehäuses 110 ebenfalls die Fluidförderung und damit die Schaffung des Stroms des Fluides unterstützen. Auch die Blattfederelemente 1010 sind so für die Ölförderung unterstützend.

Auch wenn zuvor im Wesentlichen von Nietverbindungen 990, 1000, 350 die Rede war, können jedoch auch andere Verbindungstechniken zur Schaffung der entsprechenden im Wesentlichen drehfesten Verbindung zwischen dem Gehäuse 110 und dem Förderbauteil 340 verwendet werden. So können die entsprechenden Nietverbindungen einzeln oder auch zusammen gegen eine andere Verbindungstechnik, beispielsweise eine Steckverbindung, jedoch auch gegen andere form-, kraft- und/oder stoffschlüssige Verbindungen getauscht oder durch solche ergänzt werden.

Auch kann bei einem entsprechenden Ausführungsbeispiel der Einsatz der Blattfederelemente 1010 gegen andere Bauteile ausgetauscht werden, sofern diese ebenfalls eine axiale Verlagerung des Anpresselements 620, also entlang der Drehachse 300, unterstützen oder zumindest jedoch nicht behindern.

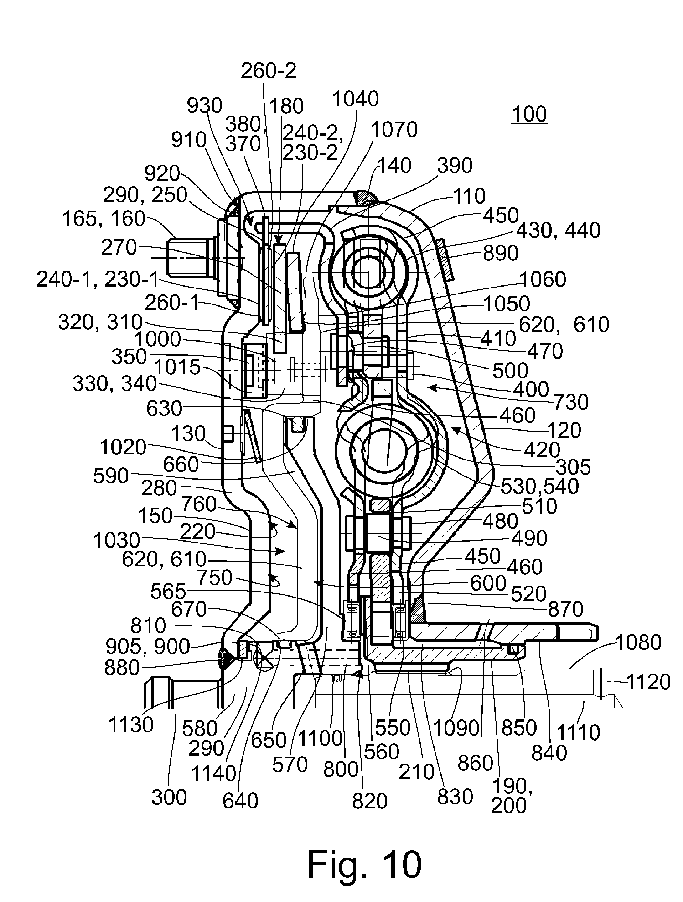

Fig. 10 zeigt ein weiteres Ausführungsbeispiel einer Kupplungsanordnung 100 gemäß einem Ausführungsbeispiel. Die Kupplungsanordnung 100 aus Fig. 10 unterscheidet sich von der in Fig. 9 gezeigten Kupplungsanordnung hinsichtlich einiger Komponenten, die im Nachfolgenden erläutert werden. Im Hinblick auf die weiteren Komponenten unterscheiden sich die beiden Kupplungsanordnungen 100 jedoch nur unwesentlich.

Zunächst ist festzuhalten, dass die Kupplungsanordnung 100, wie sie in Fig. 10 gezeigt ist, eine geringere Anzahl von Innen- und Außenlamellen 270, 250 aufweist. Genauer gesagt weist die Kupplungsanordnung 100 jeweils nur eine Außenlamelle 250 und eine Innenlamelle 270 auf. Die Innenlamelle 270 steht hierbei wiederum über ihre Mitnehmerfläche 320 des Abschnitts 310 in Eingriff mit der Förderfläche 330 des Förderbauteils 340. Entsprechend ist das Förderbauteil 340 hinsichtlich seiner Ausdehnung entlang der Drehachse 300, also entlang der axialen Richtung, kürzer ausgeführt.

Darüber hinaus unterscheidet sich die Kupplungsanordnung 100 von der in Fig. 9 gezeigten Kupplungsanordnung ferner dadurch, dass die beiden Lager 565, 550, welche die axiale Führung des Abtriebsbauteils 190, also der unteren Nabe 200, ermöglichen, bei dieser Kupplungsanordnung 100 als axiale Nadellager ausgeführt sind. Selbstverständlich können bei anderen Ausführungsbeispielen auch andere axiale und/oder radiale Wälz- oder Gleitlager sowie Mischformen zum Einsatz kommen.

Die Kupplungsanordnung 100 aus Fig. 10 unterscheidet sich von der in Fig. 9 gezeigten ferner dadurch, dass nunmehr die zweite Gehäuseschale 130 im Bereich der Schweißverbindung 140 die erste Gehäuseschale 120 überlappt, also die Kupplungsanordnung 100 bzw. ihr Gehäuse 110 nach außen beschränkt. Entsprechend ist auch die Position des Wuchtgewichts 890 nicht mehr radial außenliegend angebracht, sondern an einer der Anschweißschraube 160 abgewandten Seite des Gehäuses 110 angeordnet.

Darüber hinaus unterscheidet sich die Kupplungsanordnung 100 aus Fig. 10 von der aus Fig. 9 dadurch, dass anstelle des Dichtelements 360 eine Tellerfeder 1020 zwischen der zweiten Gehäuseschale 130 und dem Anpresselement 620 angeordnet ist. Die Tellerfeder 1020 ist hierbei, wie auch das Dichtelement 360 aus Fig. 9, auf Druck vorgespannt, sodass es sich bei der Kupplungsanordnung 100 gemäß einem Ausführungsbeispiel erneut um eine Standard-Offen-Kupplungsanordnung handelt. Die Tellerfeder 1020 stellt im Unterschied zu dem Dichtelement 360 nicht notwendigerweise ein dichtendes Element dar, sodass die in Fig. 9 eingezeichneten ersten und zweiten Volumina 720, 740 hier ein gemeinsames Volumen 1030 bilden. Selbstverständlich können bei anderen Ausführungsbeispielen auch andere Federelemente als die Tellerfeder 1020 zum Einsatz kommen. Selbstverständlich können bei anderen Ausführungsbeispielen auch andere Federelemente als die Tellerfeder 1020 zum Einsatz kommen. Je nach Ausgestaltung kann das gemeinsame Volumen 1030 daher wiederum in entsprechende erste und zweite Volumina 720, 740 zerfallen.

Ebenso kann die Tellerfeder 1020 beispielsweise gegen eine Membranfeder, eine Anordnung von Schraubenfedern oder ein anderes Federelement ausgetauscht werden. Darüber hinaus kann bei anderen Ausführungsbeispielen selbstverständlich die Tellerfeder 1020 bzw. das gegen die Tellerfeder 1020 ausgetauschte Federelement auch auf Zug vorgespannt sein. Dementsprechend kann es sich auch bei dieser Kupplungsanordnung 100 gemäß einem Ausführungsbeispiel um eine Standard-Geschlossen-Kupplungsanordnung handeln.

Zur Schaffung der im Wesentlichen drehfesten Verbindung zu dem Förderbauteil 340 dient bei diesem Ausführungsbeispiel ein Verbindungsbauteil 1015, das über die Nietverbindung 350 mit dem Deckel, also der zweiten Gehäuseschale 130 mechanisch drehfest verbunden ist. Es können jedoch bei anderen Ausführungsbeispielen auch andere Verbindungstechniken an dieser Stelle eingesetzt werden.

Das Verbindungsbauteil 1015 weist eine Mehrzahl von Blattfedern 1010 auf, die in der bereits im Zusammenhang mit Fig. 9 beschriebenen Art und Weise die im Wesentlichen drehfeste Verbindung zu dem Förderbauteil 340 schaffen. Zu diesem Zweck ist das Verbindungsbauteil 1015 bzw. seine Blattfedern 1010 über die weiteren Nietverbindungen 1000 mit dem Förderbauteil 340 mechanisch drehfest verbunden. Auch hier können aber andere Verbindungstechniken eingesetzt werden.

Aber auch das Anpresselement 620 ist bei der in Fig. 10 gezeigten Kupplungsanordnung 100 unterschiedlich ausgestaltet. So weist das Anpresselement 620 zwar wiederum einen Kolben 610 auf, umfasst jedoch zusätzlich eine Anlege-Tellerfeder 1040. Die Anlege-Tellerfeder 1040 ist hierbei als im Wesentlichen ringförmige Struktur ausgestaltet. Sie steht an einem dem äußeren radialen Ende der Anlege-Tellerfeder 1040 näheren Bereich mit der Innenlamelle 270 in Kontakt, während sie sich an einer Schulter 1050 des Anpresselements 620 an einem radial innen gelegenen Bereich der Anlege-Tellerfeder 1040 abstützt. Hierdurch ergibt sich ein in Fig. 10 nicht eingezeichneter Abstand bzw. Spalt S2 zwischen der Anlege-Tellerfeder 1040 im Bereich der Schulter 1050, also an einem radial innen liegenden Bereich, im Vergleich zu der Innenlamelle 270.

Die Schulter 1050 des Anpresselements 620 erstreckt sich hierbei nur über einen kleinen radialen Bereich, an dem sich radial nach außen eine Kragenstruktur 1060 mit einem Anpresspunkt 1070 anschließt. Der Anpresspunkt 1070 stellt hierbei häufig den der Anlege-Tellerfeder 1040 nächsten Punkt der Kragenstruktur 1060 dar. In der Ruheposition des Anpresselements 620 weist der Anpresspunkt 1070 hierbei von der Anlege-Tellerfeder 1040 einen Abstand oder Spalt S2 entlang der axialen Richtung, also entlang der Drehachse 300, auf, der den Spalt S1 nicht übersteigt. Darüber hinaus weit der Anpresspunkt 1070 einen Abstand von der Drehachse 300 senkrecht zu dieser auf, der größer als die Ausdehnung der Schulter 1050 entlang der radialen Richtung ist, jedoch einen Außendurchmesser der Anlege-Tellerfeder 1040 nicht übersteigt.

Anders ausgedrückt wird, da der Spalt S2 den Spalt S1 nicht übersteigt, gegebenenfalls sogar kleiner als dieser ist, liegt das Anpresselement 620 über dem Anpresspunkt 1070 im Wesentlichen auf Höhe des Reibradius an der Anlege-Tellerfeder 1040 an. Durch eine entsprechende Kragenradiusgröße kann so der Ort des Andrückens definiert bzw. festgelegt werden. Genauer gesagt handelt es sich bei dem Anpresspunkt 1070 aufgrund der im Wesentlichen rotationsförmigen Ausgestaltung des Anpresselements 620 und der Anlege-Tellerfeder 1040 eher um eine Anpresslinie.

Wird nun das Anpresselement 620 betätigt, sodass sich dieses in Richtung auf die Reibflächen 230, 240 zubewegt, erzeugt oder verstärkt die Anlege-Tellerfeder 1040 die auf die Innenlamelle 270 ausgeübte Kraft. Hierbei kommt es aufgrund der Struktur der Anlege-Tellerfeder 1040 zu einer Deformation derselben, sodass die Anlege-Tellerfeder leicht deformiert wird und an der Innenlamelle 270 "abrollt". Hierdurch kann es gegebenenfalls zu einer leichten Verschiebung des Abstands der maximalen Krafteinwirkung auf die Innenlamelle 270 kommen. Aufgrund der Ausgestaltung des Reibpakets 180 entspricht hierbei gerade der Punkt der maximalen Anpresskraft in etwa einem Radius, an dem die größten Anpresskräfte im Bereich der Reibbeläge 260 auftreten. Dieser Radius wird daher auch als Reibradius bezeichnet.

Wird nun das Anpresselement 620 weiter bewegt, sodass der Anpresspunkt 1070 mit der Anlege-Tellerfeder 1040 in Kontakt kommt, wenn also der Spalt S2 überbrückt ist, definiert nunmehr der radiale Abstand des Anpresspunkts von der Drehachse 300 die Lage des Reibradius. Hierdurch kann dieser gezielter definiert werden, was gegebenenfalls zu einem geringeren Verschleiß, einer gleichmäßigen Abnutzung und/oder einer besseren Wärmeabfuhr durch das die Reibflächen 230, 240 durchströmende flüssige Medium führt. Hierbei steigt die Zahl der zusätzlichen Bauteile gegenüber der in Fig. 1 und 4 gezeigten Ausgestaltung des Anpresselements 620 nur geringfügig an, da nunmehr zusätzlich die Anlege-Tellerfeder 1040 implementiert wird.

Selbstverständlich können bei anderen Ausführungsbeispielen auch abweichende Geometrien der Kragenstruktur mit dem Anpresspunkt 1070 implementiert werden. So kann beispielsweise anstelle eines einzelnen Anpresspunkts 1070 auch eine Anpressfläche mit mehr als einem Anpresspunkt 1070 vorgesehen werden. Ebenso kann anstelle der Anlege-Tellerfeder 1040 auch eine Membranfeder oder ein anderes Federelement eingesetzt werden.

Fig. 10 zeigt darüber hinaus schematisch die bereits zuvor erwähnte Getriebeeingangswelle 1080 mit ihrer in die Innenverzahnung 210 eingreifenden Außenverzahnung 1090, die die drehfeste Verbindung zu der unteren Nabe 200, also dem Abtriebsbauteil 190, ermöglicht. Wie bereits zuvor erwähnt wurde, weist die Außenverzahnung 1090 einige fehlende Zähne auf, um einen Durchfluss des flüssigen Mediums zu dem Zuflussbereich 820 zu ermöglichen.

Darüber hinaus zeigt Fig. 10 eine Nut mit einem Dichtelement 1100, die sich in Umfangsrichtung um die Getriebeeingangswelle 1080 zwischen dem Zuflussbereich 820 und der Zulaufbohrung 650 des Kolbendruckraums 590 erstreckt. Diese steht in Kontakt mit der vorderen Nabe 580 und dichtet den Zuflussbereich 820 von der Zulaufbohrung 650 ab. Um die Zulaufbohrung 650 und damit den Kolbendruckraum 590 mit dem flüssigen Medium versorgen zu können, weist die Getriebeeingangswelle 1080 ferner einen Zulaufkanal 1110 auf, der symmetrisch und entlang der Drehachse 300 ausgerichtet ist. Über eine Anschlussbohrung 1120 kann der Zulaufkanal 1110 mit dem flüssigen Medium zum Befüllen des Kolbendruckraums 590 versorgt werden.

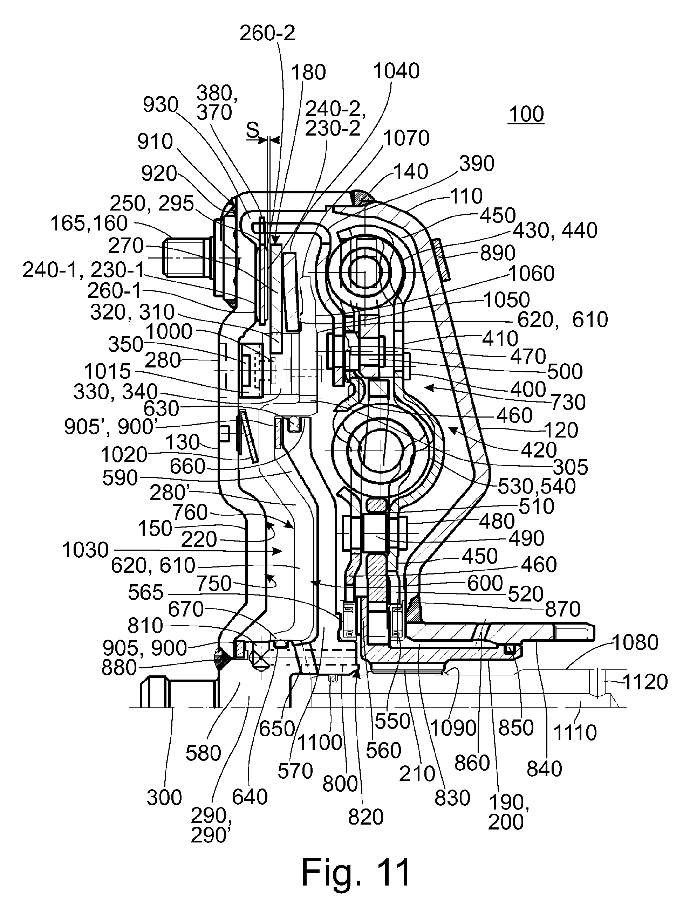

Fig. 11 zeigt ein weiteres Ausführungsbeispiel einer Kupplungsanordnung 100 gemäß einem Ausführungsbeispiel, bei der neben der bereits zuvor gezeigten Distanzscheibe 900 eine weitere Distanzscheibe 900' integriert ist. Die Distanzscheibe 900 bildet hierbei die Spieleinstellungsstruktur 905, während die weitere Distanzscheibe 900' eine weitere Spieleinstellungsstruktur 905, bildet. Die weitere Distanzscheibe 900' kann hierbei ebenso als einteilige oder als mehrteilige Distanzscheibe implementiert werden, wie dies bereits zuvor beschrieben wurde. Die Distanzscheibe 900' ist hierbei zwischen der Trennwand 570 der vorderen Nabe 580 und dem Anpresselement 620 im Bereich des Kolbendruckraums 590 angeordnet. Entsprechend stellt die vordere Nabe 580 für die weitere Spieleinstellungsstruktur 905' das zweite Bauteil 290' dar, während das Anpresselement 620 das erste Bauteil 280' für diese bildet.

Hierdurch kann das Lamellenspiel S auch durch eine Variation der Position des Anpresselements 620 variiert werden. Zusammen mit der Distanzscheibe 900 kann so das Lamellenspiel S durch Variation des Abstands der zweiten Gehäuseschale 130 oder aber auch durch Variation des Abstands des Anpresselements 620 variiert werden.

Selbstverständlich ist es bei Weitem nicht notwendig, beide Distanzscheiben 900, 900' gleichzeitig zu implementieren. Eine entsprechende Einstellung des Lamellenspiels S kann bereits bei der Implementierung einer einzigen der beiden Distanzscheiben 900 realisiert werden, ohne dass hierdurch der für die Kupplungsanordnung 100 notwendige Bauraum ansteigt. Sowohl der Einsatz einer einzigen Distanzscheibe 900 oder 900', wie auch der Einsatz beider Distanzscheiben 900, 900' ermöglicht es vielmehr, das Lamellenspiel S einzustellen und dabei gleichzeitig den notwendigen axialen Bauraum der Kupplungsanordnung 100 gegenüber konventionellen Lösungen zu verringern. Ebenso kann auch anstelle der Distanzscheiben 900, 900' jede der zuvor beschriebenen Spieleinstellungsstrukturen im Rahmen der Spieleinstellungsstrukturen 905, 905' implementiert werden.

Fig. 11 zeigt so einen Mittenschnitt durch eine Kupplungsanordnung 100 gemäß einem Ausführungsbeispiel, bei der zwei Möglichkeiten bestehen, das Spiel S durch Unterlegen wenigstens einer der beiden Scheiben 900, 905 bei der Montage einzustellen. Anders ausgedrückt kann ergänzend oder alternativ zu der Distanzscheibe 900 auch die Distanzscheibe 905 wahlweise zwischen Anpresselement 620 und Kolbenrückwand, also der Zwischenwand 570 der vorderen Nabe 580 untergelegt werden.

Durch den Einsatz einer oder mehrerer Distanzscheiben 900, 905 zwischen dem Gehäuse 110 bzw. der zweiten Gehäuseschale 130 bzw. dem Anpresselement 620 und der Deckelnabe bzw. vorderen Nabe 580 kann so das Lüftspiel an dem Lamellenpaket 180 bzw. an den Reibbelägen 230, 240 Bauraum sparend eingestellt werden.

Auch bei dem in Fig. 11 gezeigten Ausführungsbeispiel kann anstelle der Distanzscheibe 900, gegebenenfalls auch anstelle der Distanzscheibe 905 diese durch zwei entsprechende keilförmige Flächen ersetzt werden, wie dies im Zusammenhang mit Fig. 6 erläutert wurde. Dann kann die Gehäuseschale 130, also der Deckel, relativ zu der Deckelnabe 580 während der Montage verdreht oder verschoben werden. Hierdurch kann der Abstand bzw. die Dicke der entsprechenden Spieleinstellungsstruktur 905, 905' verändert und somit das Lüftspiel an den Reibflächen 230, 240 gegebenenfalls genauer eingestellt werden. Anschließend kann der Deckel 130 mit der Deckelnabe 580 verschweißt und somit ihre relative Lage fixiert werden.

Ansonsten unterscheidet sich das in Fig. 11 gezeigte Ausführungsbeispiel einer Kupplungsanordnung 100 nicht von dem in Fig. 10 gezeigten, weshalb an dieser Stelle auf die Beschreibung der Fig. 10 verwiesen wird.

Fig. 12 zeigt schließlich eine weitere Variation der in Fig. 10 gezeigten Kupplungsanordnung 100, die sich im Wesentlichen von dieser Kupplungsanordnung 100 dadurch unterscheidet, dass die Ausnehmung 930 nicht implementiert ist. Als Folge ist der Träger 390 in axialer Richtung kürzer ausgestaltet, sodass der Abschnitt 370 mit der weiteren Mitnehmerfläche 380 der Außenlamelle 250 gekröpft ausgeführt ist, also gegenüber der Drehachse 300 um einen vorbestimmten Winkel von der zweiten Gehäuseschale 130 weg geknickt ist. Die Außenlamelle 250 ist daher hier nicht als scheibenförmiges Bauteil implementiert.

Im Hinblick auf die Ausgestaltung des ebenen Abschnitts 910 stellt die Kupplungsanordnung 100 aus Fig. 12 somit ein herkömmliches Design dar, bei der eine größere Dimensionierung der Federelemente 430, 530 des Schwingungsdämpfers 420 zwar möglich ist, hierfür jedoch die Außenlamelle 250 nicht mehr als scheibenförmiges Bauteil implementiert werden kann. Es musste vielmehr die Lamellenverzahnung gekröpft ausgeführt werden, da aufgrund der fehlenden Ausnehmung 910 der axiale Bauraum bereits durch das Schaffen des ebenen Abschnitts 910 für die Anschweißschraube 160 bzw. die Befestigungsstruktur 615 aufgebraucht wurde. Wie zuvor erwähnt wurde, ist auch bei diesem Anpresselement 620 eine Anlege-Tellerfeder 1070 implementiert.

Abgesehen von dieser Variation unterscheidet sich die Kupplungsanordnung 100 aus Fig. 12 jedoch ebenfalls nicht von der in Fig. 10 gezeigten Kupplungsanordnung 100.

Kupplungsanordnungen 100 gemäß Ausführungsbeispielen können für unterschiedliche Kupplungsanwendungen vorgesehen werden, beispielsweise für Fahrzeuge mit einem im vorderen Bereich des Fahrzeugs eingebauten und quer zur Fahrtrichtung ausgebildeten Automatikgetriebe. Kupplungsanordnungen 100 gemäß einem Ausführungsbeispiel können so als Anfahrkupplungen, jedoch auch als Trennkupplungen im Zusammenhang mit synchronisierten Getrieben oder im Zusammenhang mit längs eingebauten Motoren verwendet werden. Als flüssiges Medium kann beispielsweise ein Öl dienen.

Die oben beschriebenen Ausführungsbeispiele stellen hierbei lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, wie anhand der Beschreibung und der Erläuterung der Ausführungsbeispiele hierin präsentiert wurden, beschränkt sei.

### Bezugszeichen

- 100: Kupplungsanordnung
- 110: Gehäuse
- 120: erste Gehäuseschale
- 130: zweite Gehäuseschale
- 140: Schweißverbindung
- 150: Antriebsbauteil
- 160: Anschweißschraube
- 165: Befestigungsstruktur
- 170: Innenfläche
- 180: Reibpaket
- 190: Abtriebsbauteil
- 200: untere Nabe
- 210: Innenverzahnung
- 220: Innenfläche
- 230: erste Reibfläche
- 240: zweite Reibfläche
- 250: Außenlamelle
- 260: Reibbelag
- 270: Innenlamelle
- 280: erstes Bauteil
- 290: zweites Bauteil
- 295: scheibenförmiges Bauteil
- 300: Drehachse
- 305: Durchlassöffnung
- 310: Abschnitt
- 320: Mitnehmerfläche
- 330: Förderfläche
- 340: Förderbauteil
- 350: Nietverbindung
- 360: Dichtelement
- 370: Abschnitt
- 380: weitere Mitnehmerfläche
- 390: Träger
- 395: Verzahnung
- 400: Nietverbindung
- 410: erste Nabenscheibe
- 420: Schwingungsdämpfer
- 430: erstes Federelement
- 440: Schraubenfeder
- 450: erstes Abdeckblech
- 460: zweites Abdeckblech
- 470: Langloch
- 480: weitere Nietverbindung
- 490: Distanzstück
- 500: Distanzstück
- 510: Langloch
- 520: zweite Nabenscheibe
- 530: zweites Federelemente
- 540: Schraubenfeder
- 550: Lager
- 560: Abschnitt
- 565: weiteres Lager
- 570: Trennwand
- 580: vordere Nabe
- 590: Kolbendruckraum
- 600: Kolbenfläche
- 610: Kolben
- 620: Anpresselement
- 630: Dichtelement
- 640: Dichtelement
- 650: Zulaufbohrung
- 660: Dichtfläche
- 670: Dichtfläche
- 680: erste Anpressfläche
- 690: Nase
- 700: zweite Anpressfläche
- 710: Abschnitt
- 720: erstes Volumen
- 730: Teilvolumen
- 740: zweites Volumen
- 750: Oberflächenabschnitt
- 760: Kolbenrückseite
- 770: erste Dichtfläche
- 780: zweite Dichtfläche
- 790: Übergangsabschnitt
- 800: Zuleitungskanal
- 810: Zuführung
- 820: Zuflussbereich
- 830: Abflussbereich
- 840: Pumpennabe
- 850: Dichtelement
- 860: Öffnung
- 870: Verschweißung
- 880: Verschweißung
- 890: Wuchtgewicht
- 900: Distanzscheibe
- 905: Spieleinstellungsstruktur
- 910: ebener Abschnitt
- 915: Außenfläche
- 920: Verschweißung
- 930: Ausnehmung
- 990: Nietverbindung
- 1000: weitere Nietverbindung
- 1010: Blattfederelemente
- 1015: Verbindungsbauteil
- 1020: Tellerfeder
- 1030: Volumen
- 1040: Anlege-Tellerfeder
- 1050: Schulter
- 1060: Kragenstruktur
- 1070: Anpresspunkt
- 1080: Getriebeeingangswelle
- 1090: Außenverzahnung
- 1100: Nut mit Dichtelement
- 1110: Zulaufkanal
- 1120: Anschlussbohrung
- 1130: erste Hauptoberfläche
- 1140: zweite Hauptoberfläche
- 1150: Distanzscheibenbauteil
- 1160: Anlagefläche
- 1170: keilförmiges Profil
- 1180: Vorsprung
- 1190: Gerade
- S100: Start
- S110: Bereitstellen von Komponenten
- S120: Bestimmen einer Soll-Dicke
- S130: Bereitstellen einer Spieleinstellungsstruktur
- S140: Montieren
- S150: Ende
- S170: Bestimmen des Spiels
- S180: Verändern der Spieleinstellungsstruktur
- S200: Start
- S210: Bereitstellen des Gehäuses
- S220: Bereitstellen des scheibenförmigen Bauteils
- S230: Bereitstellen des Trägers
- S240: Bereitstellen des ebenen Abschnitts und Erzeugen der ersten Reibfläche
- S250: Anbringen einer Befestigungsstruktur
- S260: Montieren
- S270: Ende

## Patentansprüche

1. Kupplungsanordnung (100), beispielsweise für einen Antriebsstrang eines Fahrzeugs, mit folgenden Merkmalen:
einer ersten Reibfläche (230);
einer entlang einer Drehachse (300) bezüglich der ersten Reibfläche (230) linear relativ bewegliche angeordneten zweiten Reibfläche (240), die mit einem Abtriebsbauteil (190) der Kupplungsanordnung (100) im Wesentlichen drehfest gekoppelt ist, wobei die erste (230) und die zweite Reibfläche (240) ausgebildet und angeordnet sind, um miteinander in einen Reibeingriff bringbar zu sein, um ein Drehmoment von der ersten Reibfläche (230) auf die zweite Reibfläche (240) übertragbar zu machen;
einem Anpresselement (620), das ausgebildet ist, um auf eine Betätigung hin den Reibeingriff zu schaffen oder zu trennen; und
einer in einem Inneren eines Gehäuses (110) der Kupplungsanordnung (100) angeordneten Spieleinstellungsstruktur (905), die derart ausgebildet und angeordnet ist, um ein Spiel entlang der Drehachse (300) zwischen den Reibflächen (230, 240) in einem vorbestimmten Zustand festzulegen,
wobei die Spieleinstellungsstruktur (905) eine erste Anlagefläche (1160) und eine gegenüber der ersten Anlagefläche (1160) bewegliche zweite Anlagefläche (1160) aufweist, die jeweils vollständig oder abschnittsweise entlang einer geschlossenen Linie oder vollständig oder abschnittsweise entlang einer senkrecht zu der Drehachse (300) verlaufenden Geraden ein keilförmiges Profil aufweisen, sodass durch ein Verdrehen oder ein Verschieben der ersten Anlagefläche (1160) relativ zu der zweiten Anlagefläche (1160) eine Dicke der Spieleinstellungsstruktur (905) entlang der Drehachse (300) veränderbar ist, wobei die erste Anlagefläche (1160) der Spieleinstellungsstruktur (905) an einem ersten Bauteil (280) der Kupplungsanordnung (100) gebildet ist,
**dadurch gekennzeichnet, dass** das
erste Bauteil (280) die erste Reibfläche (230) umfasst, und wobei das erste Bauteil (280) eine Gehäuseschale (130) des Gehäuses (110) der Kupplungsanordnung (100) ist,
und/oder
wobei die Spieleinstellungsstruktur (905) eine Distanzscheibe (900) umfasst, die unmittelbar zwischen einem ersten Bauteil (280) der Kupplungsanordnung (100) und einem zweiten Bauteil (290) der Kupplungsanordnung (100) angeordnet ist, wobei das erste Bauteil (280) die erste Reibfläche (230) umfasst, und wobei das erste Bauteil (280) eine Gehäuseschale (130) des Gehäuses (110) der Kupplungsanordnung (100) ist.

2. Kupplungsanordnung (100) nach Anspruch 1, bei der die zweite Anlagefläche (1160) der Spieleinstellungsstruktur (905) an einem zweiten Bauteil (290) Kupplungsanordnung (100) gebildet ist.

3. Kupplungsanordnung (100) nach einem der vorhergehenden Ansprüche, bei der die Distanzscheibe (900) eine erste Hauptoberfläche (1130) und eine der ersten Hauptoberfläche (1130) gegenüberliegende zweite Hauptoberfläche (1140) aufweist, die parallel zueinander ausgerichtet sind.

4. Kupplungsanordnung (100) nach einem der vorhergehenden Ansprüche, bei der die Spieleinstellungsstruktur (905) eine erste Anlagefläche (1160) und eine gegenüber der ersten Anlagefläche (1160) bewegliche zweite Anlagefläche (1160) aufweist, die jeweils vollständig oder abschnittsweise entlang einer geschlossenen Linie oder vollständig oder abschnittsweise entlang einer senkrecht zu der Drehachse (300) verlaufenden Geraden ein keilförmiges Profil aufweisen, sodass durch ein Verdrehen oder ein Verschieben der ersten Anlagefläche (1160) relativ zu der zweiten Anlagefläche (1160) eine Dicke der Spieleinstellungsstruktur (1160) entlang der Drehachse (300) veränderbar ist, und bei der die Distanzscheibe (900) die erste Anlagefläche (1160) und/oder die zweite Anlagefläche (1160) umfasst.

5. Kupplungsanordnung (100) nach Anspruch 4, bei der die Distanzscheibe (900) einstückig oder mehrstückig ausgebildet ist, wobei die Distanzscheibe (900) im Falle einer mehrstückigen Ausbildung ein erstes Distanzscheibenbauteil (1150) und ein zweites Distanzscheibenbauteil (1150) aufweist, wobei das erste Distanzscheibenbauteil (1150) die erste Anlagefläche (1160) und das zweite Distanzscheibenbauteil (1150) die zweite Anlagefläche (1160) umfasst.

6. Kupplungsanordnung (100) nach einem der vorhergehenden Ansprüche, bei der die Distanzscheibe (900) oder wenigstens ein Distanzscheibenbauteil (1150) des ersten und des zweiten Distanzscheibenbauteils (1150) mit dem ersten Bauteil (280) und/oder dem zweiten Bauteil (290) formschlüssig verbunden ist, um beispielsweise gegen ein Verdrehen oder ein Verschieben gesichert zu sein.

7. Verfahren zum Bereitstellen einer Kupplungsanordnung (100), beispielsweise für einen Antriebsstrang eines Fahrzeugs, umfassend:
Bereitstellen (S110) von wenigstens einem Teil von Komponenten der Kupplungsanordnung (100) nach einem der vorhergehenden Ansprüche;
Bestimmen (S120, S170) einer Soll-Dicke der Spieleinstellungsstruktur (905) oder des Spiels zwischen den Reibflächen (230, 240);
Verändern (S180) der bereitgestellten Spieleinstellungsstruktur (905) derart, dass das Spiel zwischen den Reibflächen (230, 240) durch die Veränderung der Spieleinstellungsstruktur (905) eine erste vorbestimmte Bedingung erfüllt, wenn das bestimmte Spiel die erste vorbestimmte Bedingung nicht erfüllt hat,
oder Bereitstellen (S130) der Spieleinstellungsstruktur (905) derart, dass eine Ist-Dicke der bereitgestellten Spieleinstellungsstruktur (905) und die bestimmte Soll-Dicke der Spieleinstellungsstruktur (905) eine zweite vorbestimmte Bedingung erfüllen; und
Montieren (S140) der bereitgestellten Komponenten,
wobei das Verändern (S180) der Spieleinstellungsstruktur (905)
- ein Verändern der zuvor bereitgestellten Spieleinstellungsstruktur (905) durch ein Verdrehen oder ein Verschieben eines ersten Distanzscheibenbauteils (1150) relativ zu einem zweiten Distanzscheibenbauteils (1150), wobei die Spieleinstellungsstruktur (1150) die Distanzscheibe (900) umfasst, die unmittelbar zwischen einem ersten Bauteil (280) und einem zweiten Bauteil (290) angeordnet ist und das erste (1150) und das zweite Distanzscheibenbauteil (1150) umfasst, wobei das erste Bauteil (280) die erste Reibfläche (230) umfasst, und wobei das erste Bauteil (280) eine Gehäuseschale (130) des Gehäuses (110) der Kupplungsanordnung (100) ist, oder
- ein Verändern der zuvor bereitgestellten Spieleinstellungsstruktur (905) durch ein Verdrehen oder ein Verschieben einer Distanzscheibe (900) relativ zu einem ersten (280) und/oder zweiten Bauteil (290), wobei die Spieleinstellungsstruktur (905) die Distanzscheibe (900) umfasst, die unmittelbar zwischen einem ersten Bauteil (280) und einem zweiten Bauteil (290) angeordnet ist, wobei das erste Bauteil (280) die erste Reibfläche (230) umfasst, und wobei das erste Bauteil (280) eine Gehäuseschale (130) des Gehäuses (110) der Kupplungsanordnung (100) ist, oder
- ein Verändern der zuvor bereitgestellten Spieleinstellungsstruktur (905) durch ein Verdrehen oder ein Verschieben eines ersten Bauteils (280) relativ zu einem zweiten Bauteil (290), die die Spieleinstellungsstruktur (905) wenigstens teilweise bilden, wobei das erste Bauteil (280) die erste Reibfläche (230) umfasst, und wobei das erste Bauteil (280) eine Gehäuseschale (130) des Gehäuses (110) der Kupplungsanordnung (100) ist, oder
- ein Tauschen einer zuvor bereitgestellten Distanzscheibe (900) mit einer Ist-Dicke gegen eine andere Distanzscheibe (900) mit einer anderen Ist-Dicke umfasst.

8. Verfahren nach Anspruch 7, bei dem das Montieren (S140) der bereitgestellten Komponenten dem Bestimmen des Spiels (S170) vorangeht, und bei dem das Bestimmen des Spiels (S170) an einer wenigstens teilweise montierten Kupplungsanordnung (100) erfolgt, die die erste Reibfläche (230), die zweite Reibfläche (240) und das Anpresselement (620) umfasst, oder
bei dem das Bestimmen (S120) der Soll-Dicke der Spieleinstellungsstruktur (905) dem Bereitstellen der Spieleinstellungsstruktur (905) vorangeht, und bei dem das Montieren der bereitgestellten Komponenten dem Bereitstellen der Spieleinstellungsstruktur (905) nachfolgt.

## Claims

1. Clutch arrangement (100), for example for a drive train of a vehicle, with the following features:
a first friction surface (230);
a second friction surface (240) which is arranged relatively movably linearly with respect to the first friction surface (230) along an axis of rotation (300) and is coupled in a substantially rotationally fixed manner to an output component (190) of the clutch arrangement (100), wherein the first friction surface (230) and the second friction surface (240) are designed and arranged in order to be able to be brought into a frictional engagement with each other in order to make it possible to transmit a torque from the first friction surface (230) to the second friction surface (240);
a press-on element (620) which is designed in order to create or to separate the frictional engagement upon actuation; and
a slack adjustment structure (905) which is arranged in an interior of a housing (110) of the clutch arrangement (100), and is designed and
arranged in such a manner that, in a predetermined state, slack can be defined between the friction surfaces (230, 240) along the axis of rotation (300),
wherein the slack adjustment structure (905) has a first contact surface (1160) and a second contact surface (1160), which is movable in relation to the first contact surface (1160), which contact surfaces each have a wedge-shaped profile completely or in sections along a closed line or
completely or in sections along a straight line running perpendicularly to the axis of rotation (300), and therefore, by rotation or displacement of the first contact surface (1160) relative to the second contact surface (1160), a thickness of the slack adjustment structure (905) along the axis of rotation (300) can be changed, wherein the first contact surface (1160) of the slack adjustment structure (905) is formed on a first component (280) of the clutch arrangement (100),
**characterized in that** the first component (280) comprises the first frictional surface (230), and
wherein the first component (280) is a housing shell (130) of the housing (110) of the clutch arrangement (100),
and/or
wherein the slack adjustment structure (905) comprises a distance plate (900) which is arranged directly between a first component (280) of the clutch arrangement (100) and a second component (290) of the clutch arrangement (100), wherein the first component (280) comprises the first friction surface (230), and wherein the first component (280) is a housing shell (130) of the housing (110) of the clutch arrangement (100).

2. Clutch arrangement (100) according to Claim 1, in which the second contact surface (1160) of the slack adjustment structure (905) is formed on a second component (290) of the clutch arrangement (100).

3. Clutch arrangement (100) according to either of the preceding claims, in which the distance plate (900) has a first main surface (1130) and a second main surface (1140) opposite the first main surface (1130), which main surfaces are oriented parallel to each other.

4. Clutch arrangement (100) according to one of the preceding claims, in which the slack adjustment structure (905) has a first contact surface (1160) and a second contact surface (1160), which is movable in relation to the first contact surface (1160), which contact surfaces each have a wedgeshaped profile completely or in sections along a closed line or completely or in sections along a straight line running perpendicularly to the axis of rotation (300), and therefore, by rotation or displacement of the first contact surface (1160) relative to the second contact surface (1160), a thickness of the slack adjustment structure (1160) along the axis of rotation (300) can be changed, and in which the distance plate (900) comprises the first contact surface (1160) and/or the second contact surface (1160).

5. Clutch arrangement (100) according to Claim 4, in which the distance plate (900) is of single-piece or multi-piece design, wherein, in the event of a multi-piece design, the distance plate (900), has a first distance plate component (1150) and a second distance plate component (1150), wherein the first distance plate component (1150) comprises the first contact surface (1160) and the second distance plate component (1150) comprises the second contact surface (1160).

6. Clutch arrangement (100) according to one of the preceding claims, in which the distance plate (900) or at least one distance plate component (1150) of the first and the second distance plate component (1150) is connected in a form-fitting manner to the first component (280) and/or to the second component (290) in order to be secured, for example, against rotation or displacement.

7. Method for providing a clutch arrangement (100), for example for a drive train of a vehicle, comprising:
providing (S110) at least some components of the clutch arrangement (100) according to one of the preceding claims;
determining (S120, S170) a desired thickness of the slack adjustment structure (905) or the slack between the friction surfaces (230, 240);
changing (S180) the provided slack adjustment structure (905) in such a manner that, by changing the slack adjustment structure (905), the slack between the friction surfaces (230, 240) satisfies a first predetermined condition if the determined slack has not satisfied the first predetermined condition,
or providing (S130) the slack adjustment structure (905) in such a manner that an actual thickness of the provided slack adjustment structure (905) and
the determined desired thickness of the slack adjustment structure (905) satisfy a second predetermined condition; and
mounting (S140) the provided components,
wherein changing (S180) the slack adjustment structure (905) comprises:
- changing the already provided slack adjustment structure (905) by rotating or displacing a first distance plate component (1150) relative to a second distance plate component (1150), wherein the slack adjustment structure (1150) comprises the distance plate (900) which is arranged directly between a first component (280) and a second component (290) and comprises the first distance plate component (1150) and the second distance plate component (1150), wherein the first component (280) comprises the first friction surface (230), and wherein the first component (280) is a housing shell (130) of the housing (110) of the clutch arrangement (100), or
- changing the previously provided slack adjustment structure (905) by rotating or displacing a distance plate (900) relative to a first component (280) and/or second component (290), wherein the slack adjustment structure (905) comprises the distance plate (900) which is arranged directly between a first component (280) and a second component (290), wherein the first component (280) comprises the first friction surface (230), and wherein the first component (280) is a housing shell (130) of the housing (110) of the clutch arrangement (100), or
- changing the already provided slack adjustment structure (905) by rotating or displacing a first component (280) relative to a second component (290), which components at least partially form the slack adjustment structure (905), wherein the first component (280) comprises the first friction surface (230), and wherein the first component (280) is a housing shell (130) of the housing (110) of the clutch arrangement (100), or
- exchanging a previously provided distance plate (900) with an actual thickness for a different distance plate (900) with a different actual thickness.

8. Method according to Claim 7, in which the mounting (S140) of the provided components precedes the determination of the slack (S170), and in which the determination of the slack (S170) takes place on an at least partially mounted clutch arrangement (100) which comprises the first friction surface (230), the second friction surface (240) and the press-on element (620), or in which the determining (S120) of the desired thickness of the slack adjustment structure (905) precedes the providing of the slack adjustment structure (905), and in which the mounting of the provided components follows the providing of the slack adjustment structure (905).

## Revendications

1. Agencement d'embrayage (100), par exemple pour une chaîne cinématique d'un véhicule, comprenant les caractéristiques suivantes :
une première surface de friction (230) ;
une deuxième surface de friction (240) disposée de manière déplaçable relativement linéairement le long d'un axe de rotation (300) par rapport à la première surface de friction (230), qui est accouplée de manière essentiellement solidaire en rotation à un composant de prise de force (190) de l'agencement d'embrayage (100), la première (230) et la deuxième (240) surface de friction étant réalisées et disposées de manière à pouvoir être amenées en engagement de friction l'une avec l'autre afin de permettre la transmission d'un couple de la première surface de friction (230) à la deuxième surface de friction (240) ;
un élément de pressage (620) qui est réalisé de manière à produire l'engagement de friction ou à le rompre en réponse à un actionnement ; et
une structure d'ajustement de jeu (905) disposée à l'intérieur d'un boîtier (110) de l'agencement d'embrayage (100), qui est réalisée et disposée de manière à fixer un jeu le long de l'axe de rotation (300) entre les surfaces de friction (230, 240) dans un état prédéterminé,
la structure d'ajustement de jeu (905) présentant une première surface d'appui (1160) et une deuxième surface d'appui (1160) déplaçable par rapport à la première surface d'appui (1160),
lesquelles présentent chacune complètement ou en partie le long d'une ligne fermée ou complètement ou en partie le long d'une droite s'étendant perpendiculairement à l'axe de rotation (300) un profil en forme de clavette, de sorte que, par une rotation ou un déplacement de la première surface d'appui (1160) par rapport à la deuxième surface d'appui (1160), une épaisseur de la structure d'ajustement de jeu (905) le long de l'axe de rotation (300) puisse être modifiée, la première surface d'appui (1160) de la structure d'ajustement de jeu (905) étant formée au niveau d'un premier composant (280) de l'agencement d'embrayage (100),
**caractérisé en ce que**
le premier composant (280) comprend la première surface de friction (230), le premier composant (280) étant une coque de boîtier (130) du boîtier (110) de l'agencement d'embrayage (100),
et/ou
la structure d'ajustement de jeu (905) comprenant un disque d'espacement (900) qui est disposé directement entre un premier composant (280) de l'agencement d'embrayage (100) et un deuxième composant (290) de l'agencement d'embrayage (100),
le premier composant (280) comprenant la première surface de friction (230), et le premier composant (280) étant une coque de boîtier (130) du boîtier (110) de l'agencement d'embrayage (100).

2. Agencement d'embrayage (100) selon la revendication 1, dans lequel la deuxième surface d'appui (1160) de la structure d'ajustement de jeu (905) est formée au niveau d'un deuxième composant (290) de l'agencement d'embrayage (100).

3. Agencement d'embrayage (100) selon l'une quelconque des revendications précédentes, dans lequel le disque d'espacement (900) présente une première surface principale (1130) et une deuxième surface principale (1140) opposée à la première surface principale (1130), lesquelles sont orientées parallèlement l'une à l'autre.

4. Agencement d'embrayage (100) selon l'une quelconque des revendications précédentes, dans lequel la structure d'ajustement de jeu (905) présente une première surface d'appui (1160) et une deuxième surface d'appui (1160) déplaçable par rapport à la première surface d'appui (1160), lesquelles présentent chacune complètement ou en partie le long d'une ligne fermée ou complètement ou en partie le long d'une droite s'étendant perpendiculairement à l'axe de rotation (300) un profil en forme de clavette, de sorte que, par une rotation ou un déplacement de la première surface d'appui (1160) par rapport à la deuxième surface d'appui (1160), une épaisseur de la structure d'ajustement de jeu (1160) le long de l'axe de rotation (300) puisse être modifiée, et dans lequel le disque d'espacement (900) comprend la première surface d'appui (1160) et/ou la deuxième surface d'appui (1160).

5. Agencement d'embrayage (100) selon la revendication 4, dans lequel le disque d'espacement (900) est réalisé d'une seule pièce ou en plusieurs parties, le disque d'espacement (900), dans le cas d'une réalisation en plusieurs parties, présentant un premier composant de disque d'espacement (1150) et un deuxième composant de disque d'espacement (1150), le premier composant de disque d'espacement (1150) comprenant la première surface d'appui (1160) et le deuxième composant de disque d'espacement (1150) comprenant la deuxième surface d'appui (1160).

6. Agencement d'embrayage (100) selon l'une quelconque des revendications précédentes, dans lequel le disque d'espacement (900) ou au moins un composant de disque d'espacement (1150) du premier et du deuxième composant de disque d'espacement (1150) est connecté par engagement par correspondance de formes au premier composant (280) et/ou au deuxième composant (290) afin d'être par exemple fixé contre une rotation ou un déplacement.

7. Procédé pour fournir un agencement d'embrayage (100), par exemple pour une chaîne cinématique d'un véhicule, comprenant :
la fourniture (S110) d'au moins une partie de composants de l'agencement d'embrayage (100) selon l'une quelconque des revendications précédentes ;
la détermination (S120, S170) d'une épaisseur de consigne de la structure d'ajustement de jeu (905) ou du jeu entre les surfaces de friction (230, 240) ;
la modification (S180) de la structure d'ajustement de jeu fournie (905) de telle sorte que le jeu entre les surfaces de friction (230, 240), par la modification de la structure d'ajustement de jeu (905), satisfasse à une première condition prédéterminée lorsque le jeu déterminé n'a pas satisfait à la première condition prédéterminée,
ou la fourniture (S130) de la structure d'ajustement de jeu (905) de telle sorte qu'une épaisseur réelle de la structure d'ajustement de jeu fournie (905) et l'épaisseur de consigne déterminée de la structure d'ajustement de jeu (905) satisfassent à une deuxième condition prédéterminée ; et
le montage (S140) des composants fournis,
la modification (S180) de la structure d'ajustement de jeu (905) comprenant
- une modification de la structure d'ajustement de jeu préalablement fournie (905) par une rotation ou un déplacement d'un premier composant de disque d'espacement (1150) par rapport à un deuxième composant de disque d'espacement (1150), la structure d'ajustement de jeu (1150) comprenant le disque d'espacement (900), qui est disposé directement entre un premier composant (280) et un deuxième composant (290) et comprend le premier (1150) et le deuxième (1150) composant de disque d'espacement, le premier composant (280) comprenant la première surface de friction (230), et le premier composant (280) étant une coque de boîtier (130) du boîtier (110) de l'agencement d'embrayage (100), ou
- une modification de la structure d'ajustement de jeu préalablement fournie (905) par une rotation ou un déplacement d'un disque d'espacement (900) par rapport à un premier (280) et/ou un deuxième (290) composant, la structure d'ajustement de jeu (905) comprenant le disque d'espacement (900), qui est disposé directement entre un premier composant (280) et un deuxième composant (290), le premier composant (280) comprenant la première surface de friction (230), et le premier composant (280) étant une coque de boîtier (130) du boîtier (110) de l'agencement d'embrayage (100), ou
- une modification de la structure d'ajustement de jeu préalablement fournie (905) par une rotation ou un déplacement d'un premier composant (280) par rapport à un deuxième composant (290), lesquels forment au moins en partie la structure d'ajustement de jeu (905), le premier composant (280) comprenant la première surface de friction (230), et le premier composant (280) étant une coque de boîtier (130) du boîtier (110) de l'agencement d'embrayage (100), ou
- le remplacement d'un disque d'espacement préalablement fourni (900) avec une épaisseur réelle par un autre disque d'espacement (900) avec une autre épaisseur réelle.

8. Procédé selon la revendication 7, dans lequel le montage (S140) des composants fournis précède la détermination du jeu (S170) et dans lequel la détermination du jeu (S170) s'effectue au niveau d'un agencement d'embrayage (100) au moins en partie monté, qui comprend la première surface de friction (230), la deuxième surface de friction (240) et l'élément de pressage (620), ou
dans lequel la détermination (S120) de l'épaisseur de consigne de la structure d'ajustement de jeu (905) précède la fourniture de la structure d'ajustement de jeu (905), et dans lequel le montage des composants fournis suit la fourniture de la structure d'ajustement de jeu (905).
